# EUROPEAN PATENT APPLICATION

(11) **EP 2 876 482 A1**
(43) Date of publication of application: **27.05.2015**
(21) Application number: 13820496.1
(22) Date of filing: 09.07.2013
(51) Int. Cl.: G02B 21/06, G01B 11/00, G01N 21/27, G01N 21/64, G02B 5/26, G02B 5/28

(54) **OPTICAL ELEMENT, OPTICAL DEVICE, MEASUREMENT DEVICE, AND SCREENING DEVICE**

(30) Priority: 19.07.2012 JP 2012160854; 28.12.2012 JP 2012287637; 28.12.2012 JP 2012287942; 15.03.2013 JP 2013053320
(71) Applicant: Nikon Corporation, Tokyo 100-8331 (JP)
(72) Inventor: MORI Susumu, Tokyo 100-8331 (JP); SAITO Tomoya, Tokyo 100-8331 (JP); UEDA Takehiko, Tokyo 100-8331 (JP); HAMASHIMA Muneki, Tokyo 100-8331 (JP); YOSHINO Kunihiko, Tokyo 100-8331 (JP); KATO Masanobu, Tokyo 100-8331 (JP)
(74) Representative: Hoffmann Eitle
(86) International application number: PCT/JP2013/068774
(87) International publication number: WO 2014/013912

(57) **Abstract**

An optical element includes a separation section that can separate incident light according to a wavelength. The separation section has an optical characteristic in which incident light in a first wavelength band is reflected, incident light in a second wavelength band is transmitted, and incident light in a third wavelength band is partially transmitted and partially reflected.

## Description

### TECHNICAL FIELD

The present invention relates to an optical element, an optical device, a measurement device, and a screening apparatus.

Priorities are claimed on Japanese Patent Application No. 2012-160854, filed on July 19,2012, Japanese Patent Application No. 2012-287637, filed on December 28, 2012, Japanese Patent Application No. 2012-287942, filed on December 28, 2412, and Japanese Patent Application No. 2013-53320, filed on March 15,2013. The contents of the above Applications are incorporated herein by reference.

### BACKGROUND

For example, a measurement device that performs bright field observation and fluorescence observation in time series for one sample is known.

In this measurement device, light for bright field observation is guided along the first optical path to illuminate the sample and an image of the sample is captured using an imaging device, and excitation light for fluorescence observation is guided along the second optical path to illuminate the sample and the fluorescence generated by the sample is imaged using the same imaging device. In addition, in this measurement device, switching between the bright field observation and the fluorescence observation is performed by operating a filter turret to perform switching between placement and non-placement of a fluorescent cube at a position where the first and second optical paths overlap each other.

In addition, in the measurement device disclosed in Patent Document 1, a technique is disclosed for switching the light used in measurement by positioning a mirror unit, which includes an excitation filter through which light having a desired wavelength is transmitted, on the optical path of illumination light by rotating a turret in which mirror units, each of which includes an excitation filter through which light having a predetermined wavelength is transmitted, are disposed along the circumferential direction.

### [Related Art Documents]

### [Patent Documents]

[Patent Document 1] Japanese Unexamined Patent Application, First Publication No. 2002-090637

### SUMMARY OF INVENTION

### PROBLEMS TO BE SOLVED BY THE INVENTION

However, there are the following problems in the above-described related art.

For example, when a plurality of objects to be measured are arranged in an array in a sample and an object to be measured that has generated the fluorescence is measured by comparing an imaging result in the bright field observation with an imaging result in the fluorescence observation, the imaging region in the sample needs to match between both the imaging results. In the related art described above, however, rotation of the turret and positioning of the turret in the rotational direction are required at the time of switching between the bright field observation and the fluorescence observation. Accordingly, due to arrangement error, operation error, or the like of the fluorescent cube or the mirror unit, the imaging region in the sample does not match between both the imaging results. As a result, there is a possibility that the measurement accuracy will be reduced.

In particular, in relation to the size of the field of view, when an object to be measured in the imaging region is a part of the entire object to be measured, matching (for example, positioning) of the imaging region in the sample is strictly required between both the imaging results. For example, near exact matching or exact matching of the imaging region in the sample is required between both the imaging results.

It is an object of aspects of the present invention to provide an optical element, an optical device, a measurement device, and a screening apparatus that are capable of reducing the degradation of measurement accuracy.

### MEANS FOR SOLVING THE PROBLEM

According to an aspect of the present invention, an optical element is provided, including a separation section that can separate incident light according to a wavelength. The separation section has an optical characteristic in which incident light in a first wavelength band is reflected, incident light in a second wavelength band is transmitted, and incident light in a third wavelength band is partially transmitted and partially reflected.

According to another aspect of the present invention, an optical element is provided, including a separation section that can separate incident light according to a wavelength. The separation section has an optical characteristic in which incident light in a first wavelength band is not transmitted, incident light in a second wavelength band is totally transmitted, and incident light in a third wavelength band is partially transmitted.

According to still another aspect of the present invention, an optical device is provided, including the optical element described above.

According to still another aspect of the present invention, a measurement device is provided, including: the optical device described above; a light source device that emits light to illuminate an irradiation object through the optical element; and a sensor that receives light that illuminates the irradiation object and is transmitted through the optical element.

According to still another aspect of the present invention, an optical device is provided, including: first and second optical elements that can separate incident light according to a wavelength; and a switching section that performs selective switching between the first and second optical elements. The first optical element includes a first separation section having an optical characteristic in which light in a first wavelength band is reflected, light in a second wavelength band is transmitted, and light in a third wavelength band is partially transmitted and partially reflected. The second optical element includes a second separation section having an optical characteristic in which light in a fourth wavelength band is reflected, light in a fifth wavelength band is transmitted, and the light in the third wavelength band or light in a sixth wavelength band is partially transmitted and partially reflected.

According to still another aspect of the present invention, a measurement device is provided, including: the optical device described above; a light source device that emits light to illuminate an irradiation object through the optical device; and a sensor that receives light transmitted through the irradiation object.

According to still another aspect of the present invention, an optical device is provided, including first to third optical elements that can separate incident light according to a wavelength. The first optical element includes a first separation section having an optical characteristic in which light in a first wavelength band is reflected, light in a second wavelength band is transmitted, and light in a third wavelength band is partially transmitted and partially reflected. The second optical element includes a second separation section having an optical characteristic in which light in a fourth wavelength band is reflected, light in a fifth wavelength band is transmitted, and the light in the third wavelength band or light in a sixth wavelength band is partially transmitted and partially reflected. The third optical element includes a third separation section having an optical characteristic in which at least a part of the light in the first wavelength band and at least a part of the light in the second wavelength band are reflected and at least a part of the light in the fourth wavelength band and at least a part of the light in the fifth wavelength band are transmitted.

According to still another aspect of the present invention, an optical device is provided, including: a first optical system including a first optical element, which has an optical characteristic in which light in a first wavelength band is reflected, light in a second wavelength band is transmitted, and light in a third wavelength band is partially transmitted and partially reflected, and an objective lens on which the light in the first to third wavelength bands is incident; a second optical system including a second optical element, which has an optical characteristic in which light in a fourth wavelength band is reflected, light in a fifth wavelength band is transmitted, and the light in the third wavelength band or light in a sixth wavelength band is partially transmitted and partially reflected, and an objective lens on which the light in the fourth and fifth wavelength bands is incident and on which the light in the third or sixth wavelength band is incident; and a third optical element that is disposed on an optical path along which the light in the first to sixth wavelength bands can be incident and that has an optical characteristic in which at least a part of the light in the first wavelength band and at least a part of the light in the second wavelength band are reflected and at least a part of the light in the fourth wavelength band and at least a part of the light in the fifth wavelength band are transmitted.

According to still another aspect of the present invention, a measurement device is provided, including: the optical device described above; a light source device that emits light to illuminate an irradiation object through the optical device; and a sensor that receives light transmitted through the irradiation object.

According to still another aspect of the present invention, an optical element is provided, including: a first multilayer film that reflects light in a first wavelength band and transmits light in a second wavelength band different from the first wavelength band; and a second multilayer film that partially transmits and partially reflects light in a third wavelength band. The first and second multilayer films are formed in a layer structure.

According to still another aspect of the present invention, an optical element is provided, including: a first multilayer film having a first spectral characteristic in which first excitation light irradiated to an irradiation object is reflected and first fluorescence generated by irradiation of the first excitation light is transmitted or the first excitation light is transmitted and second fluorescence is reflected; and a second multilayer film that partially transmits and partially reflects illumination light for observing the irradiation object.

According to still another aspect of the present invention, an optical element is provided, including: a substrate having a first surface and a second surface different from the first surface; a first multilayer film that is formed on the first surface and that has a first transmission wavelength band in which first incident light is transmitted, a second transmission wavelength band in which second incident light is transmitted, and a reflection wavelength band in which third incident light is reflected; and a second multilayer film that is formed on the second surface and that separates the first incident light into transmitted light and reflected light.

According to still another aspect of the present invention, an optical device is provided, including: an optical path along which illumination light for observing an irradiation object, excitation light irradiated to the irradiation object, and fluorescence generated by irradiation of the excitation light pass; and an optical element that is disposed on the optical path and that includes a first multilayer film, which reflects the excitation light and transmits the fluorescence, or which transmits the excitation light and reflects the fluorescence, and a second multilayer film that separates the illumination light into transmitted light and reflected light.

According to still another aspect of the present invention, an optical device is provided, including the optical element described above.

According to still another aspect of the present invention, a measurement device is provided, including: the optical device described above; a light source device; and a light receiving sensor.

According to still another aspect of the present invention, a screening apparatus is provided, including: a bioassay device; and the measurement device described above.

### ADVANTAGE OF THE INVENTION

According to aspects of the present invention, it is possible to reduce the degradation of measurement accuracy according to the measurement of the irradiation object.

### BRIEF DESCRIPTION OF THE DRAWINGS

FIG. 1 is a diagram showing the configuration of a measurement device according to a first embodiment.
FIG. 2 is a diagram showing the configuration of the measurement device body according to the first embodiment.
FIG. 3 is a diagram showing an example of a filter block according to the first embodiment.
FIG. 4 is a diagram showing the relationship between the transmittance and the wavelength of light according to the first embodiment.
FIG. 5 is a diagram showing an example of a magnification conversion optical system according to the first embodiment.
FIG. 6A is a diagram showing an example of the irradiation object according to the first embodiment.
FIG. 6B is a diagram showing an example of the irradiation object according to the first embodiment.
FIG. 7 is a diagram showing the field of view of an imaging device according to the first embodiment.
FIG. 8 is a diagram showing the field of view of the imaging device according to the first embodiment.
FIG. 9 is a diagram showing the relationship between the transmittance and the wavelength of light according to a second embodiment.
FIG. 10 is a diagram showing the configuration of a measurement device according to a third embodiment.
FIG. 11 is a diagram showing the configuration of the measurement device body according to the third embodiment.
FIG. 12 is a diagram showing the schematic configuration of a switching section according to the third embodiment.
FIG. 13 is a diagram showing the relationship between the transmittance and the wavelength of light according to the third embodiment.
FIG. 14 is a diagram showing the relationship between the transmittance and the wavelength of light according to the third embodiment.
FIG. 15 is a diagram showing the relationship between the transmittance and the wavelength of incident light according to a fourth embodiment.
FIG. 16 is a diagram showing the configuration of a measurement device according to a fifth embodiment.
FIG. 17 is a diagram showing the relationship between the transmittance and the wavelength of light according to the fifth embodiment.
FIG. 18 is a drawing showing the configuration of a measurement device according to a sixth embodiment.
FIG. 19 is a diagram showing the relationship between the transmittance and the wavelength of incident light according to the sixth embodiment.
FIG. 20 is a diagram showing the relationship between the transmittance and the wavelength of incident light according to the sixth embodiment.
FIG. 21 is a diagram showing the relationship between the transmittance and the wavelength of incident light according to the sixth embodiment.
FIG. 22 is a drawing showing the configuration of a measurement device according to a seventh embodiment.
FIG. 23 is a diagram showing the relationship between the transmittance and the wavelength of incident light according to the seventh embodiment.
FIG. 24 is a diagram showing the relationship between the transmittance and the wavelength of incident light according to an eighth embodiment.
FIG. 25A is a cross-sectional view of a dichroic mirror according to a ninth embodiment.
FIG. 25B is a cross-sectional view of the dichroic mirror according to the ninth embodiment.
FIG. 26 is a diagram showing the optical characteristics of first and second multilayer films according to the ninth embodiment.
FIG. 27 is a diagram showing the configuration of a measurement system according to the ninth embodiment.
FIG. 28 is a diagram showing the optical characteristics of the entire optical element in an example.
FIG. 29 is a diagram showing the optical characteristics of a first multilayer film in the example.
FIG. 30 is a diagram showing the optical characteristics of a second multilayer film in the example.

### DESCRIPTION OF EMBODIMENTS

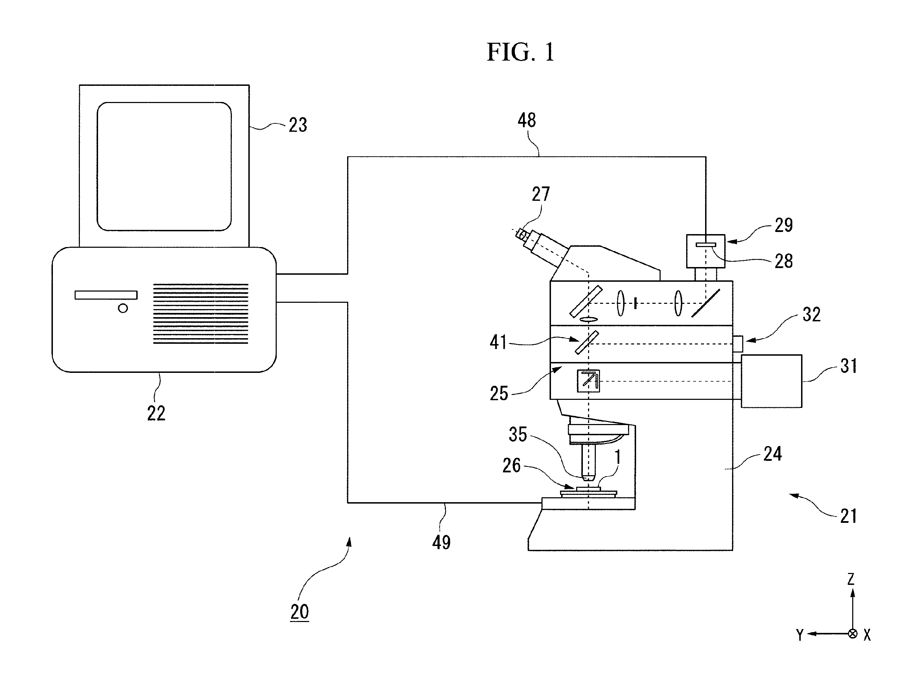

Hereinafter, embodiments of an optical element, an optical device, a measurement device, and a screening apparatus of the present invention will be described with reference to FIGS. 1 to 27. In the following explanation, an XYZ orthogonal coordinate system is set, and the positional relationship of respective members will be described with reference to the XYZ orthogonal coordinate system. In addition, a predetermined direction within the horizontal plane is set to an X-axis direction, a direction perpendicular to the X-axis direction within the horizontal plane is set to a Y-axis direction, and a direction (that is, a vertical direction) perpendicular to each of the X-axis direction and the Y-axis direction is set to a Z-axis direction. In addition, rotation (inclination) directions around the X, Y, and Z axes are set to θX, θY, and θZ directions, respectively.

### <First embodiment>

A first embodiment of a measurement device will be described with reference to FIGS. 1 to 8.

FIG. 1 is a diagram showing an example of a measurement device 20 according to the present embodiment. In FIG. 1, the measurement device 20 includes a measurement device body 21 to observe an irradiation object (sample) 1, a control device 22 that controls the operation of the measurement device body 21, and a display device 23 connected to the control device 22. The control device 22 includes a computer system. The display device 23 includes a flat panel display, such as a liquid crystal display, for example.

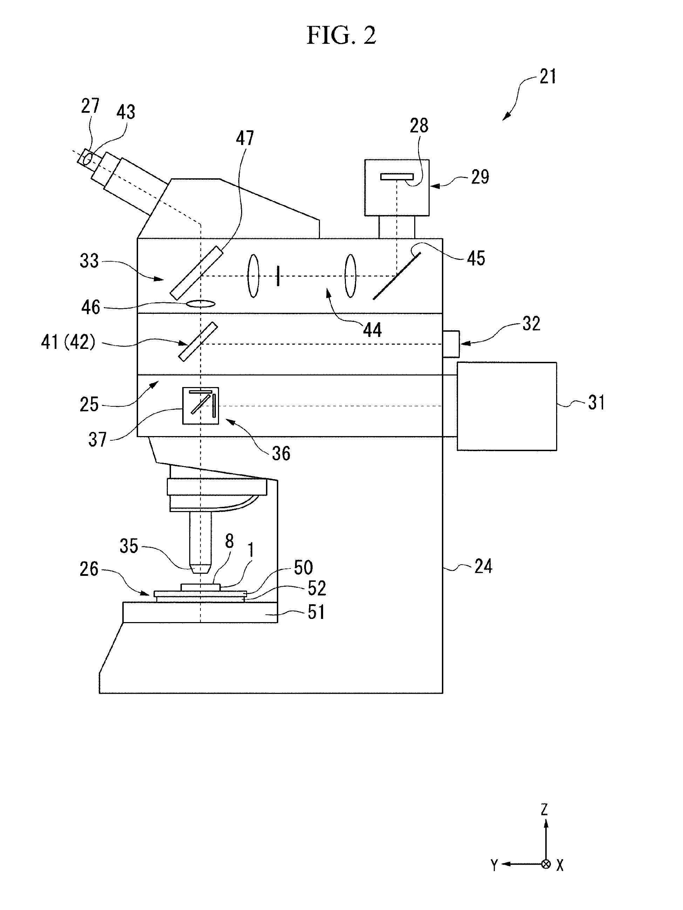

FIG. 2 is a schematic configuration diagram showing the measurement device body 21. In FIGS. 1 and 2, the measurement device body 21 includes: an optical system (optical device) 25 including a light source device 31, a detection device 32, an objective lens 35, and the like; a stage 26 that is movable while supporting the irradiation object 1; an eyepiece unit 27; and an observation camera 29 including a sensor (for example, an imaging device, or the like) capable of receiving light transmitted through an object.

Examples of the sensor include a photodetector, such as a PMT (photomultiplier tube), and an imaging device. In the present embodiment, as an example of the sensor, an imaging device 28 (light receiving sensor) is used. The imaging device 28 can acquire the image information of an object, and includes a charge-coupled device (CCD), for example.

The measurement device body 21 includes a body 24. Each of the light source device 31, the detection device (Z-position detection device) 32, the optical system 25, the stage 26, the eyepiece unit 27, and the observation camera 29 is supported by the body 24.

The optical system 25 includes a first illumination optical system 36 that illuminates the irradiation object 1 using light emitted from the light source device 31, a second illumination optical system 41 that illuminates the irradiation object 1 using light emitted from the detection device 32, and an imaging optical system 33 that forms an image of the irradiation object 1 illuminated by the first illumination optical system 36 near the imaging device 28 and the eyepiece unit 27. The imaging device 28 and the eyepiece unit 27 are disposed on the image surface side of the imaging optical system 33.

The objective lens 35 is an infinity objective lens, and can face a surface 8 of the irradiation object 1 supported by the stage 26. In the present embodiment, the objective lens (first objective lens) 35 is disposed on the +Z side of the irradiation object 1 (above the irradiation object 1).

The light source device 31 can emit excitation light for generating the fluorescence from the irradiation object 1 and illumination light for observing the irradiation object 1. As an example, the light source device 31 is configured to be able to switch selectively between and emit light with a wavelength of 488 nm as first excitation light (light in a first wavelength band), light with a wavelength of 625 nm as second excitation light (light in a fourth wavelength band), and light with a wavelength of 430 nm as illumination light (light in a third wavelength band) on the basis of a signal from the control device 22.

The detection device (Z-position detection device) 32 detects the information regarding the position of the irradiation object 1 (for example, position information of the irradiation object 1 in the Z direction, or the like) using light (light in a sixth wavelength band) in a wavelength band, which is different from the excitation light and the illumination light emitted from the light source device 31 and the fluorescence generated from the irradiation object 1 by the excitation light, as detection light (for example, infrared light with a wavelength of 770 nm (hereinafter, simply referred to as infrared light), or the like). As detection light used in the detection device 32, light in a different wavelength band from excitation light and illumination light emitted from the light source device 31 is used.

The first illumination optical system 36 illuminates the irradiation object 1 with excitation light in a predetermined wavelength band or illumination light in a predetermined wavelength band using the light emitted from the light source device 31. The first illumination optical system 36 includes the objective lens 35 and a filter block 37 as an optical unit (optical device) capable of separating the excitation light and the fluorescence from each other. The objective lens 35 emits excitation light and illumination light for illuminating the irradiation object 1 and detection light (infrared light) for detecting the position information of the irradiation object 1 in the Z direction. The first illumination optical system 36 illuminates the irradiation object 1, which is supported by the stage 26, with excitation light, illumination light, and detection light from a predetermined upper direction (Z direction).

The second illumination optical system 41 includes a wavelength selection filter 42. The wavelength selection filter 42 reflects infrared light, which is in a wavelength band of detection light, and transmits light in the other wavelength band therethrough. In the measurement device 20 in the present embodiment, an illumination optical system is formed by the first illumination optical system 36 and the second illumination optical system 41.

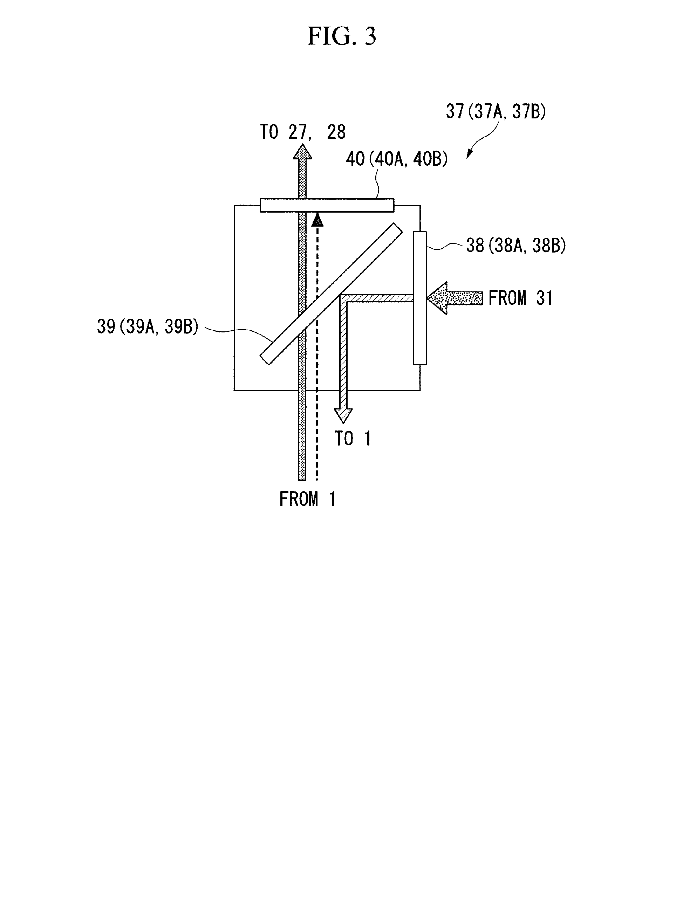

FIG. 3 is a schematic diagram showing an example of the filter block 37. As shown in FIG. 3, the filter block 37 includes a first filter (first wavelength selection section) 38 on which light from the light source device 31 is incident, a dichroic mirror (separation section, optical element) 39 on which light transmitted through the first filter 38 is incident, and a second filter (second wavelength selection section) 40 on which light from the dichroic mirror 39 is incident.

The first filter 38 is a wavelength selection optical element that extracts illumination light and first and second excitation light required for the excitation of a fluorescent material by blocking light in some wavelength band of the light from the light source device 31.

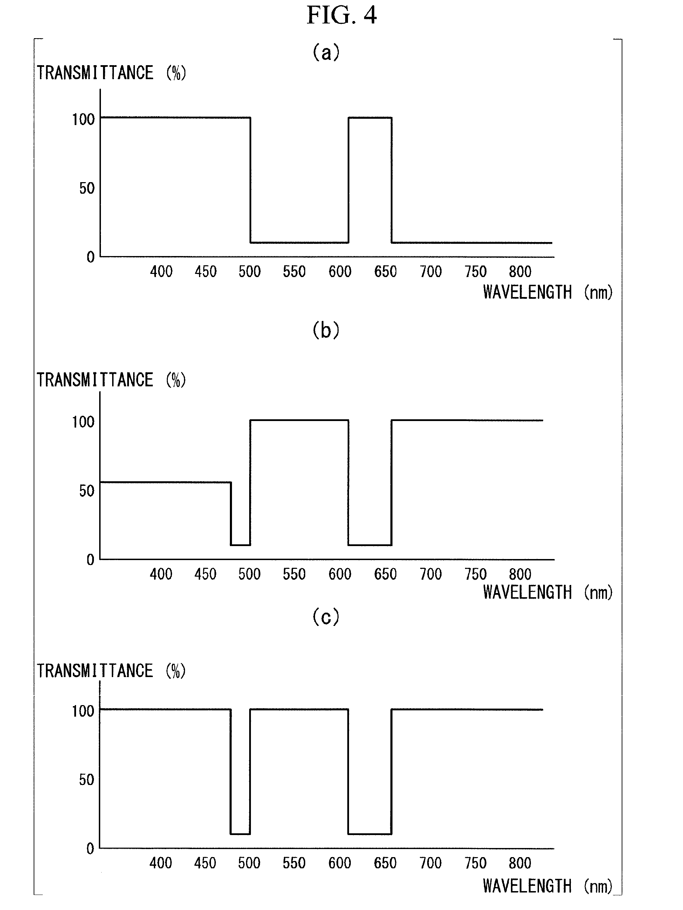

FIG. 4(a) is a diagram showing the relationship between the wavelength of incident light and a transmittance in the first filter 38. As shown in FIG. 4(a), the first filter 38 has an optical characteristic in which the transmittance in a wavelength band of about 350 nm to 500 nm including the wavelengths of the first excitation light and the illumination light emitted from the light source device 31 and a wavelength band of about 600 nm to 650 nm including the wavelength of the second excitation light is 100%. That is, the first filter 38 includes a band-pass filter that allows only light in a predetermined wavelength band (first and second excitation light beams and illumination light) to be transmitted therethrough and does not allow light in the other wavelength band to be transmitted therethrough.

The light in a predetermined wavelength band (first and second excitation light beams and illumination light) emitted from the light source device 31 and transmitted through the first filter 38 is incident on the dichroic mirror 39 that is an optical element.

The dichroic mirror 39 is a separation optical element that separates the excitation light and the fluorescence from each other.

In other words, the dichroic mirror 39 is a separation optical element capable of separating incident light according to a wavelength. In the present embodiment, the dichroic mirror 39 separates the excitation light and the fluorescence from each other.

In the present embodiment, the dichroic mirror 39 has an optical characteristic in which light in a wavelength band (first wavelength band) including the wavelength of the first excitation light transmitted through the first filter 38 and light in a wavelength band (fourth wavelength band) including the wavelength of the second excitation light transmitted through the first filter 38 are reflected and in which the fluorescence in a predetermined wavelength band (second wavelength band) generated from the irradiation object 1 by illumination of the first excitation light is transmitted at a high transmittance (for example, substantially 80% to 100%; a transmittance at which a sufficient S/N ratio is obtained) and the fluorescence in a predetermined wavelength band (fifth wavelength band) generated from the irradiation object 1 by illumination of the second excitation light is transmitted at a high transmittance (for example, substantially 80% to 100%; a transmittance at which a sufficient S/N ratio is obtained).

In addition, the dichroic mirror 39 has an optical characteristic in which light in a third wavelength band including the wavelength of illumination light is partially transmitted and partially reflected. In addition, the dichroic mirror 39 has an optical characteristic in which infrared light emitted from the detection device 32 is transmitted.

In other words, the dichroic mirror 39 of the present embodiment has the following optical characteristics.

The dichroic mirror 39 reflects light in a wavelength band (first wavelength band) including the wavelength of the first excitation light transmitted through the first filter 38 and light in a wavelength band including the wavelength of the second excitation light transmitted through the first filter 38. The dichroic mirror 39 allows light in a wavelength band (second wavelength band), which includes the fluorescence generated from the irradiation object 1 by illumination of the first excitation light, to be transmitted therethrough at a high transmittance (for example, substantially 80% to 100%; a transmittance at which a sufficient S/N ratio is obtained). The dichroic mirror 39 allows the fluorescence in a predetermined wavelength band, which is generated from the irradiation object 1 by illumination of the second excitation light, to be transmitted at a high transmittance (for example, substantially 80% to 100%; a transmittance at which a sufficient S/N ratio is obtained).

The dichroic mirror 39 allows light in the third wavelength band including the wavelength of illumination light to be partially transmitted therethrough and partially reflected therefrom. The dichroic mirror 39 allows infrared light emitted from the detection device 32 to be transmitted therethrough.

For example, these optical characteristics are obtained by a multilayer film (not shown) provided in the dichroic mirror 39.

FIG. 4(b) is a diagram showing the relationship between the wavelength of incident light and a transmittance as optical characteristics of the dichroic mirror 39. As shown in FIG. 4(b), the dichroic mirror 39 has an optical characteristic in which the transmittance in a wavelength band of 500 nm to 600 nm (second wavelength band), which includes the wavelength of the first fluorescence generated from the irradiation object 1 by illumination of the first excitation light, and a wavelength band of 650 nm or higher (fifth wavelength band), which includes the wavelength of infrared light that is the detection light of the detection device 32 and the wavelength of the second fluorescence generated from the irradiation object 1 by illumination of the second excitation light, is a high transmittance of about 100% (for example, a transmittance of 100% or a transmittance of 80% to 100%).

The dichroic mirror 39 also has an optical characteristic in which the transmittance for light in a wavelength band of about 350 nm to 470 nm (third wavelength band) including the wavelength of illumination light is about 50% (for example, about 50%, 40% to 60%, or 30% to 70%) and accordingly the light in the third wavelength band is partially transmitted and partially reflected.

In other words, the dichroic mirror 39 has a transmittance of about 50% for light in a wavelength band of about 350 nm to 470 nm including the wavelength of illumination light. The dichroic mirror 39 has a low transmittance near 0% (for example, 0% or 0% to 20%) for light in a wavelength band exceeding about 470 nm and less than 500 nm including the wavelength of the first excitation light. The dichroic mirror 39 has a high transmittance of about 100% for light in a wavelength band of 500 nm to 600 nm including the wavelength of the first fluorescence.

The dichroic mirror 39 has a low transmittance of about 0% for light in a wavelength band exceeding about 600 nm and less than 650 nm including the wavelength of the second excitation light. The dichroic mirror 39 has a high transmittance of about 100% for light in a wavelength band of 650 nm or higher including the wavelength of the second fluorescence (and infrared light).

The light in a predetermined wavelength band (first and second excitation light beams) transmitted through the first filter 38 is reflected by the dichroic mirror 39 and is guided to the irradiation object 1. These first and second excitation light beams are irradiated to the irradiation object 1. The light (illumination light) in a predetermined wavelength band transmitted through the first filter 38 is partially reflected by the dichroic mirror 39 and is guided to the irradiation object 1. The illumination light reflected partially is irradiated to the irradiation object 1.

The second filter 40 is a wavelength selection optical element having an optical characteristic in which illumination light and first and second fluorescent light beams from the irradiation object 1 are separated from unnecessary light (scattered light or the like), which has a wavelength other than the illumination light and the first and second fluorescent light beams, and only the illumination light and the first and second fluorescent light beams are extracted and infrared light emitted from the detection device 32 is transmitted.

FIG. 4(c) is a diagram showing the relationship between the wavelength of incident light and a transmittance in the second filter 40. As shown in FIG. 4(c), the second filter 40 has an optical characteristic in which the transmittance in a wavelength band of 500 nm to 600 nm (second wavelength band), which includes the wavelength of the first fluorescence, and a wavelength band of 650 nm or higher (fifth wavelength band), which includes the wavelength of the second fluorescence generated from the irradiation object 1 by illumination of the second excitation light (and the wavelength of infrared light), is a high transmittance of 100%. The second filter 40 has an optical characteristic in which the transmittance in a wavelength band of about 350 nm to 470 nm (third wavelength band) including the wavelength of illumination light is 100%.

The second filter 40 has a transmittance of 0% for light in a wavelength band exceeding about 470 nm and less than 500 nm including the wavelength of the first excitation light and light in a wavelength band exceeding about 600 nm and less than 650 nm including the wavelength of the second excitation light.

That is, the second filter 40 includes a band-pass filter that allows only the first and second fluorescent light beams, illumination light, and infrared light to be transmitted therethrough and does not allow light in the other wavelength band to be transmitted therethrough. The first and second fluorescent light beams and the illumination light transmitted through the second filter 40 are guided to the eyepiece unit 27 and the imaging device 28 of the observation camera 29.

The imaging optical system 33 includes a plurality of optical elements, such as the objective lens 35 disposed at a position facing the irradiation object 1 supported by the stage 26, an eyepiece 43, a magnification conversion optical system 44, a reflecting mirror 45, and an objective lens (second objective lens) 46 of an imaging system, and forms an image of the irradiation object 1 near the imaging device 28 and the eyepiece unit 27. The objective lens 35 is an optical element closest to the object surface of the imaging optical system 33 among a plurality of optical elements of the imaging optical system 33.

The optical system 25 includes an optical element 47 that separates light beams from the objective lens 35 (transmitted through the objective lens 35).

In the present embodiment, the optical element 47 includes a half mirror, and allows some (for example, 20% to 80%) of incident light to be transmitted therethrough and reflects the other (for example, 20% to 80%) therefrom. The optical element 47 may be a dichroic mirror. The optical element 47 may be a total reflection mirror (for example, a quick return mirror) having a function of optical path switching.

The stage 26 supports the irradiation object 1 on the object surface side of the imaging optical system 33. The irradiation object 1 is supported by the stage 26 so that the surface 8 of the irradiation object 1 faces the objective lens 35.

Some of the light incident on the optical element 47 through the objective lens 35 from the irradiation object 1 is transmitted through the optical element 47, is guided to the eyepiece 43, and is emitted from the eyepiece unit 27. The image of the irradiation object 1 is formed near the eyepiece unit 27 by the imaging optical system 33. Therefore, the observer can check the image of the irradiation object 1 through the eyepiece unit 27.

In addition, some of the light incident on the optical element 47 through the objective lenses 35 and 46 from the irradiation object 1 is reflected by the optical element 47, is guided to the magnification conversion optical system 44, and is incident on the imaging device 28 of the observation camera 29 through the reflecting mirror 45. The image of the irradiation object 1 is formed on the imaging device 28 by the imaging optical system 33. Accordingly, the imaging device 28 of the observation camera 29 can acquire the image information of the irradiation object 1.

As shown in FIG. 1, the imaging device 28 of the observation camera 29 and the control device 22 are connected to each other through a cable 48. The image information (image signal) of the irradiation object 1 acquired by the imaging device 28 is output to the control device 22 through the cable 48. The control device 22 displays the image information from the imaging device 28 using the display device 23. The display device 23 can enlarge and display the image information of the irradiation object 1 acquired by the imaging device 28.

As shown in FIGS. 1 and 2, in the present embodiment, the stage 26 includes a support member 50 that supports the irradiation object 1 and a driving device 52 that moves the support member 50 above a base member 51. The support member 50 is movable within the XY plane and in the Z direction above the base member 51. The stage 26 (driving device 52) and the control device 22 are connected to each other by a cable 49. The control device 22 can move the support member 50, which supports the irradiation object 1, within the XY plane using the driving device 52.

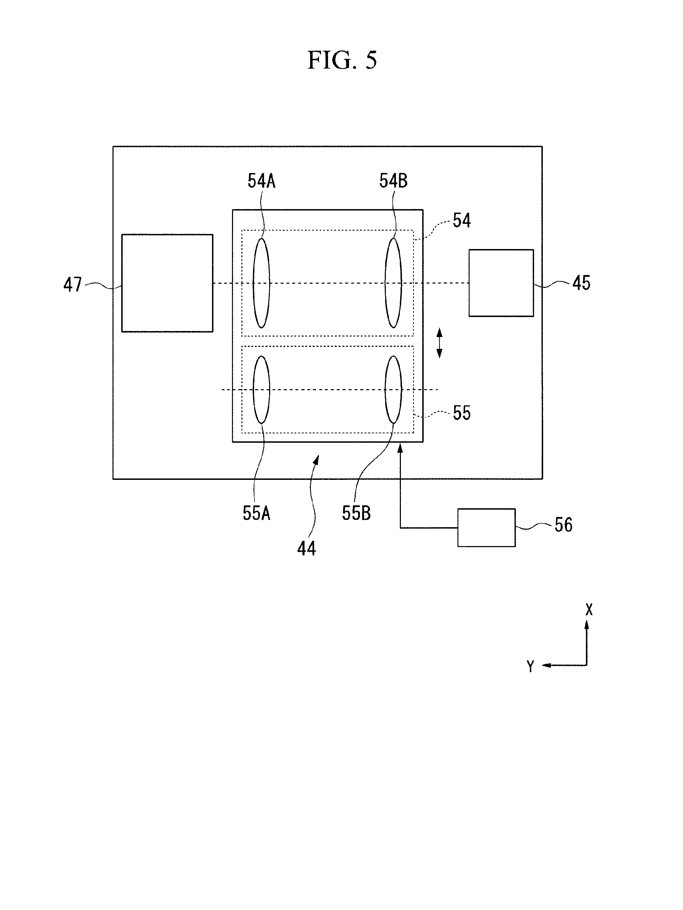

FIG. 5 is a diagram showing an example of the magnification conversion optical system 44 of the optical system 25. In FIG. 5, the magnification conversion optical system 44 includes a low magnification optical system 54, a high magnification optical system 55, and a driving mechanism 56 that can move each of the low magnification optical system 54 and the high magnification optical system 55. The low magnification optical system 54 has a plurality of lenses 54A and 54B. The high magnification optical system 55 has a plurality of lenses 55A and 55B.

The driving mechanism 56 is controlled by the control device 22. The control device 22 controls the driving mechanism 56 to place either the low magnification optical system 54 or the high magnification optical system 55 on the optical path between the optical element 47 and the reflecting mirror 45. As a result, the magnification of the imaging optical system 33 with respect to the imaging device 28 is converted. Light from the irradiation object 1 is transmitted through the objective lens 35 and is then reflected by the optical element 47 and is incident on the magnification conversion optical system 44. The magnification conversion optical system 44 forms an intermediate image between the lens 54A (55A) and the lens 54B (55B).

In FIG. 2, light transmitted through the magnification conversion optical system 44 is incident on the imaging device 28 of the observation camera 29 through the reflecting mirror 45. The objective lens 46 forms an image of the irradiation object 1 on the light receiving surface of the imaging device 28 of the observation camera 29. The control device 22 performs image processing on a pixel signal output from the imaging device 28 using a predetermined method, thereby generating image data. In addition, the image processing on the pixel signal output from the imaging device 28 may also be performed by an arithmetic unit of the observation camera 29.

Next, a measurement method for measuring the irradiation object 1 using the measurement device 20 having the above-described configuration will be described.

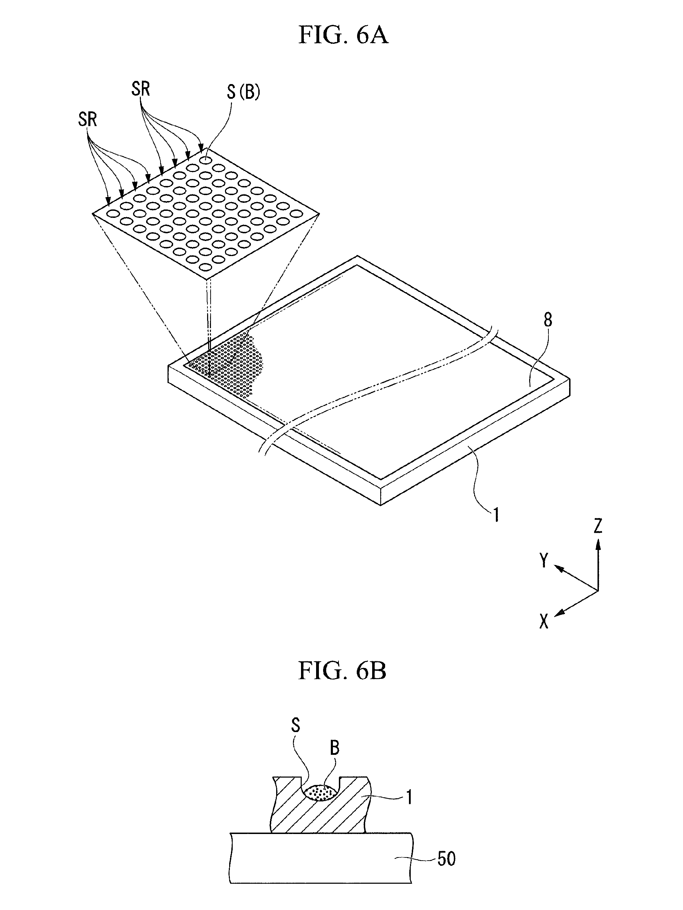

First, an example of the irradiation object 1 to be measured will be described with reference to FIGS. 6A and 6B.

FIG. 6A is a diagram showing the shape of the irradiation object 1 held on the support member 50. FIG. 6B is an enlarged sectional view showing a main portion of the irradiation object 1.

As shown in FIG. 6A, the irradiation object 1 is a plate-shaped member called a so-called microarray chip (biomolecule array), and is formed in a rectangular shape, for example. The irradiation object 1 is formed so as to extend in one direction. The irradiation object 1 is held on the support member 50 such that the longitudinal direction is parallel to the Y direction. A plurality of (for example, 96) spots S are formed on the surface 8 of the irradiation object 1.

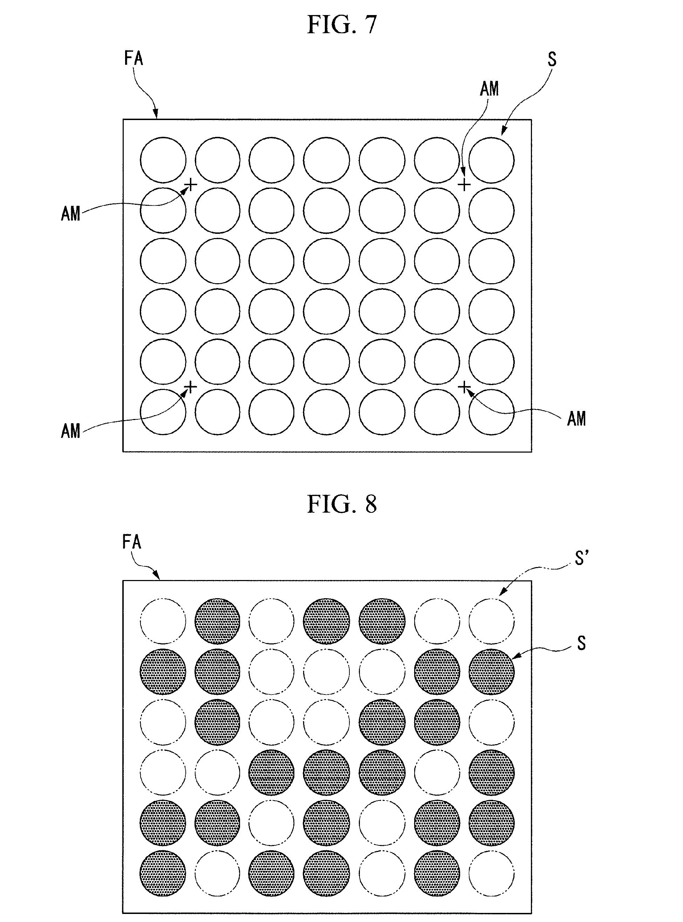

When the size of the field of view of the imaging device 28 is larger than the size of the image of the arrangement area of the spots S, all spots S can be collectively imaged. On the contrary, when the size of the field of view of the imaging device 28 is smaller than the image of the arrangement area of the spots S, it is necessary to perform screen combination of results obtained by performing imaging on each group of some spots S multiple times. Therefore, an alignment mark AM (refer to FIG. 7) used as an indicator at the time of screen combination is formed on the irradiation object 1 in the distribution included in the field of view at each time of imaging of multiple times.

A plurality of spots S are disposed in a matrix along the shape of the irradiation object 1. Spot columns SR are formed on the irradiation object 1 by the plurality of spots S disposed in a matrix. An address is set for each spot S so that the spot S can be identified. For example, this address is stored in a storage unit of the control device 22.

As shown in FIG. 6A, each spot S is formed in a circular shape in plan view, for example. As shown in FIG. 6B, various objects to be measured B that generate photoresponsive materials by predetermined reaction, various objects to be measured B in which a labeled target is bonded to a probe by predetermined reaction, or an object to be measured B (biomolecules) that can react specifically with a labeled target contained in a specimen (for example, serum or the like) are disposed in each spot S.

For example, first fluorescence or second fluorescence is generated from the generated photoresponsive material or the labeled target. The generated fluorescence is emitted from the surface of the irradiation object 1 in each spot S.

In the object to be measured B, when the irradiation object 1 includes, for example, a DNA array, a nucleic acid such as DNA is arranged as a probe and a specimen such as DNA and RNA, which has been injected and then washed, is arranged as a target.

When the irradiation object 1 includes, for example, a protein array, an antibody, an antigen, a peptide, a receptor, or the like is arranged as a probe, and when the antigen includes, for example, a sugar-chain array, a sugar chain, lectin, or the like is arranged as a probe and a specimen such as an antibody and an enzyme, which has been injected and then washed, is arranged as a target. As a target for the irradiation object, a specimen such as a sugar chain, lectin, and bacteria, which has been injected and then washed, is arranged.

Therefore, for example, in the object to be measured B, when the irradiation object 1 includes a biomolecule array, a biomolecule (for example, DNA, RNA, a peptide, a sugar chain, an antibody, and an antigen) is arranged as a probe, and a specimen (such as a biomolecule) including a labeled target, which has been injected and then washed, is arranged as a target.

When measuring the above-described irradiation object 1 using the measurement device 20, first, the measurement device 20 detects the position information of the surface 8 of the irradiation object 1 in the Z direction using the infrared light emitted from the detection device 32. The infrared light emitted from the detection device 32 is reflected by the wavelength selection filter 42 of the second illumination optical system 41 and is transmitted sequentially through the second filter 40 and the dichroic mirror 39 of the filter block 37 and the objective lens 35. Then, the infrared light is reflected on the surface 8 of the irradiation object 1 and is received by the detection device 32 along the same optical path (common optical path).

The control device 22 positions the surface 8 of the irradiation object 1 at a predetermined position in the Z direction by driving the driving device 52 on the basis of the Z-direction position information detected by the detection device 32.

Then, when the surface 8 of the irradiation object 1 is positioned at a predetermined position in the Z direction, the measurement device 20 moves the irradiation object 1 to a first imaging region, in which predetermined (predetermined number of) spots S can be measured, within the XY plane and captures an image of the spot S using the illumination light for observation.

Then, the measurement device 20 selects and emits illumination light from the light source device 31 to illuminate the surface 8 of the irradiation object 1. The illumination light emitted from the light source device 31 is transmitted through the first filter 38 and is then separated into reflected light and transmitted light by the dichroic mirror 39 to be partially reflected and partially transmitted. The partially reflected illumination light illuminates the surface 8 of the irradiation object 1 after being transmitted through the objective lens 35.

The illumination light reflected on the surface 8 of the irradiation object 1 is incident on the optical element 47 after being transmitted sequentially through the objective lens 35, the dichroic mirror 39 and the second filter 40 of the filter block 37, the wavelength selection filter 42, and the objective lens 46.

Then, some of the illumination light incident on the optical element 47 is transmitted through the optical element 47, is guided to the eyepiece 43, and is emitted from the eyepiece unit 27. Thus, the image of the spot S of the irradiation object 1 is formed near the eyepiece unit 27. In addition, some of the illumination light incident on the optical element 47 is reflected by the optical element 47, is guided to the magnification conversion optical system 44 of the imaging optical system 33, and is incident on the imaging device 28 of the observation camera 29 through the reflecting mirror 45.

As a result, as shown in FIG. 7, in the field of view FA of the size corresponding to the magnification set by the magnification conversion optical system 44 and the imaging characteristic of the imaging device 28, an image of the plurality of (in FIG. 7,42) spots S and the alignment mark AM is formed in the imaging device 28. The imaging device 28 acquires the image information of the spot S (light receiving information of the spot S) and the image information (position information) of the alignment mark AM. The control device 22 stores the image information of the spot S, and calculates the arrangement (X, Y, θZ) of the spot S group in the field of view FA from the position information of the alignment mark AM and stores it.

Then, the measurement device 20 switches the light emitted from the light source device 31 to, for example, first excitation light in order to perform fluorescence measurement. The first excitation light emitted from the light source device 31 is reflected (totally reflected) by the dichroic mirror 39 after being transmitted through the first filter 38, and illuminates the surface 8 of the irradiation object 1 after being transmitted through the objective lens 35.

Among the spots S illuminated by the first excitation light, from the spot S in which the material of the probe and the material of the target are bonded to each other, the first fluorescence is generated at a wavelength included in the wavelength band of 500 nm to 550 nm that is continuous with a wavelength band (wavelength band exceeding about 470 nm and less than 500 nm) in which the wavelength of the first excitation light is included. The generated first fluorescence is incident on the optical element 47 after being transmitted sequentially through the objective lens 35, the dichroic mirror 39 and the second filter 40 of the filter block 37, the wavelength selection filter 42, and the objective lens 46.

In addition, in the same manner as in the measurement of the spot S using the illumination light, the image of the spot S that has generated the first fluorescence is formed near the eyepiece unit 27, and is also formed in the field of view FA of the imaging device 28 as shown in FIG. 8. The imaging device 28 acquires the image information of the spot S (light receiving information of the spot S) that has generated the first fluorescence.

Accordingly, the measurement device 20 can detect the affinity (for example, reactivity or binding property) between the biomolecules (probe) and the fluorescently-labeled target contained in the specimen.

The spot S' indicated by a two-dot chain line in FIG. 8 does not generate the first fluorescence, and is not recognized as an imaging signal by the imaging device 28. In this case, the measurement device 20 can measure the address of the spot S, which has generated the first fluorescence, in the irradiation object 1, that is, the address of the spot S, in which the material of the probe and the material of the target are bonded to each other, in the irradiation object 1 by matching the result (observation result) of imaging of the spot S using the illumination light shown in FIG. 7 with the result (fluorescence result) of imaging of the spot S, which has generated the first fluorescence, shown in FIG. 8.

In this case, in image measurement of the spot S using the illumination light and image measurement of the spot S using the first fluorescence, the optical path of the illumination light from the light source device 31 to the imaging device 28 is the same (common optical path) as the optical path of the first excitation light from the light source device 31 to the irradiation object 1 and the optical path of the first fluorescence, which is generated by irradiation of the first excitation light, from the irradiation object 1 to the imaging device 28.

For this reason, the arrangement of the spot S group in the field of view FA of the imaging device 28 at the time of image measurement using the illumination light is the same as that at the time of image measurement using the first fluorescence. Therefore, the result of imaging of the spot S using the illumination light can be accurately matched with the result of imaging of the spot S that has generated the first fluorescence.

In addition, when fluorescence measurement (second fluorescence measurement) using the second excitation light (second fluorescence) is also performed according to the fluorescence characteristics of the material of the probe and the material of the target, the measurement device 20 performs the above-described measurement (first fluorescence measurement) using the first fluorescence and then switches the light emitted from the light source device 31 to the second excitation light to perform the same measurement processing as in the case using the first excitation light.

After the measurement of the first imaging region in the irradiation object 1 is completed, the measurement device 20 moves the irradiation object 1 to a second imaging region adjacent to the first imaging region. The second imaging region is set at a position where a part of the alignment mark AM imaged in the first imaging region is imaged in the field of view FA of the imaging device 28. Then, in the same manner as in the imaging processing on the first imaging region, the measurement device 20 performs measurement of the spot S and the alignment mark AM using the illumination light and measurement of the spot S using the first fluorescence.

In addition, when the measurement of the first imaging region is completed in a state where the first excitation light is used, the measurement of the second imaging region may also be performed in the order of measurement using the first fluorescence and measurement using the illumination light instead of the order of measurement using the illumination light and measurement using the first fluorescence. Thus, when the measurement device 20 starts the measurement of the second or subsequent imaging region, it is not necessary to switch the light emitted from the light source device 31 since the light used at the time of measurement of the imaging region completed earlier is used. Therefore, it is possible to shorten the time required for measurement processing.

Then, after performing measurement processing on a plurality of imaging regions until the measurement of all spots S is completed, the control device 22 performs screen combination of the measurement result of the spot S using the illumination light and also performs screen combination of the measurement result of the spot S using the fluorescence from the measurement result of the alignment mark AM in each imaging region. By comparing the screen combination results, it is possible to measure the address of the spot S, in which the material of the probe and the material of the target are bonded to each other, in the irradiation object 1.

As described above, in the present embodiment, the dichroic mirror 39 has an optical characteristic in which the first and second incident excitation light beams are reflected, the first and second incident fluorescent light beams are transmitted, and the incident illumination light is partially transmitted and partially reflected. Therefore, by switching the light emitted from the light source device 31, it is possible to prevent the occurrence of a variation in the optical path of a plurality of kinds of light beams, which are used at the time of measurement, incident on the imaging device 28.

Therefore, in the present embodiment, since the measurement result when the illumination light is used and the measurement result when the fluorescence is used can be accurately matched with each other, it is possible to suppress the degradation of measurement accuracy of the spot S as in a case where an optical element disposed on the optical path is inserted and removed according to the wavelength band of light. In addition, the measurement operation can be performed at high speed by configuring the dichroic mirror 39, the light source device 31, and the measurement device 20 in the present embodiment as described above.

In addition, in the measurement device 20 of the present embodiment, since the dichroic mirror 39 also allows infrared light, which is used when the detection device 32 detects the position of the irradiation object 1 in the Z direction, to be transmitted therethrough, it is possible to efficiently detect the position of the irradiation object 1 in the Z direction.

In addition, in the present embodiment, wavelength selection of light incident on the dichroic mirror 39 from the light source device 31 is performed using the first filter 38, and wavelength selection of light emitted through the dichroic mirror 39 after being incident on the dichroic mirror 39 is performed using the second filter 40. Therefore, it is possible to suppress a situation where light other than the light emitted from the light source device 31 and the first and second fluorescent light beams, which are generated from the irradiation object 1 by irradiation of the first and second excitation light beams, is received by the imaging device 28 and becomes noise. As a result, it is possible to effectively suppress the degradation of measurement accuracy of the spot S.

### <Second embodiment>

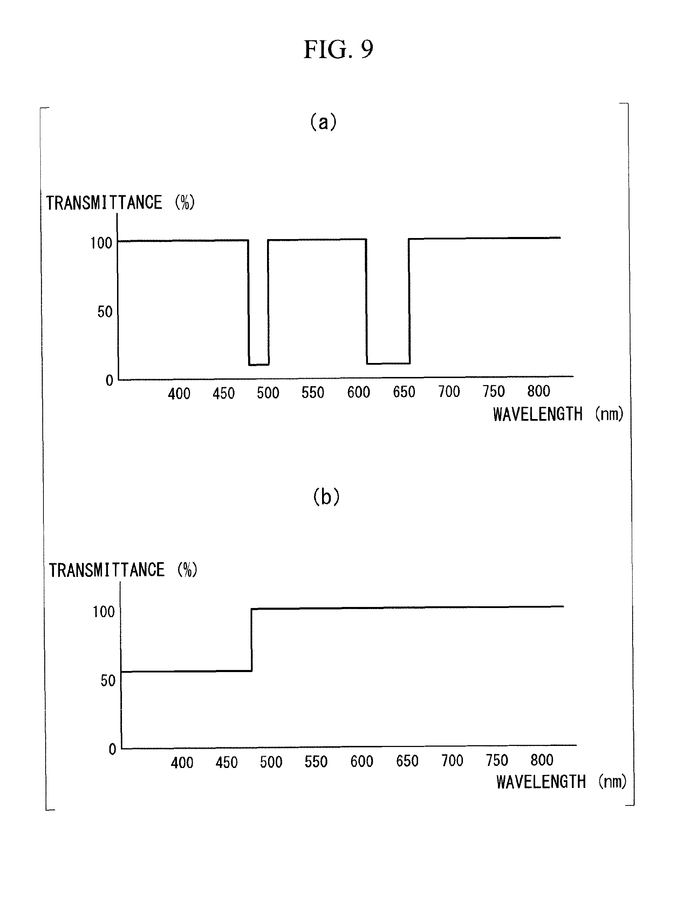

Next, a second embodiment of the measurement device 20 will be described with reference to FIG. 9.

As shown in FIG. 4(b), in the first embodiment described above, the dichroic mirror 39 has an optical characteristic in which light in a wavelength band including the wavelength of the first excitation light and light in a wavelength band including the wavelength of the second excitation light are reflected, the first fluorescence generated from the irradiation object 1 by illumination of the first excitation light is transmitted, and the second fluorescence generated from the irradiation object 1 by illumination of the second excitation light is transmitted and also has an optical characteristic in which light in a wavelength band including the wavelength of illumination light is partially transmitted and partially reflected. In addition, the dichroic mirror 39 has an optical characteristic in which infrared light emitted from the detection device 32 is transmitted. In addition, these optical characteristics of the dichroic mirror 39 are realized by a film (for example, a multilayer film) provided on one surface (one of a plurality of surfaces or one of a pair of surfaces) of the dichroic mirror 39, for example.

In the second embodiment, an example where the above-described optical characteristics are obtained by the film provided on each of two surfaces (two of a plurality of surfaces or both of a pair of surfaces) of the dichroic mirror 39 will be described.

FIG. 9(a) is a diagram showing the relationship between the transmittance and the wavelength of light incident on a first surface of the dichroic mirror 39, for example, a first film provided on a surface on which light emitted from the light source device 31 is incident. FIG. 9(b) is a diagram showing the relationship between the transmittance and the wavelength of light incident on a second surface of the dichroic mirror 39, for example, a second film provided on a surface from which the fluorescence generated from the irradiation object 1 is emitted after being transmitted through the dichroic mirror 39.

As shown in FIG. 9(a), the first film has an optical characteristic of a low transmittance of about 0% for light in a wavelength band (exceeding about 470 nm and less than 500 nm) including the wavelength of the first excitation light transmitted through the first filter 38 and light in a wavelength band (exceeding about 600 nm and less than 650 nm) including the wavelength of the second excitation light transmitted through the first filter 38 and a high transmittance of about 100% for light in the other wavelength band.

As shown in FIG. 9(b), the second film has an optical characteristic of a transmittance of about 50% for light in a wavelength band of about 350 nm to 470 nm including the wavelength of illumination light and a high transmittance of about 100% for light in the other wavelength band.

Other configurations are the same as those of the first embodiment described above.

In the measurement device 20 having the above-described configuration, the illumination light emitted from the light source device 31 is transmitted through the first filter 38 and is then partially reflected by the second film and partially transmitted through the second film after being transmitted through the first film of the dichroic mirror 39. The partially reflected illumination light illuminates the surface 8 of the irradiation object 1 after being transmitted through the objective lens 35.

The illumination light reflected on the surface 8 of the irradiation object 1 is incident on the optical element 47 after being transmitted sequentially through the objective lens 35, the dichroic mirror 39 and the second filter 40 of the filter block 37, the wavelength selection filter 42, and the objective lens 46. Then, as in the first embodiment described above, the image of the spot S illuminated by the illumination light is formed near the eyepiece unit 27 and is also imaged by the imaging device 28.

On the other hand, the first excitation light emitted from the light source device 31 is reflected (totally reflected) by the first film of the dichroic mirror 39 after being transmitted through the first filter 38, and illuminates the surface 8 of the irradiation object 1 after being transmitted through the objective lens 35. Among the spots S illuminated by the first excitation light, from the spot S in which the material of the probe and the material of the target are bonded to each other, the first fluorescence is generated.

The generated first fluorescence is incident on the optical element 47 after being transmitted sequentially through the objective lens 35, the first and second films of the dichroic mirror 39 and the second filter 40 of the filter block 37, the wavelength selection filter 42, and the objective lens 46. In addition, in the same manner as in the measurement of the spot S using the illumination light, the image of the spot S that has generated the first fluorescence is formed near the eyepiece unit 27, and is also imaged by the imaging device 28.

The same is true for a case where the second excitation light is emitted from the light source device 31 to illuminate the irradiation object 1 and the second fluorescence is generated from the illuminated spot S.

Thus, in the optical element (dichroic mirror 39) of the present embodiment, the same operations and effects as in the first embodiment are obtained. In addition, since the optical element (dichroic mirror 39) of the present embodiment has a film, which has an optical characteristic in which excitation light is reflected, the fluorescence generated by irradiation of the excitation light is transmitted, and illumination light is partially transmitted and partially reflected, on two surfaces, it is possible to realize the optical characteristic easily.

In addition, according to the present embodiment, it is possible to increase the speed of the measurement operation.

While the preferred embodiments of the present invention have been described with reference to the accompanying drawings, it is needless to say that the present invention is not limited to such examples. Various shapes or combinations of respective components illustrated in the above-described embodiments are merely examples, and various changes may be made depending on design requirements or the like without departing from the scope of the invention.

For example, the configuration has been illustrated in which the dichroic mirror 39 reflects the first and second incident excitation light beams therefrom and transmits the first and second incident fluorescent light beams therethrough, the optical element of the above-described embodiment is not limited thereto, and the dichroic mirror 39 may be configured to transmit the first and second incident excitation light beams therethrough and reflect the first and second incident fluorescent light beams therefrom.

When this configuration is used, it is preferable that the measurement device have a configuration in which a sensor, such as the imaging device 28, is disposed in a direction in which the first and second fluorescent light beams are reflected.

In addition, although the measurement device of the above-described embodiment is configured such that the light source device 31 can perform selective switching between a plurality of kinds of light beams, the measurement device of the above-described embodiment is not limited thereto. For example, it is also possible to perform appropriate switching between light source devices, which emit light toward the dichroic mirror 39, using a light source device of illumination light, such as an LED, and a light source device of the first and second excitation light beams.

In addition, the measurement device of the above-described embodiment may be configured to be able to selectively switch emitted light using the light source device 31, which emits light in a wide wavelength band, and a plurality of filters, which block (or transmit) light in a specific wavelength band.

In addition, the wavelength bands of the illumination light, the first and second excitation light beams, and the first and second fluorescent light beams described in the above embodiment are examples, and it is also possible to use light in the other wavelength band.

For example, in the measurement device of the above-described embodiment, the wavelength band of the illumination light, the first and second excitation light beams, and the first and second fluorescent light beams can be appropriately selected, as in a configuration in which green light in a wavelength band of 550 nm to 600 nm is used as the illumination light for observation of the irradiation object 1, blue first fluorescence in a wavelength band of 450 nm to 500 nm is used by the first excitation light in a wavelength band of 380 nm to 400 nm, and red second fluorescence in a wavelength band of 650 nm to 700 nm is used by the second excitation light in a wavelength band of 600 nm to 650 nm.

Even when light in any wavelength band is used, it is preferable that the dichroic mirror 39 has an optical characteristic in which one of the excitation light and the fluorescence generated by the excitation light is reflected (not transmitted) and the other is transmitted (total transmission) and the illumination light is partially transmitted and partially reflected.

In addition, the first and second fluorescent light beams do not necessarily need to be generated using the first and second excitation light beams, the spot S may be measured using the illumination light for observation, a kind of excitation light, and a kind of fluorescence generated by the excitation light.

In addition, the irradiation object 1 may be observed using two kinds of illumination light according to an object to be measured without being limited to the configuration in which a kind of illumination light is used.

In addition, in the above embodiment, the configuration has been described in which screen combination is performed using the alignment mark AM provided in the irradiation object 1 since the size of the field of view FA of the imaging device 28 is smaller than the size of the image of the arrangement area of the spots S. However, all spots S can be collectively imaged by making the size of the field of view FA larger than the size of the image of the arrangement area of the spots S. In this case, it is not necessary to provide the alignment mark AM in the irradiation object 1.

### <Third embodiment>

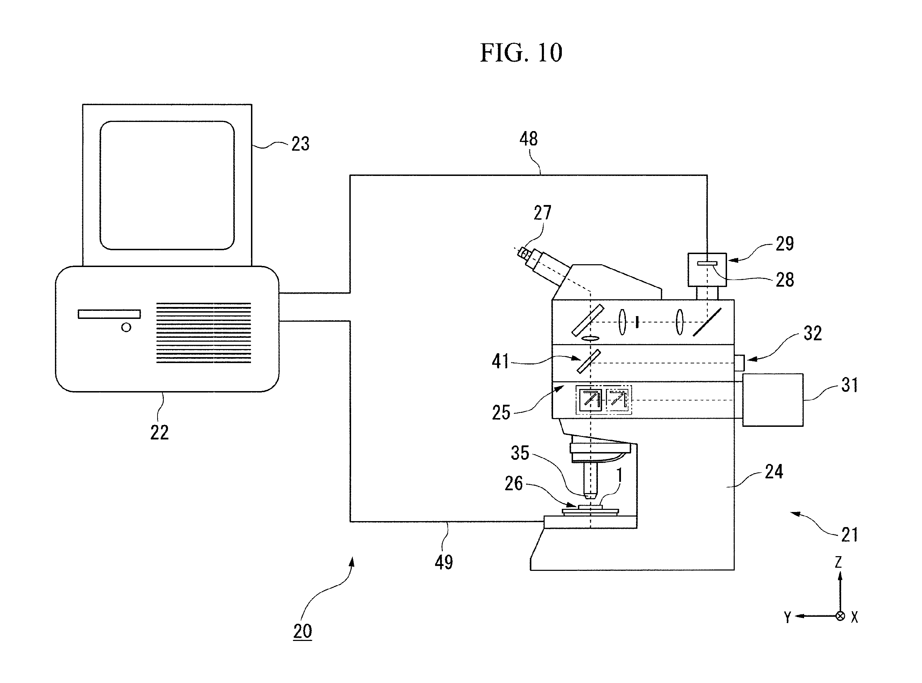

A third embodiment of the measurement device will be described with reference to FIGS. 10 to 14.

In the following explanation, components which are the same as or equivalent to those in the embodiment described above are denoted by the same reference numerals, and explanation thereof will be simplified or omitted.

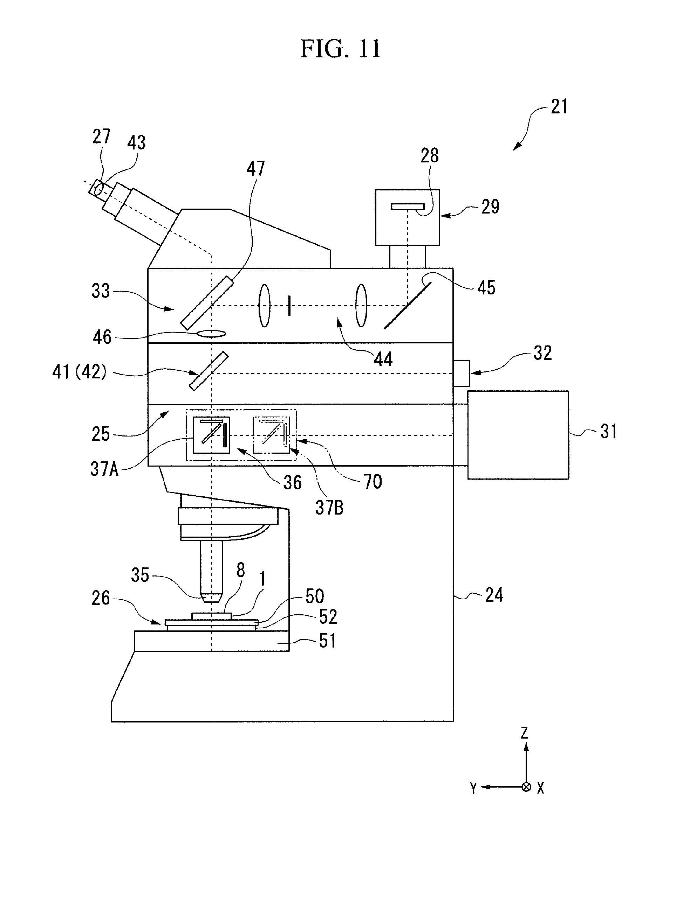

FIG. 10 is a schematic configuration diagram showing an example of the measurement device 20 according to the present embodiment. FIG. 11 is a schematic configuration diagram showing the measurement device body 21.

The light source device 31 can emit excitation light for generating the fluorescence from the irradiation object 1 and illumination light for observing the irradiation object 1. The light source device 31 can emit first excitation light having a wavelength λ1, second excitation light having a wavelength λ2, third excitation light having a wavelength λ4, fourth excitation light having a wavelength λ5, first illumination light having a wavelength λ3, and second illumination light having a wavelength λ6 (for example, λ4 < λ3 < λ1 < λ5 < λ2 = λ6).

For example, the light source device 31 can emit the first excitation light having a wavelength λ1 = 488 nm, the second excitation light having a wavelength λ2 = 647 nm, the third excitation light having a wavelength λ4 = 405 nm, the fourth excitation light having a wavelength λ5 = 532 nm, the first illumination light having a wavelength λ3 = 435 nm, and the second illumination light having a wavelength λ6 = 647 nm.

The light source device 31 is configured to be able to emit light beams in a plurality of wavelength bands by selectively switching the above-described light beams on the basis of a signal from the control device 22.

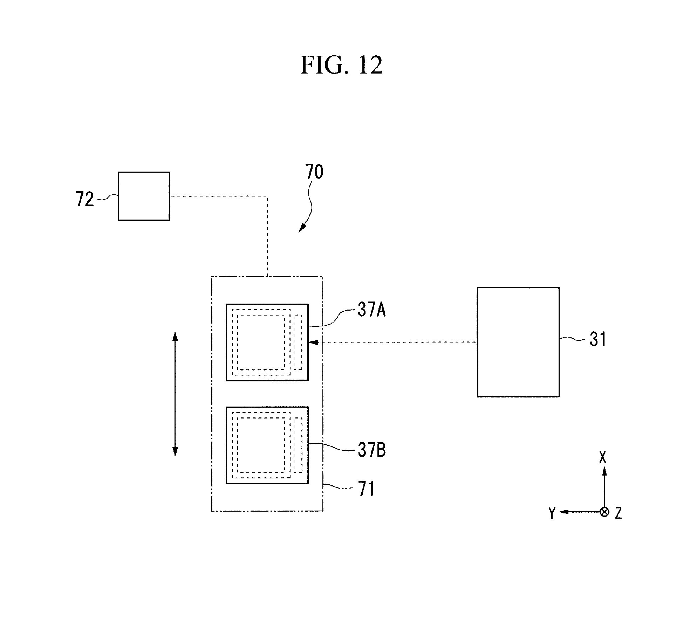

The first illumination optical system 36 illuminates the irradiation object 1 with excitation light in a predetermined wavelength band or illumination light in a predetermined wavelength band using the light emitted from the light source device 31. The first illumination optical system 36 includes an objective lens 35 on which light in a predetermined wavelength band (for example, predetermined excitation light, fluorescence, illumination light, or detection light) is incident, a filter block (first optical element) 37A and a filter block (second optical element) 37B that can separate the excitation light and the fluorescence from each other, and a switching section 70 shown in FIGS. 11 and 12. The filter block (first optical element) 37A, the filter block (second optical element) 37B, and the switching section 70 form an optical unit in the first illumination optical system 36.

The objective lens 35 emits excitation light and illumination light for illuminating the irradiation object 1 and detection light (infrared light) for detecting the position information of the irradiation object 1 in the Z direction. The first illumination optical system 36 illuminates the irradiation object 1, which is supported by the stage 26, with excitation light, illumination light, and detection light from a predetermined upper direction (Z direction). The switching section 70 disposes one of the filter block (first optical element) 37A and the filter block (second optical element) 37B selectively on the optical path between the light source device 31 and the objective lens 35.

FIG. 3 is a schematic diagram showing examples of the filter blocks 37A and 37B. As shown in FIG. 3, the filter block 37A includes a first filter 38A on which light from the light source device 31 is incident, a dichroic mirror (first separation section) 39A on which light transmitted through the first filter 38A is incident, and a second filter 40A on which light from the dichroic mirror 39A is incident. The filter block 37B includes a first filter 38B on which light from the light source device 31 is incident, a dichroic mirror (second separation section) 39B on which light transmitted through the first filter 38B is incident, and a second filter 40B on which light from the dichroic mirror 39B is incident.

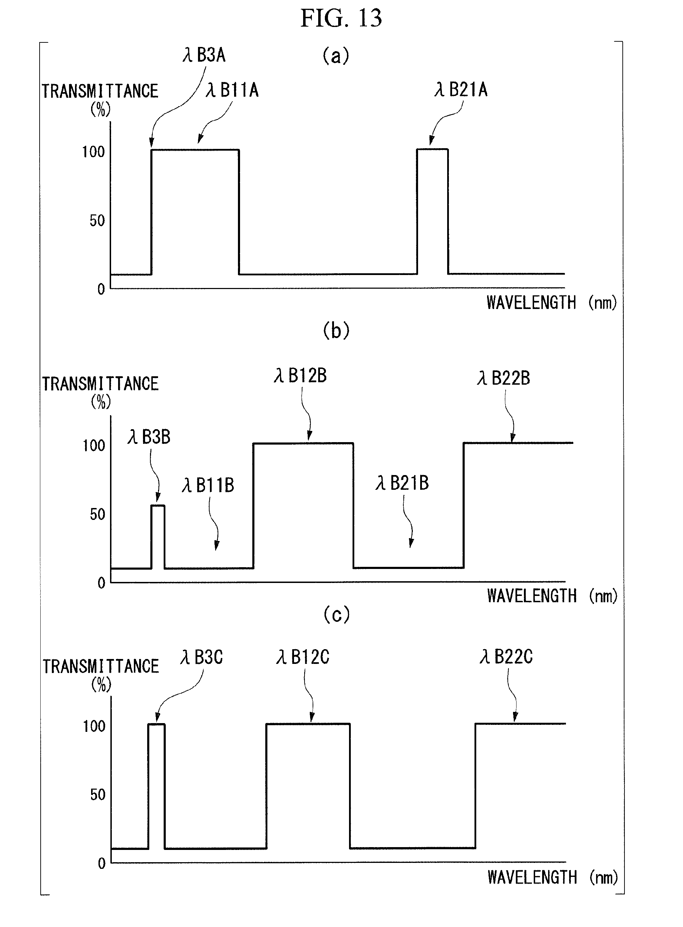

The first filter 38A is a wavelength selection optical element that selectively transmits the first illumination light and the first and second excitation light beams, which are required for the excitation of a fluorescent material, therethrough by removing light in some wavelength band of the light from the light source device 31 by reflection or absorption. FIG. 13(a) is a diagram showing the relationship between the wavelength of incident light and a transmittance in the first filter 38A. As shown in FIG. 13(a), the first filter 38A has an optical characteristic in which the transmittance in a wavelength band λB11A including the wavelength λ1 of the first excitation light emitted from the light source device 31, a wavelength band λB3A including the wavelength λ3 of the first illumination light, and a wavelength band λB21A including the wavelength λ2 of the second excitation light is 100%.

That is, the first filter 38A includes a band-pass filter that allows light in a predetermined wavelength band (first and second excitation light beams and first illumination light) to be transmitted therethrough and does not allow light in the other wavelength band to be transmitted therethrough. For example, the wavelength band λB11A is 440 nm to 505 nm. For example, the wavelength band λB21A is 615 nm to 640 nm. For example, the wavelength band λB3A is 425 nm to 440 nm that is continuous with the wavelength band λB11A. The light in a predetermined wavelength band (first and second excitation light beams and first illumination light) emitted from the light source device 31 and transmitted through the first filter 38A is incident on the dichroic mirror 39A that is an optical element.

The dichroic mirror 39A is a separation optical element that mainly separates the excitation light and the fluorescence from each other. In the present embodiment, the dichroic mirror 39A has an optical characteristic in which light in a wavelength band (for example, second wavelength band) λB11B including the wavelength λ1 of the first excitation light transmitted through the first filter 38A and light in a wavelength band (for example, seventh wavelength band) λB21B including the wavelength λ2 of the second excitation light transmitted through the first filter 38A are reflected and in which the first fluorescence in a wavelength band (for example, first wavelength band) λB12B generated from the irradiation object 1 by illumination of the first excitation light is transmitted at a high transmittance (for example, substantially 80% to 100%; a transmittance at which a sufficient S/N ratio is obtained) and the second fluorescence in a wavelength band (for example, eighth wavelength band) λB22B generated from the irradiation object 1 by illumination of the second excitation light is transmitted at a high transmittance (for example, substantially 80% to 100%; a transmittance at which a sufficient S/N ratio is obtained).

In addition, the dichroic mirror 39A has an optical characteristic in which light in a third wavelength band λB3B including the wavelength λ3 of the first illumination light is partially transmitted and partially reflected. In addition, the dichroic mirror 39A has an optical characteristic in which detection light emitted from the detection device 32 is transmitted. For example, these optical characteristics are obtained by a multilayer film (not shown) provided in the dichroic mirror 39A.

FIG. 13(b) is a diagram showing the relationship between the wavelength of incident light and a transmittance as optical characteristics of the dichroic mirror 39A. As shown in FIG. 13(b), the dichroic mirror 39A has an optical characteristic in which light in the wavelength band λB12B, which includes the wavelength of the first fluorescence generated from the irradiation object 1 by illumination of the first excitation light, and light in a wavelength band λB22B, which includes the wavelength of infrared light that is the detection light of the detection device 32 and the wavelength of the second fluorescence generated from the irradiation object 1 by illumination of the second excitation light, are transmitted at a high transmittance of about 100% (for example, a transmittance of 100% or a transmittance of 80% to 100%).

The dichroic mirror 39A also has an optical characteristic in which the transmittance for light in the third wavelength band λB3B including the wavelength of the first illumination light is about 50% (for example, about 50% or 40% to 60%) and accordingly the light in the third wavelength band λB3B is partially transmitted and partially reflected.

For example, the wavelength band λB11B is 440 nm to 505 nm. For example, the wavelength band λB21B is 570 nm to 650 nm. For example, the wavelength band λB12B is 505 nm to 570 nm. For example, the wavelength band λB22B is 650 nm or higher. For example, the wavelength band λB3B is 425 nm to 440 nm. In the dichroic mirror 39A, the wavelength band λB11B and the wavelength band λB128 are continuous wavelength bands, and the wavelength band λB21B and the wavelength band λB22B are continuous wavelength bands.

For example, the dichroic mirror 39A has a transmittance of about 50% for the light in the wavelength band λB3B of about 425 nm to 440 nm including the wavelength of the first illumination light. The dichroic mirror 39A has a high reflectance of about 100% (for example, a reflectance of 100% or a reflectance of 80% to 100%) for the light in the wavelength band λB11B of about 440 nm to 505 nm including the wavelength of the first excitation light. The dichroic mirror 39A has a high transmittance of about 100% for the light in the wavelength band λB12B of about 505 nm to 570 nm including the wavelength of the first fluorescence.

The dichroic mirror 39A has a high reflectance of about 100% (for example, a reflectance of 100% or a reflectance of 80% to 100%) for the light in the wavelength band λB21B of about 615 nm to 640 nm including the wavelength of the second excitation light. The dichroic mirror 39A has a high transmittance of about 100% for the light in the wavelength band λB22B of 650 nm or higher including the wavelength of the second fluorescence (and infrared light).

The second filter 40A is a wavelength selection optical element having an optical characteristic in which the first illumination light and the above-described first and second fluorescent light beams from the irradiation object 1 are separated from unnecessary light (scattered light or the like), which has a wavelength other than the first illumination light and the first and second fluorescent light beams, and the first illumination light and the first and second fluorescent light beams are selectively transmitted and infrared light emitted from the detection device 32 is transmitted.

FIG. 13(c) is a diagram showing the relationship between the wavelength of incident light and a transmittance in the second filter 40A. As shown in FIG. 13(c), the second filter 40A has an optical characteristic in which light in a wavelength band λB12C, which includes the wavelength of the first fluorescence, and light in a wavelength band λB22C, which includes the wavelength of the second fluorescence generated from the irradiation object 1 by illumination of the second excitation light (and the wavelength of infrared light), are transmitted at a transmittance of 100%. The second filter 40A has an optical characteristic in which light in a wavelength band λB3C including the wavelength of the first illumination light is transmitted at a transmittance of 100%.

The first and second fluorescent light beams and the first illumination light transmitted through the second filter 40A are guided to the imaging device 28 of the observation camera 29 through the imaging optical system 33.

For example, the wavelength band λB12C is 515 nm to 565 nm. For example, the wavelength band λB22C is 660 nm or higher. For example, the wavelength band λB3C is 425 nm to 440 nm.

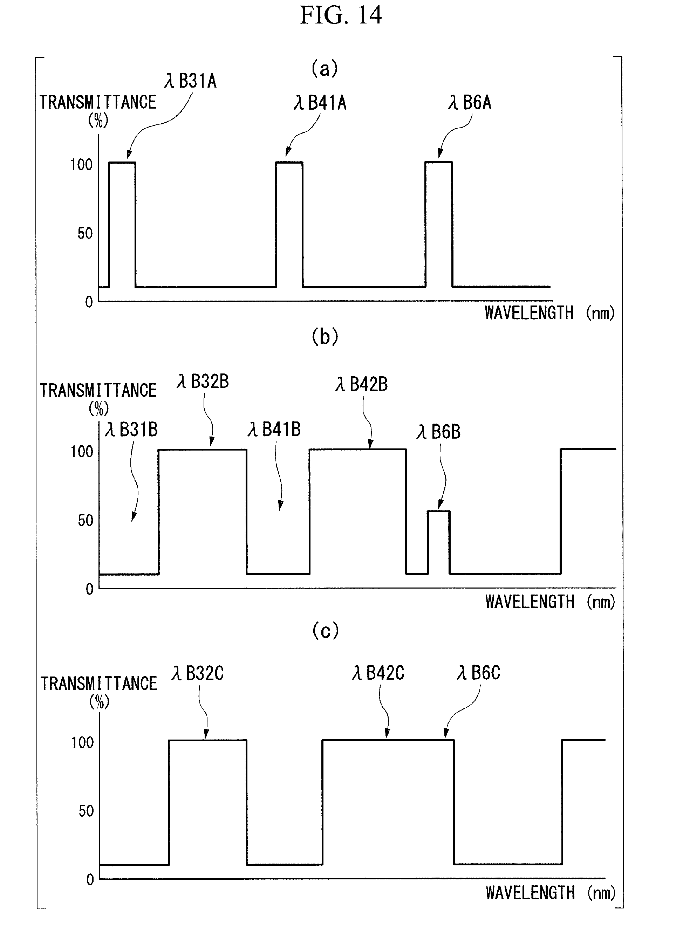

The first filter 38B that forms the filter block 37B is a wavelength selection optical element that selectively transmits the second illumination light and the third and fourth excitation light beams, which are required for the excitation of a fluorescent material, therethrough by removing light in some wavelength band of the light from the light source device 31 by reflection or absorption. FIG. 14(a) is a diagram showing the relationship between the wavelength of incident light and a transmittance in the first filter 38B.

As shown in FIG. 14(a), the first filter 38B has an optical characteristic in which the transmittance in a wavelength band λB31A including the wavelength λ4 of the third excitation light emitted from the light source device 31, a wavelength band λB41A including the wavelength λ5 of the fourth excitation light, and a wavelength band λB6A including the wavelength λ6 of the second illumination light is 100%. For example, the first filter 38B includes a band-pass filter that allows light in a predetermined wavelength band (third and fourth excitation light beams and second illumination light) to be transmitted therethrough and does not allow light in the other wavelength band to be transmitted therethrough. For example, the wavelength band λB31A is 400 nm to 420 nm. For example, the wavelength band λB41A is 525 nm to 545 nm. For example, the wavelength band λB6A is 635 nm to 655 nm.

The light in a predetermined wavelength band (third and fourth excitation light beams and second illumination light) emitted from the light source device 31 and transmitted through the first filter 38B is incident on the dichroic mirror 39B that is an optical element.

The dichroic mirror 39B is a separation optical element that mainly separates the excitation light and the fluorescence from each other. In the present embodiment, the dichroic mirror 39B has an optical characteristic in which light in a wavelength band (for example, fifth wavelength band) λB31B including the wavelength λ4 of the third excitation light transmitted through the first filter 38B and light in a wavelength band (for example, ninth wavelength band) λB41B including the wavelength λ5 of the fourth excitation light transmitted through the first filter 38B are reflected and in which the third fluorescence in a wavelength band (for example, fourth wavelength band) λB32B generated from the irradiation object 1 by illumination of the third excitation light is transmitted at a high transmittance (for example, substantially 80% to 100%; a transmittance at which a sufficient S/N ratio is obtained) and the fourth fluorescence in a wavelength band (for example, tenth wavelength band) λB42B generated from the irradiation object 1 by illumination of the fourth excitation light is transmitted at a high transmittance (for example, substantially 80% to 100%; a transmittance at which a sufficient S/N ratio is obtained).

In addition, the dichroic mirror 39B has an optical characteristic in which light in a sixth wavelength band λB6B including the wavelength λ6 of the second illumination light is partially transmitted and partially reflected. In addition, the dichroic mirror 39B has an optical characteristic in which detection light emitted from the detection device 32 is transmitted. For example, these optical characteristics are obtained by a multilayer film (not shown) provided in the dichroic mirror 39B.

FIG. 14(b) is a diagram showing the relationship between the wavelength of incident light and a transmittance as optical characteristics of the dichroic mirror 39B. As shown in FIG. 14(b), the dichroic mirror 39B has an optical characteristic in which light in the wavelength band λB32B including the wavelength of the third fluorescence generated from the irradiation object 1 by illumination of the third excitation light, light in the wavelength band λB42B including the wavelength of the fourth fluorescence generated from the irradiation object 1 by illumination of the fourth excitation light, and infrared light (for example, infrared light having a wavelength of 770 nm) that is the detection light of the detection device 32 are transmitted at a high transmittance of about 100% (for example, a transmittance of 100% or a transmittance of 80% to 100%).

The dichroic mirror 39B also has an optical characteristic in which the transmittance for light in the sixth wavelength band λB6B including the wavelength of the second illumination light is about 50% (for example, about 50%, or 40% to 60%) and accordingly the light in the sixth wavelength band λB6B is partially transmitted and partially reflected.

For example, the wavelength band λBB31B is 400 nm to 430 nm. For example, the wavelength band λB41B is 500 nm to 555 nm. For example, the wavelength band λB32B is 430 nm to 500 nm. For example, the wavelength band λB42B is 555 nm to 620 nm. For example, the wavelength band λB6B is 635 nm to 655 nm.

For example, in the dichroic mirror 39B, the wavelength band λB31B and the wavelength band λB32B are continuous wavelength bands, and the wavelength band λB41B and the wavelength band λB42B are continuous wavelength bands.

Therefore, the wavelength band λB32B in the dichroic mirror 39B overlaps a part of the wavelength band λB11B in the dichroic mirror 39A. The wavelength band λB41B in the dichroic mirror 39B overlaps a part of the wavelength band λB12B in the dichroic mirror 39A. The wavelength band λB42B in the dichroic mirror 39B overlaps a part of the wavelength band λB21B in the dichroic mirror 39A.

For example, the dichroic mirror 39B has a transmittance of about 50% for the light in the wavelength band λB6B of about 635 nm to 655 nm including the wavelength of the second illumination light. The dichroic mirror 39B has a high reflectance of about 100% (for example, a reflectance of 100% or a reflectance of 80% to 100%) for the light in the wavelength band λB31B of about 400 nm to 430 nm including the wavelength of the third excitation light. The dichroic mirror 39B has a high transmittance of about 100% for the light in the wavelength band λB32B of about 430 nm to 500 nm including the wavelength of the third fluorescence.

The dichroic mirror 39B has a high reflectance of about 100% (for example, a reflectance of 100% or a reflectance of 80% to 100%) for the light in the wavelength band λB41B of about 500 nm to 555 nm including the wavelength of the fourth excitation light. The dichroic mirror 39B has a high transmittance of about 100% for the light in the wavelength band λB42B of 555 nm to 620 nm including the wavelength of the fourth fluorescence.

The second filter 40B is a wavelength selection optical element having an optical characteristic in which the second illumination light and the above-described third and fourth fluorescent light beams from the irradiation object 1 are separated from unnecessary light (scattered light or the like), which has a wavelength other than the second illumination light and the third and fourth fluorescent light beams, and the second illumination light and the third and fourth fluorescent light beams are selectively transmitted and infrared light emitted from the detection device 32 is transmitted.

FIG. 14(c) is a diagram showing the relationship between the wavelength of incident light and a transmittance in the second filter 40B. As shown in FIG. 14(c), the second filter 40B has an optical characteristic in which light in a wavelength band λB32C, which includes the wavelength of the third fluorescence, and light in a wavelength band λB42C, which includes the wavelength of the fourth fluorescence generated from the irradiation object 1 by illumination of the fourth excitation light, are transmitted at a transmittance of 100%. The second filter 40B has an optical characteristic in which light in a wavelength band λB6C, which is continuous with the wavelength band λB42C and includes the wavelength of the second illumination light, is transmitted at a transmittance of 100%.

The third and fourth fluorescent light beams and the second illumination light transmitted through the second filter 40B are guided to the imaging device 28 of the observation camera 29 through the imaging optical system 33.

For example, the wavelength band λB32C is 400 nm to 500 nm. For example, the wavelength band λB42C is 565 nm to 635 nm. For example, the wavelength band λB6C is 635 nm to 660 nm.

The switching section 70 disposes one of the filter blocks 37A and 37B on the optical path of light emitted from the light source device 31 by selective switching. As shown in FIG. 12, the switching section 70 includes a holding portion 71 that integrally holds the filter blocks 37A and 37B and a linear movement portion 72 that can move the holding portion in the X-axis direction. The operation of the linear movement portion 72 is controlled by the control device 22.

In addition, although the filter blocks 37A and 37B are illustrated to be arrayed along the Y-axis direction in FIGS. 10 and 11 for the sake of convenience, the filter blocks 37A and 37B are arrayed along the X-axis direction.

The imaging optical system 33 includes a plurality of optical elements, such as the objective lens 35 disposed at a position facing the irradiation object 1 supported by the stage 26, an eyepiece 43, a magnification conversion optical system 44, a reflecting mirror 45, and an objective lens (second objective lens) 46 of an imaging system. The imaging optical system 33 forms an image of the irradiation object 1 near the imaging device 28 and the eyepiece unit 27.

The objective lens 35 is an optical element closest to the object surface of the imaging optical system 33 among a plurality of optical elements of the imaging optical system 33. For example, the objective lens 35 is disposed on the optical path along which the light in the first wavelength band to the light in the sixth wavelength band described above (for example, light in the wavelength band λB11B, light in the wavelength band λB12B, light in the wavelength band λB31B, light in the wavelength band λB32B, and the like) can be incident.

In addition, as shown in FIGS. 10 and 11, in the present embodiment, the stage 26 includes a support member 50 that supports the irradiation object 1 and a driving device 52 that moves the support member 50 on a base member 51. The support member 50 is movable within the XY plane and in the Z direction on the base member 51. The stage 26 (driving device 52) and the control device 22 are connected to each other by a cable 49. The control device 22 can move the support member 50, which supports the irradiation object 1, within the XY plane using the driving device 52.

The control device 22 performs overall control, such as selection and switching of a light source in the light source device 31 described above, Z-direction position control of the stage 26 based on the detection result of the detection device 32, driving control of the stage 26, and switching between the filter blocks 37A and 37B by the switching section 70.

In addition, the image information captured by the imaging device 28 is input to the control device 22. The control device 22 corrects the image information on the basis of the image information captured by the imaging device 28, types of the first and second illumination light beams when obtaining the image information, and error information occurring due to switching between the filter blocks 37A and 37B by the switching section 70 (to be described later).

Next, a method for measuring the irradiation object 1 using the measurement device 20 having the above-described configuration will be described. In the following explanation, explanation of components, which are the same as or equivalent to those in the embodiment described above, will be simplified or omitted.

First, an example of the irradiation object 1 to be measured will be described with reference to FIGS. 6A and 6B.

FIG. 6A is a diagram showing the shape of the irradiation object 1 held on the support member 50. FIG. 6B is an enlarged sectional view showing a main portion of the irradiation object 1.

As shown in FIG. 6A, each spot S is formed in a circular shape in plan view, for example. Various objects to be measured B that generate photoresponsive materials by predetermined reaction are disposed in each spot S (refer to FIG. 6B). From the generated photoresponsive materials, for example, first to fourth fluorescent light beams are generated. The generated fluorescent light beams are emitted from the surface of the irradiation object 1 in each spot S.

For example, in the object to be measured B, when the irradiation object 1 has a biomolecule array, biomolecules (for example, biomolecules that are basic materials forming a living body) are arranged as a probe, and a fluorescently-labeled specimen (target) obtained by injecting whole blood, serum, or the like into the biomolecule array and then performing washing is arranged.

For example, when measuring the irradiation object 1 by irradiating the first excitation light having a wavelength λ1 from the light source device 31, the control device 22 in the measurement device 20 controls the linear movement portion 72 of the switching section 70 first to selectively dispose the filter block 37A on the optical path of the light emitted from the light source device 31 as shown in FIG. 12. After the filter block 37A is disposed on the optical path of the light emitted from the light source device 31, the position information of the surface 8 of the irradiation object 1 in the Z direction is detected using the infrared light emitted from the detection device 32 shown in FIG. 11.

The infrared light emitted from the detection device 32 is reflected on the surface 8 of the irradiation object 1 after reflection in the wavelength selection filter 42, transmission in the second filter 40A of the filter block 37A, transmission in the dichroic mirror 39A, and transmission in the objective lens 35, and is received by the detection device 32 along the same optical path (common optical path). The control device 22 positions the stage 26 (that is, the surface 8 of the irradiation object 1) at a predetermined position in the Z direction on the basis of the Z-direction position information detected by the detection device 32.

Then, when the surface 8 of the irradiation object 1 is positioned at a predetermined position in the Z direction, the measurement device 20 moves the irradiation object 1 (stage 26) to a first imaging region, in which predetermined (predetermined number of) spots S can be measured, within the XY plane.

Then, the measurement device 20 selects and emits the first illumination light from the light source device 31 to illuminate the surface 8 of the irradiation object 1. The first illumination light emitted from the light source device 31 is transmitted through the first filter 38A and is then separated into reflected light (partial reflection light) and transmitted light (partial transmission light) by the dichroic mirror 39A to be partially reflected and partially transmitted. The first illumination light that has been partially reflected illuminates the surface 8 of the irradiation object 1 after being transmitted through the objective lens 35.

The illumination light reflected on the surface 8 of the irradiation object 1 is incident on the optical element 47 after being transmitted sequentially through the objective lens 35, the dichroic mirror 39A and the second filter 40A of the filter block 37A, the wavelength selection filter 42, and the objective lens 46.

Then, some of the illumination light incident on the optical element 47 is transmitted through the optical element 47, is guided to the eyepiece 43, and is emitted from the eyepiece unit 27. Thus, the image of the spot S of the irradiation object 1 is formed near the eyepiece unit 27. In addition, some of the illumination light incident on the optical element 47 is reflected by the optical element 47, is guided to the magnification conversion optical system 44 of the imaging optical system 33, and is incident on the imaging device 28 of the observation camera 29 through the reflecting mirror 45.

As a result, as shown in FIG 7, in the field of view FA of the size corresponding to the magnification set by the magnification conversion optical system 44 and the imaging characteristic of the imaging device 28, an image of the plurality of (in FIG. 7, 42) spots S and the alignment mark AM is formed in the imaging device 28. The imaging device 28 acquires the image information of the spot S (light receiving information of the spot S) and the image information (position information) of the alignment mark AM. The control device 22 stores the image information of the spot S, and calculates the arrangement (X, Y, θZ) of the spot S group in the field of view FA from the position information of the alignment mark AM and stores it.

Then, the measurement device 20 switches the light emitted from the light source device 31 to, for example, first excitation light in order to perform fluorescence measurement. The first excitation light emitted from the light source device 31 is reflected (totally reflected) by the dichroic mirror 39A after being transmitted through the first filter 38A, and illuminates the surface 8 of the irradiation object 1 after being transmitted through the objective lens 35.

Among the spots S illuminated by the first excitation light, in the spot S in which the material of the probe (biomolecules) and the material of the target (specimen) are bonded to each other, the first fluorescence is generated at a wavelength included in the wavelength band λB12B. The generated first fluorescence is incident on the optical element 47 after transmission through the objective lens 35, transmission through the dichroic mirror 39A of the filter block 37A, transmission through the second filter 40A, transmission through the wavelength selection filter 42, and transmission through the objective lens 46 are sequentially performed.

In addition, in the same manner as in the measurement of the spot S using the first illumination light, the image of the spot S that has generated the first fluorescence is formed near the eyepiece unit 27, and is also formed in the field of view FA of the imaging device 28 as shown in FIG. 8. The imaging device 28 acquires the image information of the spot S (light receiving information of the spot S) that has generated the first fluorescence.

The spot S' indicated by the two-dot chain line in FIG. 8 does not generate the first fluorescence, and is not recognized as an imaging signal by the imaging device 28. In this case, the measurement device 20 can measure the address of the spot S, which has generated the first fluorescence, in the irradiation object 1, that is, the address of the spot S, in which the material of the probe and the material of the target are bonded to each other, in the irradiation object 1 by matching the result (observation result) of imaging of the spot S using the first illumination light shown in FIG. 7 with the result (fluorescence result) of imaging of the spot S, which has generated the first fluorescence, shown in FIG. 8.

In this case, in image measurement of the spot S using the first illumination light and image measurement of the spot S using the first fluorescence, the optical path of the first illumination light from the light source device 31 to the imaging device 28 is the same (common optical path) as the optical path of the first excitation light from the light source device 31 to the irradiation object 1 and the optical path of the first fluorescence, which is generated by irradiation of the first excitation light, from the irradiation object 1 to the imaging device 28.

For this reason, the arrangement of the spot S group in the field of view FA of the imaging device 28 at the time of image measurement using the first illumination light is the same as that at the time of image measurement using the first fluorescence. Therefore, the result of imaging of the spot S using the first illumination light can be accurately matched with the result of imaging of the spot S that has generated the first fluorescence.

Then, when fluorescence measurement (second fluorescence measurement) using the second excitation light is also performed according to the fluorescence characteristics of the material of the probe and the material of the target, the measurement device 20 performs the above-described measurement (first fluorescence measurement) using the first fluorescence and then switches the light emitted from the light source device 31 to the second excitation light to perform the same measurement processing as in the case using the first excitation light.

On the other hand, when fluorescence measurement (third fluorescence measurement) using the third excitation light is also performed according to the fluorescence characteristics of the material of the probe and the material of the target, the control device 22 controls the linear movement portion 72 of the switching section 70 to selectively dispose the filter block 37B on the optical path of the light emitted from the light source device 31. After the filter block 37B is disposed on the optical path of the light emitted from the light source device 31, the second illumination light is selected and emitted from the light source device 31 to illuminate the surface 8 of the irradiation object 1.

The second illumination light emitted from the light source device 31B is transmitted through the first filter 38B and is then separated into reflected light (partial reflection light) and transmitted light (partial transmission light) by the dichroic mirror 39B to be partially reflected and partially transmitted. The second illumination light that has been partially reflected illuminates the surface 8 of the irradiation object 1 after being transmitted through the objective lens 35. The second illumination light reflected on the surface 8 of the irradiation object 1 is incident on the optical element 47 after being transmitted sequentially through the objective lens 35, the dichroic mirror 39B and the second filter 40B of the filter block 37B, the wavelength selection filter 42, and the objective lens 46.

Some of the illumination light incident on the optical element 47 is transmitted through the optical element 47, is guided to the eyepiece 43, and is emitted from the eyepiece unit 27. In addition, some of the illumination light incident on the optical element 47 is reflected by the optical element 47, is guided to the magnification conversion optical system 44 of the imaging optical system 33, and is incident on the imaging device 28 of the observation camera 29 through the reflecting mirror 45.

Then, the measurement device 20 switches the light emitted from the light source device 31 to, for example, the third excitation light in order to perform fluorescence measurement. The third excitation light emitted from the light source device 31 is reflected by the dichroic mirror 39B after being transmitted through the first filter 38B, and illuminates the surface 8 of the irradiation object 1 after being transmitted through the objective lens 35.

Among the spots S illuminated by the third excitation light, in the spot S in which the material of the probe (biomolecules) and the material of the target (specimen) are bonded to each other, the third fluorescence is generated at a wavelength included in the wavelength band λB32B. The generated third fluorescence is incident on the optical element 47 after being transmitted sequentially through the objective lens 35, the dichroic mirror 39B of the filter block 37B, the second filter 40B, and the wavelength selection filter 42.

Some of the third fluorescence incident on the optical element 47 is guided to the eyepiece 43, and the other is incident on the imaging device 28 of the observation camera 29 through the reflecting mirror 45, thereby performing fluorescence measurement processing.

In addition, in the same manner as in the measurement of the spot S using the second illumination light, the image of the spot S that has generated the third fluorescence is formed in the field of view FA of the imaging device 28. The imaging device 28 acquires the image information of the spot S (light receiving information of the spot S) that has generated the third fluorescence.

The measurement device 20 can measure the address of the spot S, which has generated the third fluorescence, in the irradiation object 1, that is, the address of the spot S, in which the material of the probe and the material of the target are bonded to each other, in the irradiation object 1 by matching the result (observation result) of imaging of the spot S using the second illumination light with the result (fluorescence result) of imaging of the spot S that has generated the third fluorescence.

Also in image measurement of the spot S using the second illumination light and image measurement of the spot S using the third fluorescence, the optical path of the second illumination light from the light source device 31 to the imaging device 28 is the same (common optical path) as the optical path of the third excitation light from the light source device 31 to the irradiation object 1 and the optical path of the third fluorescence, which is generated by irradiation of the third excitation light, from the irradiation object 1 to the imaging device 28.

For this reason, the arrangement of the spot S group in the field of view FA of the imaging device 28 at the time of image measurement using the third excitation light is the same as that at the time of image measurement using the third fluorescence. Therefore, the result of imaging of the spot S using the second illumination light can be accurately matched with the result of imaging of the spot S that has generated the third fluorescence.

Then, when fluorescence measurement (fourth fluorescence measurement) using the fourth excitation light is also performed according to the fluorescence characteristics of the material of the probe and the material of the target, the measurement device 20 performs the above-described measurement (third fluorescence measurement) using the third fluorescence and then switches the light emitted from the light source device 31 to the fourth excitation light to perform the same measurement processing as in the case using the third excitation light.

After the measurement of the first imaging region in the irradiation object 1 is completed, the measurement device 20 moves the irradiation object 1 to a second imaging region adjacent to the first imaging region. The second imaging region is set at a position where a part of the alignment mark AM imaged in the first imaging region is imaged in the field of view FA of the imaging device 28.

In addition, the measurement device 20 performs measurement of the spot S and the alignment mark AM using the first illumination light and measurement of the spot S using the first fluorescence in the same manner as in the above-described imaging processing on the first imaging region, and further performs measurement of the spot S and the alignment mark AM using the second illumination light and measurement of the spot S using at least one of the third and fourth fluorescent light beams when necessary.

Then, after performing measurement processing on a plurality of imaging regions until the measurement of all spots S is completed, the control device 22 performs screen combination of the measurement result of the spot S using the first illumination light and also performs screen combination of the measurement result of the spot S using each of the first and second fluorescent light beams from the measurement result of the alignment mark AM in each imaging region. By comparing the screen combination results, it is possible to measure the address of the spot S, in which the material of the probe and the material of the target are bonded to each other, in the irradiation object 1.

When measurement processing using at least one of the third and fourth fluorescent light beams has been performed, the control device 22 performs screen combination of the measurement result of the spot S using the second illumination light and also performs screen combination of the measurement result of the spot S using each of the third and fourth fluorescent light beams from the measurement result of the alignment mark AM in each imaging region. By comparing the screen combination results, it is possible to measure the address of the spot S, in which the material of the probe and the material of the target are bonded to each other, in the irradiation object 1.

When image shift occurs between the image measured using the first illumination light and the image measured using the second illumination light, the control device 22 holds a first correction value that is for correcting the amount of positional shift occurring between the image measured using the first illumination light and the image measured using the second illumination light and that is calculated in advance by experiment, simulation, and the like. In addition, the control device 22 holds a second correction value for correcting an error occurring due to switching between the filter blocks 37A and 37B by the switching section 70.

In addition, when performing fluorescence measurement using both of the filter blocks 37A and 37B, the control device 22 may be configured to include a correction unit that corrects a measurement result using the first and second correction values between the measurement result of at least one of the first and second fluorescent light beams and the measurement result of at least one of the third and fourth fluorescent light beams. Then, the control device 22 can obtain a measurement result in which factors of errors caused by the difference of the wavelength of the illumination light and switching between the filter blocks 37A and 37B have been reduced.

The control device 22 performs switching between the used filter blocks 37A and 37B after measuring a specific mark (for example, the alignment mark AM) of the irradiation object 1 with illumination light using one of the filter blocks 37A and 37B, calculates the amount of error occurring due to the switching between the filter blocks 37A and 37B on the basis of a result when measuring the same specific mark with illumination light using the other of the filter blocks 37A and 37B, and calculates the second correction value for correcting the amount of error.

In addition, the control device 22 can obtain a measurement result, in which error factors caused by the difference of the wavelength of the illumination light and switching between the filter blocks 37A and 37B have been reduced, by performing calculation and correction using the first and second correction values between the measurement result of at least one of the first and second fluorescent light beams and the measurement result of at least one of the third and fourth fluorescent light beams.

As described above, even when any one of the filter blocks 37A and 37B is used, the measurement device 20 of the present embodiment can measure both the image information of the illumination light and the image information of the fluorescence in a state where the filter blocks 37A and 37B are used. Therefore, the measurement device 20 of the present embodiment can suppress the degradation of measurement accuracy, which is caused by arrangement error, operating error, and the like occurring at the time of filter block switching for acquiring the image information of the illumination light and the image information of the fluorescence, and can perform a measurement operation at high speed.

In addition, in the measurement device 20 of the present embodiment, a plurality of filter blocks 37A and 37B for which the fluorescence wavelengths to be measured are different are provided so as to be switchable. Accordingly, it is possible to easily realize multi-color fluorescence measurement in which the accuracy degradation described above is suppressed.

In addition, in the measurement device 20 of the present embodiment, even when there is a possibility that an error will occur in the measurement result due to switching between the filter blocks 37A and 37B, it is possible to realize high-accuracy fluorescence measurement since the measurement result is corrected using the correction value calculated in advance by the control device 22 or the correction value obtained by measuring the irradiation object 1.

In addition, in the measurement device 20 of the present embodiment, even when the wavelength of the first illumination light is different from the wavelength of the second illumination light, one of the measurement result of the first and second fluorescent light beams and the measurement result of the third and fourth fluorescent light beams is corrected on the basis of the amount of positional shift that occurs between the image measured using the first illumination light and the image measured using the second illumination light and that has been calculated in advance. Therefore, it is possible to realize high-accuracy measurement processing on the irradiation object 1 by reducing the influence of the image shift occurring between the image measured using the first illumination light and the image measured using the second illumination light.

In addition, in the measurement device 20 of the present embodiment, since the dichroic mirrors 39A and 39B also allow infrared light, which is used when the detection device 32 detects the position of the irradiation object 1 in the Z direction, to be transmitted therethrough, it is possible to efficiently detect the position of the irradiation object 1 in the Z direction.

In addition, in the measurement device of the present embodiment, wavelength selection of light incident on the dichroic mirror 39A from the light source device 31 is performed using the first filter 38A, and wavelength selection of light emitted through the dichroic mirror 39A after being incident on the dichroic mirror 39A is performed using the second filter 40A. In the measurement device of the present embodiment, wavelength selection of light incident on the dichroic mirror 39B from the light source device 31 is performed using the first filter 38B, and wavelength selection of light emitted through the dichroic mirror 39B after being incident on the dichroic mirror 39B is performed using the second filter 40B.

Therefore, in the measurement device of the present embodiment, it is possible to effectively suppress the degradation of measurement accuracy of the spot S since it is possible to suppress a situation where light other than the light emitted from the light source device 31 and the first to fourth fluorescent light beams, which are generated from the irradiation object 1 by irradiation of the first to fourth excitation light beams, is received by the imaging device 28 and becomes noise (for example, crosstalk).

In addition, in the present embodiment, when the wavelength band of the first excitation light and the first fluorescence, the wavelength band of the second excitation light and the second fluorescence, the wavelength band of the third excitation light and the third fluorescence, and the wavelength band of the fourth excitation light and the fourth fluorescence are arranged in order of the size of the wavelength band, one of the dichroic mirrors 39A and 39B corresponds to the odd-numbered wavelength band and the other of the dichroic mirrors 39A and 39B corresponds to the even-numbered wavelength band. Accordingly, since it is possible to increase the wavelength band to which each of the dichroic mirrors 39A and 39B corresponds, it is possible to effectively acquire the image information of the irradiation object 1.

In particular, in the present embodiment, since the optical characteristics of the dichroic mirrors 39A and 39B are set such that a part of either the wavelength band of the first excitation light and the first fluorescence or the wavelength band of the second excitation light and the second fluorescence overlaps a part of the wavelength band of the third excitation light and the third fluorescence or a part of the wavelength band of the fourth excitation light and the fourth fluorescence, it is possible to set the wavelength band, to which each of the dichroic mirrors 39A and 39B corresponds, more widely. As a result, it is possible to prevent a reduction in the amount of excitation light and the amount of fluorescence in the sensor 28.

In addition, in the measurement device of the present embodiment, since the wavelength of the second illumination light and the wavelength of the second excitation light are the same, it is not necessary to prepare the light source of the second illumination light or the light source of the second excitation light separately. This can contribute to cost reduction and miniaturization of the device.

### <Fourth embodiment>

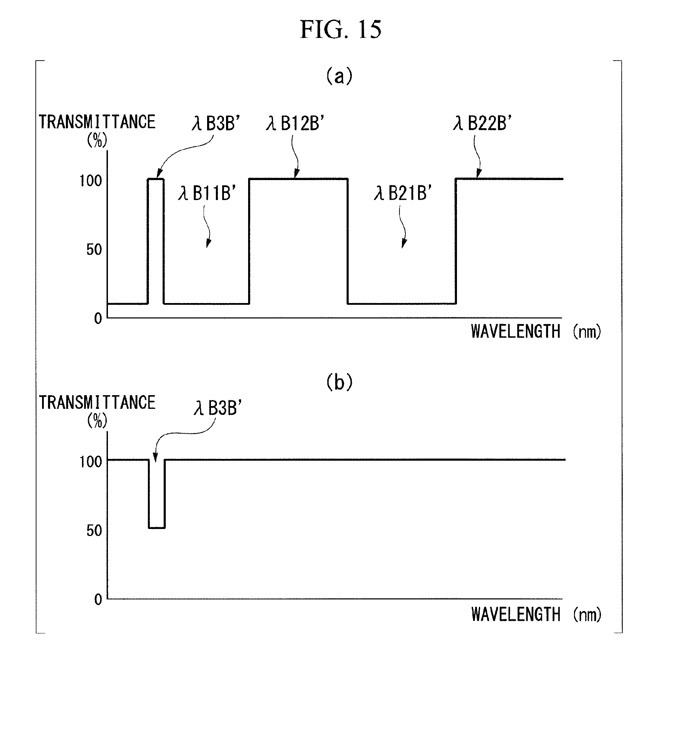

Next, a fourth embodiment of the measurement device 20 will be described with reference to FIG. 15.

In this diagram, the same components as in the third embodiment shown in FIGS. 10 to 14 are denoted by the same reference numerals, and explanation thereof will be omitted or simplified.

The dichroic mirror (39A and 39B) described in the above third embodiment has an optical characteristic of reflecting or transmitting the light in a predetermined wavelength band therefrom or therethrough, and the optical characteristic is obtained by a film (for example, a multilayer film) provided on one surface (one of a plurality of surfaces or one of a pair of surfaces) of the dichroic mirror.

In the present embodiment, an example where the above-described optical characteristic is obtained by the film provided on each of two surfaces (two of a plurality of surfaces or both of a pair of surfaces) of the dichroic mirror will be described.

Here, as an example, an example in which the optical characteristics of the dichroic mirror 39A shown in FIG. 13(b) are obtained by first and second films provided on each of the two surfaces of the element will be described.

FIG. 15(a) is a diagram showing the relationship between the transmittance and the wavelength of light incident on a first film provided on a surface, on which light emitted from the light source device 31 is first incident, of the dichroic mirror 39A. FIG. 15(b) is a diagram showing the relationship between the transmittance and the wavelength of light incident on a second film provided on the opposite surface to the surface, on which the first film is provided, of the dichroic mirror 39A.

As shown in FIG. 15(a), the first film has an optical characteristic in which the transmittance in the same wavelength band λB3B' as the third wavelength band λB3B including the wavelength of the first illumination light, the same wavelength band λB12B' as the wavelength band λB12B including the wavelength of the first fluorescence, and the same wavelength band λB22B' as the wavelength band λB22B including the wavelength of infrared light that is the detection light of the detection device 32 and the wavelength of the second fluorescence is a high transmittance of about 100% (for example, a transmittance of 100% or a transmittance of 80% to 100%), and has an optical characteristic in which the reflectance in the same wavelength band λB11B' as the wavelength band λB11B including the wavelength of the first excitation light and the same wavelength band λB21B' as the wavelength band λB21B including the wavelength of the second excitation light is a high reflectance of about 100%. Accordingly, the first film has an optical characteristic including two kinds of transmittances.

As shown in FIG. 15(b), the second film has an optical characteristic in which the transmittance in the same wavelength band λB3B' as the third wavelength band λB3B including the wavelength of the first illumination light is about 50% (for example, about 50%, or 40% to 60%), and has an optical characteristic in which the transmittance in the other wavelength band is a high transmittance of about 100% (for example, a transmittance of 100% or a transmittance of 80% to 100%). Accordingly, the second film has an optical characteristic including two kinds of transmittances.

For example, of the light incident on the first film first, light in a wavelength band reflected according to the optical characteristics of the first film is reflected without reaching the second film, and light in a wavelength band transmitted according to the optical characteristics of the first film reaches the second film and is transmitted through or partially reflected from the second film according to the optical characteristics of the second film. Therefore, it is possible to obtain the optical characteristics of the dichroic mirror 39A shown in FIG. 13(b) by cooperation of the first and second films provided on two different surfaces.

Thus, in the present embodiment, not only are the same operations and effects as in the third embodiment obtained, but also a versatile dichroic mirror can be manufactured since the optical characteristic including three kinds of transmittances can be easily obtained using films with a simple optical characteristic, each of which has two kinds of transmittances.

While the preferred embodiments of the present invention have been described with reference to the accompanying drawings, it is needless to say that the present invention is not limited to such embodiments. Various shapes or combinations of respective components illustrated in the above-described embodiments are examples, and various changes can be made depending on design requirements or the like without departing from the scope of the present invention.

For example, although the configuration in which the two filter blocks 37A and 37B are provided so as to be switchable on the optical path of the light emitted from the light source device 31 has been illustrated in the above-described embodiment, it is also possible to adopt a configuration in which, for example, three or more filter blocks are provided so as to be switchable.

In addition, although the configuration in which the filter blocks 37A and 37B are switched by linear movement has been adopted in the above-described embodiment, the present invention is not limited thereto. For example, switching between the filter blocks 37A and 37B may be performed by disposing the filter blocks 37A and 37B in a turret section, which can rotate around the axis parallel to the Z axis, with a distance therebetween in the rotation direction and performing rotational movement of the turret section.

In addition, although the light source device 31 is configured to be able to selectively switch light beams having a plurality of wavelengths, the measurement device 20 of the above-described embodiment is not limited thereto. For example, it is possible to perform appropriate switching between light sources, which emit light toward the filter blocks 37A and 37B, using each of a light source of the first and second illumination light beams, such as an LED, and a light source of the first to fourth excitation light beams.

In addition, the measurement device 20 of the above-described embodiment may be configured to be able to selectively switch emitted light using the light source device 31, which emits light in a wide wavelength band, and a plurality of filters, which reflect or absorb (or transmit) light in a specific wavelength band.

In addition, although the wavelength of the second illumination light and the wavelength of the second excitation light are the same wavelength in the above-described embodiment, the wavelength of the first illumination light may also be set to be the same as the wavelength of the excitation light. In this case, it is preferable to use light, which has the wavelength of the third excitation light or the fourth excitation light used in the filter block 37B on which the first illumination light is not incident, as the first illumination light.

In addition, it is also possible to adopt a configuration in which the wavelength of the first illumination light and the wavelength of the second illumination light are the same. For example, it is also possible to adopt a configuration in which the first and second illumination light beams have the same wavelength (for example, a wavelength of 770 nm) as the infrared light emitted from the detection device 32. By adopting this configuration, light sources for both the first and second illumination light beams do not need to be separately prepared in the measurement device. For example, a light source can be used in common by using a light guiding device, such as an optical fiber. This can contribute to cost reduction and miniaturization of the device.

When using this configuration, the dichroic mirrors 39A and 39B need to reflect the illumination light incident from the light source device 31, transmit the illumination light incident after being reflected by the irradiation object 1, and transmit the infrared light emitted from the detection device 32. Therefore, it is preferable that the dichroic mirrors 39A and 39B have an optical characteristic of partial transmission and partial reflection for a wavelength band including the wavelength of infrared light and the wavelength of illumination light.

In addition, in the fourth embodiment described above, the illumination light and the infrared light are partially transmitted through or partially reflected from the dichroic mirrors 39A and 39B. However, since the signal strength of the reflected light by the illumination light and the infrared light is large compared with the signal strength of the fluorescence generated from the irradiation object 1, there is no influence on the image acquisition using the illumination light and the acquisition of position information of the surface 8 of the irradiation object 1 in the Z direction.

In addition, in the above-described embodiment, a configuration is adopted in which screen combination is performed using the alignment mark AM provided in the irradiation object 1 since the size of the field of view FA of the imaging device 28 is smaller than the size of the image of the arrangement area of the spots S. However, all spots S can be collectively imaged by making the size of the field of view FA larger than the size of the image of the arrangement area of the spots S.

In addition, although the measurement device of the above-described embodiment has a configuration in which the imaging device 28 is used as a sensor, other sensors capable of receiving the image of the spot S may be used without being limited thereto.

For example, the measurement device of the above-described embodiment may have a configuration including a sensor in which first and second electrodes, through which the illumination light and the fluorescence are transmitted, are disposed in a matrix corresponding to the image position of each spot S and a photon reaction material is interposed between the first and second electrodes and which measures the fluorescence generated in the spot S since the electrical resistance between the first and second electrodes is changed in accordance with the incidence of the illumination light or the fluorescence.

### <Fifth embodiment>

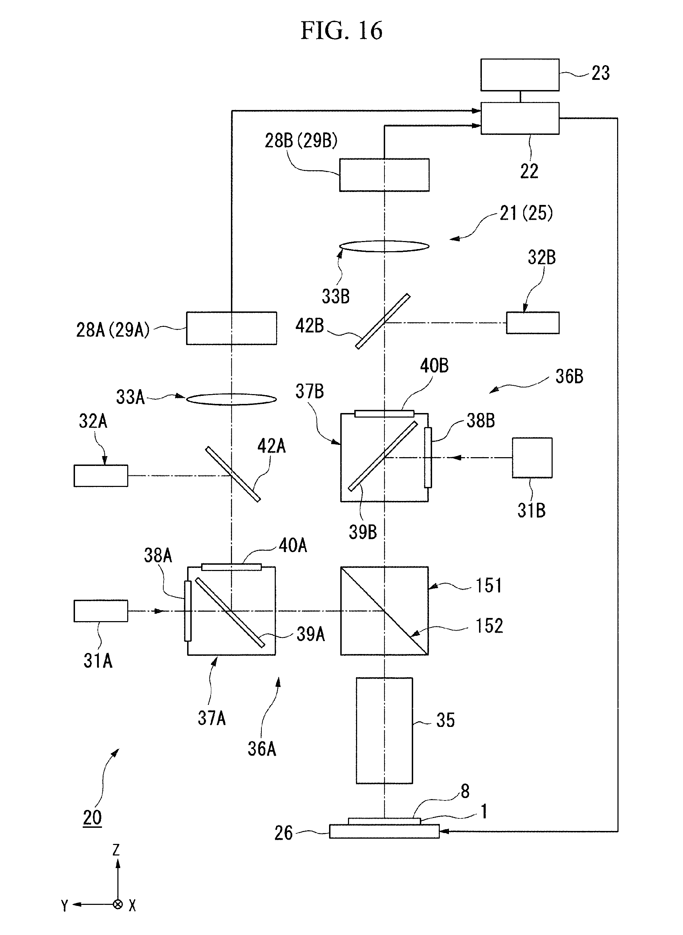

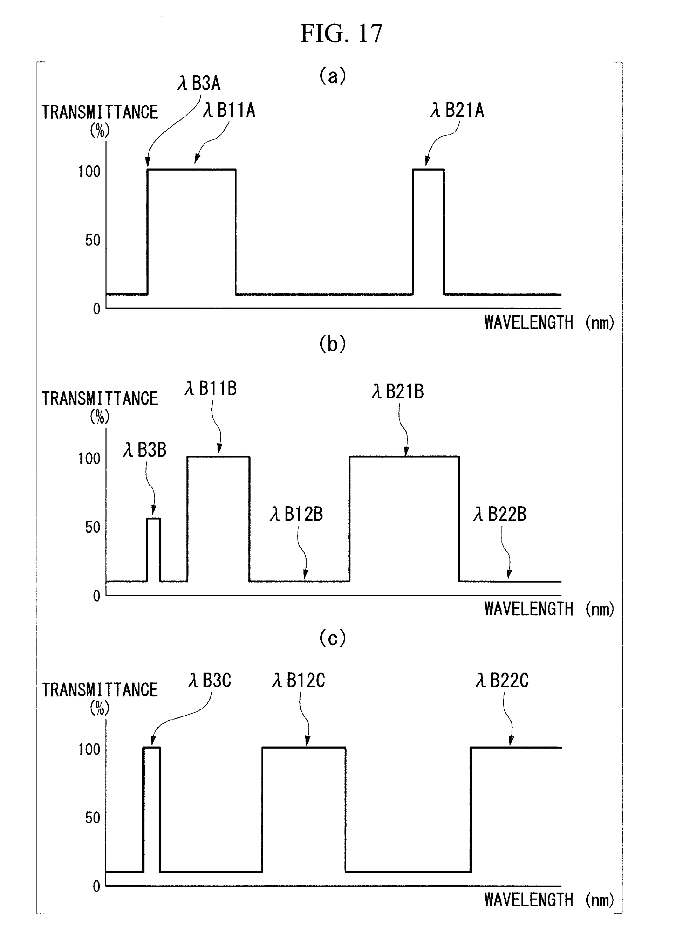

A fifth embodiment of the measurement device will be described with reference to FIGS. 16 and 17.

In the following explanation, components which are the same as or equivalent to those in the embodiment described above are denoted by the same reference numerals, and explanation thereof will be simplified or omitted.

FIG. 16 is a schematic configuration diagram showing an example of the measurement device 20 according to the present embodiment.

A measurement device body 21 includes: an optical system (optical device) 25 including light source devices 31A and 31B, detection devices 32A and 32B, an objective lens 35, and the like; a stage 26 that is movable while supporting the irradiation object 1; and observation cameras 29A and 29B including a sensor (for example, an imaging device, or the like) capable of receiving light transmitted through the irradiation object 1.

Examples of the sensor include a photodetector, such as a PMT (photomultiplier tube), and an imaging device. In the present embodiment, as an example of the sensor, an imaging device is used. The imaging devices 28A and 28B can acquire the image information of an object, and includes a charge-coupled device (CCD), for example.

The optical system 25 includes: an illumination optical system 36A that illuminates the irradiation object 1 using light emitted from the light source device 31A; an illumination optical system 36B that illuminates the irradiation object 1 using light emitted from the light source device 31B; an optical element 151 that makes the light from the irradiation object 1 illuminated by the illumination optical system 36A incident on the illumination optical system 36A and makes the light from the irradiation object 1 illuminated by the illumination optical system 36B incident on the illumination optical system 36B; an imaging optical system 33A that forms an image of the irradiation object 1 illuminated by the illumination optical system 36A near the imaging device 28A; and an imaging optical system 33B that forms an image of the irradiation object 1 illuminated by the illumination optical system 36B near the imaging device 28B.

The imaging devices 28A and 28B are disposed at the image surface sides of the imaging optical systems 33A and 33B, respectively.

The objective lens 35 is an infinity objective lens, and can face a surface 8 of the irradiation object 1 supported by the stage 26. In the present embodiment, the objective lens (first objective lens) 35 is disposed on the +Z side of the irradiation object 1 (above the irradiation object 1).

The light source devices 31A and 31B can emit excitation light for generating the fluorescence from the irradiation object 1 and illumination light for observing the irradiation object 1. The light source device 31A can emit first excitation light having a wavelength λ1, second excitation light having a wavelength λ2, and first illumination light having a wavelength λ3. The light source device 31B can emit third excitation light having a wavelength λ4, fourth excitation light having a wavelength λ5, and second illumination light having a wavelength λ6 (for example, λ4 < λ3 < λ1 < λ5 < λ2 = λ6).

For example, the light source device 31A can emit first excitation light having a wavelength λ1 = 488 nm, second excitation light having a wavelength λ2 = 647 nm, and first illumination light having a wavelength λ3 = 435 nm. The light source device 31B can emit third excitation light having a wavelength λ4 = 405 nm, fourth excitation light having a wavelength λ5 = 532 nm, and second illumination light having a wavelength λ6 = 647 nm. Each of the light source devices 31A and 31B is configured to be able to selectively switch and emit the above-described light on the basis of a signal from the control device 22.

In addition, the light source devices 31A and 31B do not necessarily need to be separately provided, and it is possible to adopt a configuration in which a light source device capable of emitting the light having each wavelength described above is provided on one side and the light is guided to the other side using an optical fiber or the like.

The detection device (Z-position detection device) 32A detects the information regarding the position of the irradiation object 1 (for example, position information of the irradiation object 1 in the Z direction, or the like) by irradiating the irradiation object 1 through the wavelength selection filter 42A using light in a wavelength band, which is different from the first and second excitation light beams and the first illumination light emitted from the light source device 31A and the fluorescence generated from the irradiation object 1 by the first and second excitation light beams, as detection light (for example, infrared light with a wavelength of 770 nm (hereinafter, simply referred to as infrared light), or the like). The wavelength selection filter 42A has an optical characteristic in which the infrared light is reflected and first illumination light and first and second fluorescent light beams, which will be described later, are transmitted.

The detection device (Z-position detection device) 32B detects the information regarding the position of the irradiation object 1 (for example, position information of the irradiation object 1 in the Z direction, or the like) by irradiating the irradiation object 1 through the wavelength selection filter 42B using light in a wavelength band, which is different from the third and fourth excitation light beams and the second illumination light emitted from the light source device 31B and the fluorescence generated from the irradiation object 1 by the third and fourth excitation light beams, as detection light (for example, infrared light with a wavelength of 770 nm (hereinafter, simply referred to as infrared light), or the like). The wavelength selection filter 42B has an optical characteristic in which the infrared light is reflected and second illumination light and third and fourth fluorescent light beams, which will be described later, are transmitted.

The illumination optical system (first optical system) 36A illuminates the irradiation object 1 with excitation light in a predetermined wavelength band or illumination light in a predetermined wavelength band using the light emitted from the light source device 31A. The illumination optical system 36A includes an objective lens 35 on which light in a predetermined wavelength band (for example, predetermined excitation light, fluorescence, illumination light, or detection light) is incident, a filter block (first optical element) 37A capable of separating the excitation light and the fluorescence from each other, and an optical element (third optical element) 151.

The objective lens 35 emits excitation light and illumination light for illuminating the irradiation object 1 and detection light (for example, infrared light) for detecting the position information of the irradiation object 1 in the Z direction. The illumination optical system 36A illuminates the irradiation object 1, which is supported by the stage 26, with excitation light, illumination light, and detection light from a predetermined upper direction (Z direction).

The illumination optical system (second optical system) 36B illuminates the irradiation object 1 with excitation light in a predetermined wavelength band or illumination light in a predetermined wavelength band using the light emitted from the light source device 31B. The illumination optical system 36B includes the above-described objective lens 35 on which light in a predetermined wavelength band (for example, predetermined excitation light, fluorescence, illumination light, or detection light) is incident and which is disposed on the optical path shared with the illumination optical system 36A, a filter block (second optical element) 37B capable of separating the excitation light and the fluorescence from each other, and the above-described optical element 151 disposed on the optical path shared with the illumination optical system 36A.

The illumination optical system 36B includes the objective lens 35 of the illumination optical system 36A on the optical path shared with the illumination optical system 36A.

The filter block 37A of the illumination optical system 36A includes a first filter 38A on which light from the light source device 31A is incident, a dichroic mirror (first separation section) 39A on which light transmitted through the first filter 38A is incident, and a second filter 40A on which light from the dichroic mirror 39A is incident.

The filter block 37B includes a first filter 38B on which light from the light source device 31B is incident, a dichroic mirror (second separation section) 39B on which light transmitted through the first filter 38B is incident, and a second filter 40B on which light from the dichroic mirror 39B is incident.

The first filter 38A is a wavelength selection optical element that selectively transmits the first illumination light and the first and second excitation light beams, which are required for the excitation of a fluorescent material, therethrough by removing light in some wavelength band of the light from the light source device 31A by reflection or absorption. FIG. 17(a) is a diagram showing the relationship between the wavelength of incident light and a transmittance in the first filter 38A. As shown in FIG. 17(a), the first filter 38A has an optical characteristic in which the transmittance in a wavelength band λB11A including the wavelength λ1 of the first excitation light emitted from the light source device 31 A, a wavelength band λB3A including the wavelength λ3 of the first illumination light, and a wavelength band λB21A including the wavelength λ2 of the second excitation light is 100%.

That is, the first filter 38A includes a band-pass filter that allows light in a predetermined wavelength band (first and second excitation light beams and first illumination light) to be transmitted therethrough and does not allow light in the other wavelength band to be transmitted therethrough. For example, the wavelength band λB11A is 440 nm to 505 nm. For example, the wavelength band λB21A is 615 nm to 640 nm. For example, the wavelength band λB3A is 425 nm to 440 nm that is continuous with the wavelength band λB11A.

The light in a predetermined wavelength band (first and second excitation light beams and first illumination light) emitted from the first light source device 31A and transmitted through the first filter 38A is incident on the dichroic mirror 39A that is an optical element.

The dichroic mirror 39A is a separation optical element that mainly separates the excitation light and the fluorescence from each other. In the present embodiment, the dichroic mirror 39A has an optical characteristic in which light in a wavelength band (for example, second wavelength band) λB11B including the wavelength λ1 of the first excitation light transmitted through the first filter 38A and light in a wavelength band (for example, seventh wavelength band) λB21B including the wavelength of the second excitation light transmitted through the first filter 38A are transmitted and in which the first fluorescence in a wavelength band (for example, first wavelength band) λB12B generated from the irradiation object 1 by illumination of the first excitation light is reflected at a high reflectance (for example, substantially 80% to 100%; a reflectance at which a sufficient S/N ratio is obtained) and the second fluorescence in a wavelength band (for example, eighth wavelength band) λB22B generated from the irradiation object 1 by illumination of the second excitation light is reflected at a high reflectance (for example, substantially 80% to 100%; a reflectance at which a sufficient S/N ratio is obtained).

In addition, the dichroic mirror 39A has an optical characteristic in which light in a third wavelength band λB3B including the wavelength λ3 of the first illumination light is partially transmitted and partially reflected. In addition, the dichroic mirror 39A has an optical characteristic in which detection light emitted from the detection device 32A is transmitted. For example, these optical characteristics are obtained by a multilayer film (not shown) provided in the dichroic mirror 39A.

FIG. 17(b) is a diagram showing the relationship between the wavelength of incident light and a transmittance as optical characteristics of the dichroic mirror 39A. As shown in FIG. 17(b), the dichroic mirror 39A has an optical characteristic in which light in the wavelength band λB12B, which includes the wavelength of the first fluorescence generated from the irradiation object 1 by illumination of the first excitation light, and light in a wavelength band λB22B, which includes the wavelength of infrared light that is the detection light of the detection device 32A and the wavelength of the second fluorescence generated from the irradiation object 1 by illumination of the second excitation light, are reflected at a high reflectance of about 100% (for example, a reflectance of 100% or a reflectance of 80% to 100%).

In addition, the dichroic mirror 39A also has an optical characteristic in which the transmittance for light in the third wavelength band λB3B including the wavelength of the first illumination light is about 50% (for example, about 50%, or 40% to 60%) and accordingly the light in the third wavelength band λB3B is partially transmitted and partially reflected.

For example, the wavelength band λB11B is 440 nm to 505 nm. For example, the wavelength band λB21B is 570 nm to 650 nm. For example, the wavelength band λB12B is 505 nm to 570 nm. For example, the wavelength band λB22B is 650 nm or higher. For example, the wavelength band λB3B is 425 nm to 440 nm.

In the dichroic mirror 39A, the wavelength band λB11B and the wavelength band λB12B are continuous wavelength bands, and the wavelength band λB21B and the wavelength band λB22B are continuous wavelength bands.

For example, the dichroic mirror 39A has a transmittance of about 50% for the light in the wavelength band λB3B of about 425 nm to 440 nm including the wavelength of the first illumination light. The dichroic mirror 39A has a high transmittance of about 100% (for example, a transmittance of 100% or a transmittance of 80% to 100%) for the light in the wavelength band λB11B of about 440 nm to 505 nm including the wavelength of the first excitation light. The dichroic mirror 39A has a high reflectance of about 100% for the light in the wavelength band λB12B of about 505 nm to 570 nm including the wavelength of the first fluorescence.

The dichroic mirror 39A has a high transmittance of about 100% (for example, a transmittance of 100% or a transmittance of 80% to 100%) for the light in the wavelength band λB21B of about 615 nm to 640 nm including the wavelength of the second excitation light. The dichroic mirror 39A has a high reflectance of about 100% for the light in the wavelength band λB22B of 650 nm or higher including the wavelength of the second fluorescence (and infrared light).

The second filter 40A is a wavelength selection optical element having an optical characteristic in which the first illumination light and the above-described first and second fluorescent light beams from the irradiation object 1 are separated from unnecessary light (scattered light or the like), which has a wavelength other than the first illumination light and the first and second fluorescent light beams, and the first illumination light and the first and second fluorescent light beams are selectively transmitted and infrared light emitted from the detection device 32A is transmitted.

FIG. 17(c) is a diagram showing the relationship between the wavelength of incident light and a transmittance in the second filter 40A. As shown in FIG. 17(c), the second filter 40A has an optical characteristic in which light in a wavelength band λB12C, which includes the wavelength of the first fluorescence, and light in a wavelength band λB22C, which includes the wavelength of the second fluorescence generated from the irradiation object 1 by illumination of the second excitation light (and the wavelength of infrared light), are transmitted at a transmittance of 100%. The second filter 40A has an optical characteristic in which light in a wavelength band λB3C including the wavelength of the first illumination light is transmitted at a transmittance of 100%.

The first and second fluorescent light beams and the first illumination light transmitted through the second filter 40A are guided to the imaging device 28A of the observation camera 29A through the imaging optical system 33A.

For example, the wavelength band λB12C is 515 nm to 565 nm. For example, the wavelength band λB22C is 660 nm or higher. For example, the wavelength band λB3C is 425 nm to 440 nm.

The first filter 38B that forms the filter block 37B is a wavelength selection optical element that selectively transmits the second illumination light and the third and fourth excitation light beams, which are required for the excitation of a fluorescent material, therethrough by removing light in some wavelength band of the light from the light source device 31B by reflection or absorption. The optical characteristics of the first filter 38B of the present embodiment are the same as the optical characteristics of the first filter 38B described using FIG. 14(a) in the third embodiment, and explanation thereof will be omitted herein.

The light in a predetermined wavelength band (third and fourth excitation light beams and second illumination light) emitted from the light source device 31B and transmitted through the first filter 38B is incident on the dichroic mirror 39B that is an optical element.

The dichroic mirror 39B of the illumination optical system 36B is a separation optical element that mainly separates the excitation light and the fluorescence from each other. The optical characteristics of the dichroic mirror 39B of the present embodiment are the same as the optical characteristics of the dichroic mirror 39B described using FIG. 14(b) in the third embodiment, and explanation thereof will be omitted herein.

The dichroic mirror 39B has an optical characteristic in which detection light emitted from the detection device 32B is transmitted.

As shown in FIG. 14(b), the dichroic mirror 39B has an optical characteristic in which light in the wavelength band λB32B including the wavelength of the third fluorescence generated from the irradiation object 1 by illumination of the third excitation light, light in the wavelength band λB42B including the wavelength of the fourth fluorescence generated from the irradiation object 1 by illumination of the fourth excitation light, and infrared light (for example, infrared light having a wavelength of 770 nm) that is the detection light of the detection device 32B are transmitted at a high transmittance of about 100% (for example, a transmittance of 100% or a transmittance of 80% to 100%).

The second filter 40B is a wavelength selection optical element having an optical characteristic in which the second illumination light and the above-described third and fourth fluorescent light beams from the irradiation object 1 are separated from unnecessary light (scattered light or the like), which has a wavelength other than the second illumination light and the third and fourth fluorescent light beams, and the second illumination light and the third and fourth fluorescent light beams are selectively transmitted and infrared light emitted from the detection device 32B is transmitted.

The optical characteristics of the second filter 40B of the present embodiment are the same as the optical characteristics of the second filter 40B described using FIG. 14(c) in the third embodiment, and explanation thereof will be omitted herein.

The third and fourth fluorescent light beams and the second illumination light transmitted through the second filter 40B are guided to the imaging device 28B of the observation camera 29B through the imaging optical system 33B.

For example, the objective lens 35 is disposed on the optical path along which the light in the first wavelength band to the light in the sixth wavelength band described above (for example, light in the wavelength band λB11B, light in the wavelength band λB12B, light in the wavelength band λB31B, light in the wavelength band λB32B, and the like) can be incident.

For example, the optical element 151 includes a half mirror (third separation section) 152. The half mirror 152 has an optical characteristic of separating the incident light by partially transmitting and partially reflecting it at a transmittance of, for example, 50% (reflectance of 50%). The optical element 151 is disposed on the optical path between the filter block (first optical element) 37A and the objective lens 35 and the optical path between the filter block (second optical element) 37B and the objective lens 35.

The imaging optical system 33A is disposed at a position facing the filter block 37A, includes a plurality of optical elements, such as a magnification conversion optical system and an objective lens of an imaging system, and forms an image of the irradiation object 1 near the imaging device 28A. The imaging optical system 33B is disposed at a position facing the filter block 37B, includes a plurality of optical elements, such as a magnification conversion optical system and an objective lens of an imaging system, and forms an image of the irradiation object 1 near the imaging device 28B.

The stage 26 supports the irradiation object 1 on the object surface side of the imaging optical systems 33A and 33B. The irradiation object 1 is supported by the stage 26 so that the surface 8 of the irradiation object 1 faces the objective lens 35.

The light transmitted through the irradiation object 1 is incident on the imaging device 28A of the observation camera 29A through the objective lens 35, the optical element 151, the filter block 37A, and the imaging optical system 33A. The image of the irradiation object 1 is formed on the imaging device 28A by the imaging optical system 33A. Accordingly, the imaging device 28A of the observation camera 29A can acquire the image information of the irradiation object 1.

Similarly, the light transmitted through the irradiation object 1 is incident on the imaging device 28B of the observation camera 29B through the objective lens 35, the optical element 51, the filter block 37B, and the imaging optical system 33B. The image of the irradiation object 1 is formed on the imaging device 28B by the imaging optical system 33B. Accordingly, the imaging device 28B of the observation camera 29B can acquire the image information of the irradiation object 1.

As shown in FIG. 16, the image information (image signal) of the irradiation object 1 acquired by the imaging devices 28A and 28B is output to the control device 22. The control device 22 displays the image information from the imaging devices 28A and 28B using the display device 23. The display device 23 can enlarge and display the image information of the irradiation object 1 acquired by the imaging devices 28A and 28B.

The control device 22 performs overall control, such as selection and switching of a light source in the light source devices 31 A and 31 B described above, Z-direction position control of the stage 26 based on the detection result of the detection devices 32A and 32B, and driving control of the stage 26. The image information captured by the imaging devices 28A and 28B is input to the control device 22. The control device 22 corrects the image information on the basis of each of the image information captured by the imaging devices 28A and 28B and types of the first and second illumination light beams when obtaining each of the image information (to be described later).

Next, a method for measuring the irradiation object 1 using the measurement device 20 having the above-described configuration will be described. Since the configuration of the irradiation object 1 of the present embodiment is the same as that described using FIGS. 6A and 6B in the first and third embodiments, explanation thereof will be omitted.

For example, when measuring the irradiation object 1 by irradiating it with the first excitation light having a wavelength λ1 from the light source device 31A, the measurement device 20 first detects the position information of the surface 8 of the irradiation object 1 in the Z direction using the infrared light emitted from the detection device 32A.

The infrared light emitted from the detection device 32A is reflected on the surface 8 of the irradiation object I after reflection in the wavelength selection filter 42A, transmission in the second filter 40A of the filter block 37A, reflection in the dichroic mirror 39A, and partial reflection in the half mirror 152 of the optical element 151, and is received by the detection device 32A along the same optical path (common optical path).

The control device 22 positions the stage 26 (that is, the surface 8 of the irradiation object 1) at a predetermined position in the Z direction on the basis of the Z-direction position information detected by the detection device 32A.

Then, when the surface 8 of the irradiation object 1 is positioned at a predetermined position in the Z direction, the measurement device 20 moves the irradiation object 1 (stage 26) to a first imaging region, in which predetermined (predetermined number of) spots S can be measured, within the XY plane.

Then, the measurement device 20 selects and emits the first illumination light from the light source device 31A to illuminate the surface 8 of the irradiation object 1. The first illumination light emitted from the light source device 31A is transmitted through the first filter 38A and is then separated into reflected light (partial reflection light) and transmitted light (partial transmission light) by the dichroic mirror 39A to be partially reflected and partially transmitted. The first illumination light that has been partially transmitted illuminates the surface 8 of the irradiation object 1 after being partially reflected by the half mirror 152 of the optical element 151 and being transmitted through the objective lens 35.

The first illumination light reflected on the surface 8 of the irradiation object 1 is guided to the imaging optical system 33A to be incident on the imaging device 28A of the observation camera 29A after transmission in the objective lens 35, partial reflection in the half mirror 152 of the optical element 151, partial reflection in the dichroic mirror 39A of the filter block 37A, transmission in the second filter 40A, and transmission in the wavelength selection filter 42A are sequentially performed.

As a result, as shown in FIG. 7, in the field of view FA of the size corresponding to the magnification set by the magnification conversion optical system and the imaging characteristic of the imaging device 28A, an image of the plurality of (in FIG. 7,42) spots S and the alignment mark AM is formed in the imaging device 28A.

The imaging device 28A acquires the image information of the spot S (light receiving information of the spot S) and the image information (position information) of the alignment mark AM. The control device 22 stores the image information of the spot S, and calculates the arrangement (X, Y, θZ) of the spot S group in the field of view FA from the position information of the alignment mark AM and stores it.

Then, the measurement device 20 switches the light emitted from the light source device 31A to, for example, first excitation light in order to perform fluorescence measurement. The first excitation light emitted from the light source device 31A is transmitted through the dichroic mirror 39A after being transmitted through the first filter 38A, is partially reflected by the half mirror 152 of the optical element 151, and illuminates the surface 8 of the irradiation object 1 after being transmitted through the objective lens 35.

Among the spots S illuminated by the first excitation light, in the spot S in which the material of the probe (biomolecules) and the material of the target (specimen) are bonded to each other, the first fluorescence is generated at a wavelength included in the wavelength band λB12B.

The generated first fluorescence is guided to the imaging optical system 33A to be incident on the imaging device 28A of the observation camera 29A after transmission in the objective lens 35, partial reflection in the half mirror 152 of the optical element 151, reflection in the dichroic mirror 39A of the filter block 37A, transmission in the second filter 40A, and transmission in the wavelength selection filter 42A are sequentially performed.

In addition, in the same manner as in the measurement of the spot S using the first illumination light, the image of the spot S that has generated the first fluorescence is formed in the field of view FA of the imaging device 28A as shown in FIG. 8. The imaging device 28A acquires the image information of the spot S (light receiving information of the spot S) that has generated the first fluorescence.

The spot S' indicated by two-dot chain line in FIG. 8 does not generate the first fluorescence, and is not recognized as an imaging signal by the imaging device 28A. In this case, the measurement device 20 can measure the address of the spot S, which has generated the first fluorescence, in the irradiation object 1, that is, the address of the spot S, in which the material of the probe and the material of the target are bonded to each other, in the irradiation object 1 by matching the result (observation result) of imaging of the spot S using the first illumination light shown in FIG. 7 with the result (fluorescence result) of imaging of the spot S, which has generated the first fluorescence, shown in FIG. 8.

In this case, in the image measurement of the spot S using the first illumination light and image measurement of the spot S using the first fluorescence, the optical path of the first illumination light from the light source device 31A to the imaging device 28A is the same (common optical path) as the optical path of the first excitation light from the light source device 31A to the irradiation object 1 and the optical path of the first fluorescence, which is generated by irradiation of the first excitation light, from the irradiation object 1 to the imaging device 28A.

For this reason, the arrangement of the spot S group in the field of view FA of the imaging device 28A at the time of image measurement using the first illumination light is the same as that at the time of image measurement using the first fluorescence. Therefore, the result of imaging of the spot S using the first illumination light can be accurately matched with the result of imaging of the spot S that has generated the first fluorescence.

In addition, when fluorescence measurement (second fluorescence measurement) using the second excitation light is also performed according to the fluorescence characteristics of the material of the probe and the material of the target, the measurement device 20 performs the above-described measurement (first fluorescence measurement) using the first fluorescence and then switches the light emitted from the light source device 31A to the second excitation light to perform the same measurement processing as in the case using the first excitation light.

On the other hand, when fluorescence measurement (third fluorescence measurement) using the third excitation light is also performed according to the fluorescence characteristics of the material of the probe and the material of the target, the measurement device 20 selects and emits the second illumination light from the light source device 31B to illuminate the surface 8 of the irradiation object 1.

The second illumination light emitted from the light source device 31B is transmitted through the first filter 38B and is then separated into reflected light (partial reflection light) and transmitted light (partial transmission light) by the dichroic mirror 39B to be partially reflected and partially transmitted. The second illumination light that has been partially reflected illuminates the surface 8 of the irradiation object 1 after being partially transmitted by the half mirror 152 of the optical element 151 and being transmitted through the objective lens 35.

The second illumination light reflected on the surface 8 of the irradiation object 1 is guided to the imaging optical system 33B to be incident on the imaging device 28B of the observation camera 29B after transmission in the objective lens 35, partial transmission in the half mirror 152 of the optical element 151, partial transmission in the dichroic mirror 39B of the filter block 37B, transmission in the second filter 40B, and transmission in the wavelength selection filter 42B are sequentially performed.

As a result, in the field of view FA of the size corresponding to the magnification set by the magnification conversion optical system and the imaging characteristic of the imaging device 28B, an image of the plurality of spots S and the alignment mark AM is formed in the imaging device 28B.

The imaging device 28B acquires the image information of the spot S (light receiving information of the spot S) and the image information (position information) of the alignment mark AM. The control device 22 stores the image information of the spot S, and calculates the arrangement (X, Y, θZ) of the spot S group in the field of view FA from the position information of the alignment mark AM and stores it.

Then, the measurement device 20 switches the light emitted from the light source device 31B to, for example, third excitation light in order to perform fluorescence measurement. The third excitation light emitted from the light source device 31B is reflected by the dichroic mirror 39B after being transmitted through the first filter 38B, is partially transmitted through the half mirror 152 of the optical element 151, and illuminates the surface 8 of the irradiation object 1 after being transmitted through the objective lens 35.

Among the spots S illuminated by the third excitation light, in the spot S in which the material of the probe (biomolecules) and the material of the target (specimen) are bonded to each other, the third fluorescence is generated at a wavelength included in the wavelength band λB32B.

The generated third fluorescence is guided to the imaging optical system 33B to be incident on the imaging device 28B of the observation camera 29B after transmission in the objective lens 35, partial transmission in the half mirror 152 of the optical element 151, transmission in the dichroic mirror 39B of the filter block 37B, transmission in the second filter 40B, and transmission in the wavelength selection filter 42B are sequentially performed.

In addition, in the same manner as in the measurement of the spot S using the second illumination light, the image of the spot S that has generated the third fluorescence is formed in the field of view FA of the imaging device 28B. The imaging device 28B acquires the image information of the spot S (light receiving information of the spot S) that has generated the third fluorescence.

The measurement device 20 can measure the address of the spot S, which has generated the third fluorescence, in the irradiation object 1, that is, the address of the spot S, in which the material of the probe and the material of the target are bonded to each other, in the irradiation object 1 by matching the result (observation result) of imaging of the spot S using the second illumination light with the result (fluorescence result) of imaging of the spot S that has generated the third fluorescence.

Also in image measurement of the spot S using the second illumination light and image measurement of the spot S using the third fluorescence, the optical path of the second illumination light from the light source device 31B to the imaging device 28B is the same (common optical path) as the optical path of the third excitation light from the light source device 31B to the irradiation object 1 and the optical path of the third fluorescence, which is generated by irradiation of the third excitation light, from the irradiation object 1 to the imaging device 28B.

For this reason, the arrangement of the spot S group in the field of view FA of the imaging device 28B at the time of image measurement using the second illumination light is the same as that at the time of image measurement using the third fluorescence. Therefore, the result of imaging of the spot S using the second illumination light can be accurately matched with the result of imaging of the spot S that has generated the third fluorescence.

Then, when fluorescence measurement (fourth fluorescence measurement) using the fourth excitation light is also performed according to the fluorescence characteristics of the material of the probe and the material of the target, the measurement device 20 performs the above-described measurement (third fluorescence measurement) using the third fluorescence and then switches the light emitted from the light source device 31B to the fourth excitation light to perform the same measurement processing as in the case using the third excitation light.

After the measurement of the first imaging region in the irradiation object 1 is completed, the measurement device 20 moves the irradiation object 1 to a second imaging region adjacent to the first imaging region. The second imaging region is set at a position where a part of the alignment mark AM imaged in the first imaging region is imaged in the field of view FA of the imaging device 28A.

In addition, the measurement device 20 performs measurement of the spot S and the alignment mark AM using the first illumination light and measurement of the spot S using the first fluorescence in the same manner as in the above-described imaging processing on the first imaging region, and further performs measurement of the spot S and the alignment mark AM using the second illumination light and measurement of the spot S using at least one of the third and fourth fluorescent light beams when necessary.

In addition, when the measurement of the first imaging region is completed in a state where the first excitation light is used, the measurement of the second imaging region may also be performed in the order of measurement using the first fluorescence and subsequent measurement using the first illumination light instead of the order of measurement using the first illumination light and subsequent measurement using the first fluorescence.

Thus, when the measurement device 20 starts the measurement of the second or subsequent imaging region, it is not necessary to switch the light emitted from the light source device 31A since the light used at the time of measurement of the imaging region completed earlier is used. Therefore, it is possible to shorten the time required for measurement processing.

Then, after performing measurement processing on a plurality of imaging regions until the measurement of all spots S is completed, the control device 22 performs screen combination of the measurement result of the spot S using the first illumination light and also performs screen combination of the measurement result of the spot S using each of the first and second fluorescent light beams from the measurement result of the alignment mark AM in each imaging region. By comparing the screen combination results, it is possible to measure the address of the spot S, in which the material of the probe and the material of the target are bonded to each other, in the irradiation object 1.

When measurement processing using at least one of the third and fourth fluorescent light beams has been performed, the control device 22 performs screen combination of the measurement result of the spot S using the second illumination light and also performs screen combination of the measurement result of the spot S using each of the third and fourth fluorescent light beams from the measurement result of the alignment mark AM in each imaging region. By comparing the screen combination results, it is possible to measure the address of the spot S, in which the material of the probe and the material of the target are bonded to each other, in the irradiation object 1.

When image shift occurs between the image measured using the first illumination light and the image measured using the second illumination light, the control device 22 may be configured to include a correction unit that corrects at least either the measurement result of the first and second fluorescent light beams or the measurement result of the third and fourth fluorescent light beams on the basis of the amount of positional shift that occurs between the image measured using the first illumination light and the image measured using the second illumination light and that has been calculated in advance by experiment, simulation, and the like.

As described above, in the present embodiment, by switching the light emitted from the light source devices 31A and 31B, the image information of the spot S in the irradiation object I can be measured using each color of the first to fourth fluorescent light beams without moving optical elements, such as the filter blocks 37A and 37B or the optical element 151. Therefore, in the present embodiment, since the measurement result when the illumination light is used and the measurement result when the fluorescence is used can be accurately matched with each other, it is possible to suppress the degradation of measurement accuracy of the spot S as in a case where an optical element disposed on the optical path is switched according to the wavelength band of light.

In addition, the measurement device 20 in the present embodiment can perform a measurement operation at high speed by adopting the above-described configuration and the like.

In the present embodiment, even when the wavelength of the first illumination light is different from the wavelength of the second illumination light, one of the measurement result of the first and second fluorescent light beams and the measurement result of the third and fourth fluorescent light beams is corrected on the basis of the amount of positional shift that occurs between the image measured using the first illumination light and the image measured using the second illumination light and that has been calculated in advance. Therefore, it is possible to realize high-accuracy measurement processing on the irradiation object 1 by reducing the influence of the image shift occurring between the image measured using the first illumination light and the image measured using the second illumination light.

In the present embodiment, when the wavelength band of the first excitation light and the first fluorescence, the wavelength band of the second excitation light and the second fluorescence, the wavelength band of the third excitation light and the third fluorescence, and the wavelength band of the fourth excitation light and the fourth fluorescence are arranged in order of the size of the wavelength band, one of the dichroic mirrors 39A and 39B corresponds to the odd-numbered wavelength band and the other of the dichroic mirrors 39A and 39B corresponds to the even-numbered wavelength band. Accordingly, it is possible to increase the wavelength band to which each of the dichroic mirrors 39A and 39B corresponds. Therefore, in the present embodiment, even if the amount of incident excitation light and the amount of incident fluorescence are reduced as in a case of using the half mirror 152 like the optical element 151, it is possible to effectively acquire the image information of the irradiation object 1.

In particular, in the present embodiment, since the optical characteristics of the dichroic mirrors 39A and 39B are set such that a part of either the wavelength band of the first excitation light and the first fluorescence or the wavelength band of the second excitation light and the second fluorescence overlaps a part of the wavelength band of the third excitation light and the third fluorescence or a part of the wavelength band of the fourth excitation light and the fourth fluorescence, it is possible to set the wavelength band, to which each of the dichroic mirrors 39A and 39B corresponds, more widely. As a result, it is possible to prevent a reduction in the amount of excitation light and the amount of fluorescence in the imaging devices 28A and 28B.

In addition, in the present embodiment, since the wavelength of the second illumination light and the wavelength of the second excitation light are the same, it is not necessary to prepare the light source of the second illumination light or the light source of the second excitation light separately. This can contribute to cost reduction and miniaturization of the device.

The optical system 25 in the present embodiment includes the filter blocks 37A and 37B, so that wavelength selection of light incident on the dichroic mirror 39A from the light source device 31A is performed using the first filter 38A, wavelength selection of light emitted through the dichroic mirror 39A after being incident on the dichroic mirror 39A is performed using the second filter 40A, wavelength selection of light incident on the dichroic mirror 39B from the light source device 31B is performed using the first filter 38B, and wavelength selection of light emitted through the dichroic mirror 39B after being incident on the dichroic mirror 39B is performed using the second filter 40B.

Therefore, it is possible to effectively suppress the degradation of measurement accuracy of the spot S since it is possible to suppress a situation where light other than the light emitted from the light source devices 31 A and 31B and the first to fourth fluorescent light beams, which are generated from the irradiation object 1 by irradiation of the first to fourth excitation light beams, is received by the imaging devices 28A and 28B and becomes noise (for example, crosstalk).

### <Sixth embodiment>

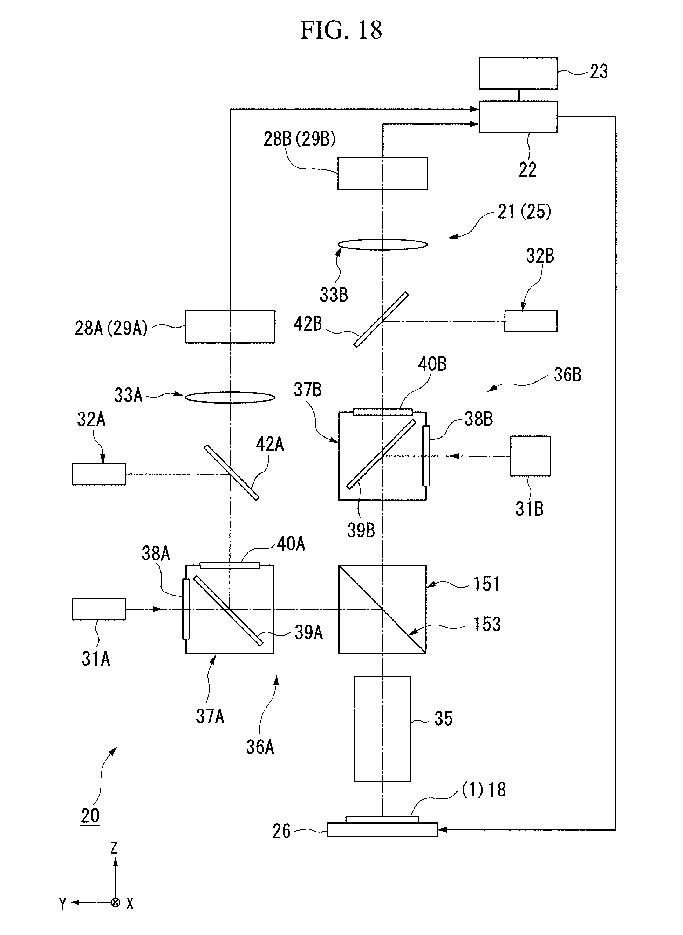

Next, a sixth embodiment of the measurement device 20 will be described with reference to FIGS. 18 to 21.

In these diagrams, the same components as in the fifth embodiment shown in FIGS. 16 and 17 are denoted by the same reference numerals, and explanation thereof will be omitted or simplified.

In the fifth embodiment, the optical element 151 is configured to include the half mirror 152. In the sixth embodiment, however, a case will be described in which the optical element 151 is configured to include a dichroic mirror 153 and the wavelength of the first illumination light, the wavelength of the second illumination light, and the wavelength of the detection light used in the detection devices 32A and 32B are the same.

FIG. 18 is a schematic configuration diagram showing an example of the measurement device 20 according to the sixth embodiment. The optical element 151 of the measurement device 20 shown in FIG. 18 includes the dichroic mirror 153. Details of the optical characteristics of the dichroic mirror 153 will be described later.

For example, the light source device 31A can emit first excitation light having a wavelength λ1 = 488 nm, second excitation light having a wavelength λ2 = 647 nm, and first illumination light having a wavelength λ3 = 770 nm that is the same as the wavelength of the detection light of the detection device 32A. The light source device 31B can emit third excitation light having a wavelength λ4 = 405 nm, fourth excitation light having a wavelength λ5 = 532 nm, and second illumination light having a wavelength λ6 = 770 nm that is the same as the wavelength of the detection light of the detection device 32B.

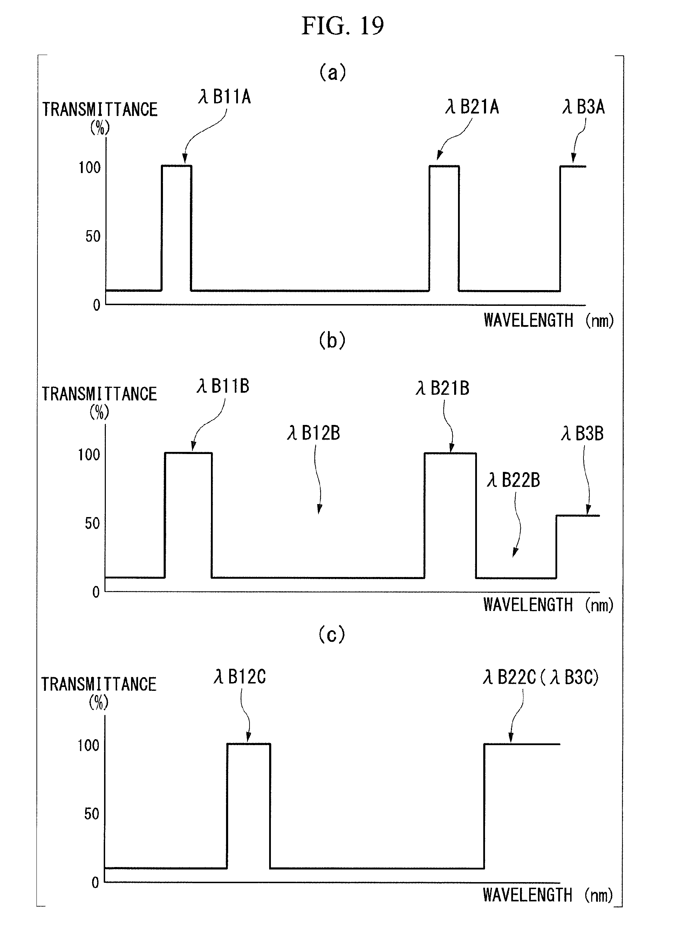

FIG. 19(a) is a diagram showing the relationship between the wavelength of incident light and a transmittance in the first filter 38A of the filter block 37A. The first filter 38A shown in FIG 19(a) has an optical characteristic in which the transmittance in a wavelength band λB11A including the wavelength λ1 of the first excitation light emitted from the light source device 31A, a wavelength band λB21A including the wavelength λ2 of the second excitation light, and a wavelength band λB3A including the wavelength λ3 of the first illumination light is 100%.

For example, the first filter 38A includes a band-pass filter that allows light in a predetermined wavelength band (first and second excitation light beams and first illumination light) to be selectively transmitted therethrough and does not allow light in the other wavelength band to be transmitted therethrough. For example, the wavelength band λB11A is 480 nm to 490 nm. For example, the wavelength band λB21A is 625 nm to 640 nm. For example, the wavelength band λB3A is 720 nm or higher.

FIG. 19(b) is a diagram showing the relationship between the wavelength of incident light and a transmittance as optical characteristics of the dichroic mirror 39A. The dichroic mirror 39A shown in FIG. 19(b) has an optical characteristic in which light in the wavelength band λB12B, which includes the wavelength of the first fluorescence generated from the irradiation object 1 by illumination of the first excitation light, and light in a wavelength band λB22B, which includes the wavelength of the second fluorescence generated from the irradiation object 1 by illumination of the second excitation light, are reflected at a high reflectance of about 100% (for example, a reflectance of 100%, or a reflectance of 80% to 100%).

In addition, the dichroic mirror 39A also has an optical characteristic in which the transmittance for light in the third wavelength band λB3B, which includes the wavelength of infrared light that is the detection light of the detection device 32A and includes the wavelength of the first illumination light, is about 50% (for example, about 50%, or 40% to 60%) and accordingly the light in the third wavelength band λB3B is partially transmitted and partially reflected.

For example, the wavelength band λB11B is 440 nm to 505 nm. For example, the wavelength band λB21B is 570 nm to 650 nm. For example, the wavelength band λB12B is 505 nm to 570 nm. For example, the wavelength band λB22B is 650 nm to 720 nm. For example, the wavelength band λB3B is 720 nm or higher.

For example, the dichroic mirror 39A has a high transmittance of about 100% (for example, a transmittance of 100% or a transmittance of 80% to 100%) for light in the wavelength band λB11B of about 440 nm to 505 nm including the wavelength of the first excitation light, a high reflectance of about 100% for light in the wavelength band λB12B of about 505 nm to 570 nm including the wavelength of the first fluorescence, a high transmittance of about 100% (for example, a transmittance of 100% or a transmittance of 80% to 100%) for light in the wavelength band λB21B of about 570 nm to 650 nm including the wavelength of the second excitation light, a high reflectance of about 100% for light in the wavelength band λB22B of 650 nm to 720 nm including the wavelength of the second fluorescence, and a transmittance of about 50% for light in the wavelength band of 720 nm or higher including the wavelength of the first illumination light and the wavelength of infrared light.

FIG. 19(c) is a diagram showing the relationship between the wavelength of incident light and a transmittance in the second filter 40A. The second filter 40A shown in FIG. 19(c), has an optical characteristic in which light in a wavelength band λB12C, which includes the wavelength of the first fluorescence, and light in a wavelength band λB22C, which includes the wavelength of the second fluorescence generated from the irradiation object 1 by illumination of the second excitation light (and the wavelength of infrared light), are transmitted at a transmittance of 100%. The second filter 40A has an optical characteristic in which light in a wavelength band λB3C including the wavelength of the first illumination light is transmitted at a transmittance of 100%.

For example, the wavelength band λB12C is 515 nm to 530 nm. For example, the wavelength band λB22C is 660 nm or higher.

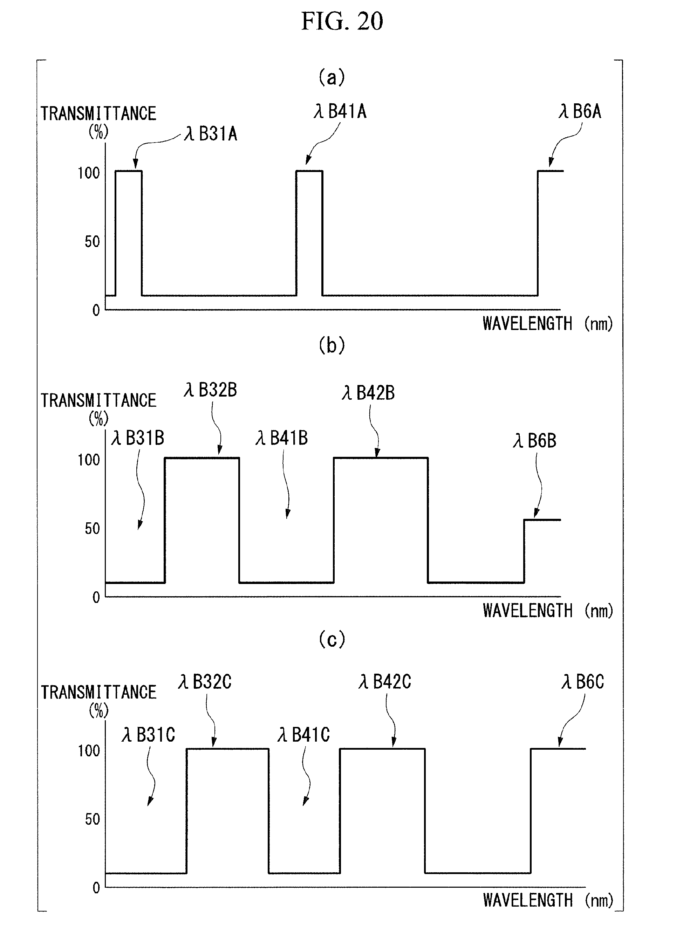

FIG. 20(a) is a diagram showing the relationship between the wavelength of incident light and a transmittance in the first filter 38B of the filter block 37B. The first filter 38B shown in FIG. 20(a) has an optical characteristic in which the transmittance in a wavelength band λB31A including the wavelength λ4 of the third excitation light emitted from the light source device 31B, a wavelength band λB41A including the wavelength λ5 of the fourth excitation light, and a wavelength band λB6A including the wavelength λ6 of the second illumination light is 100%.

For example, the first filter 38B includes a band-pass filter that allows only light in a predetermined wavelength band (third and fourth excitation light beams and second illumination light) to be transmitted therethrough and does not allow light in the other wavelength band to be transmitted therethrough. For example, the wavelength band λB31A is 400 nm to 420 nm. For example, the wavelength band λB41A is 535 nm to 545 nm. For example, the wavelength band λB6A is 635 nm or higher.

FIG. 20(b) is a diagram showing the relationship between the wavelength of incident light and a transmittance as optical characteristics of the dichroic mirror 39B. The dichroic mirror 39B shown in FIG. 20(b) has an optical characteristic in which light in the wavelength band λB32B, which includes the wavelength of the third fluorescence generated from the irradiation object 1 by illumination of the third excitation light, and light in a wavelength band λB42B, which includes the wavelength of the fourth fluorescence generated from the irradiation object 1 by illumination of the fourth excitation light, are transmitted at a high transmittance of about 100% (for example, a transmittance of 100% or a transmittance of 80% to 100%).

In addition, the dichroic mirror 39B also has an optical characteristic in which the transmittance for light in the sixth wavelength band λB6B including the wavelength of the second illumination light and infrared light (for example, wavelength of 770 nm) that is the detection light of the detection device 32B is about 50% (for example, about 50%, or 40% to 60%) and accordingly the light in the sixth wavelength band λB6B is partially transmitted and partially reflected.

For example, the wavelength band λB31B is 400 nm to 430 nm. For example, the wavelength band λB41B is 475 nm to 555 nm. For example, the wavelength band λB32B is 430 nm to 475 nm. For example, the wavelength band λB42B is 555 nm to 620 nm. For example, the wavelength band λB6B is 720 nm or higher.

For example, the dichroic mirror 39B has a transmittance of about 50% for light in the wavelength band λB6B of about 720 nm or higher including the wavelength of the second illumination light and the wavelength of the detection light of the detection device 38B, a high reflectance of about 100% (for example, a reflectance of 100% or a reflectance of 80% to 100%) for light in the wavelength band λB31B of about 400 nm to 430 nm including the wavelength of the third excitation light, a high transmittance of about 100% for light in the wavelength band λB32B of about 430 nm to 475 nm including the wavelength of the third fluorescence, a high reflectance of about 100% (for example, a reflectance of 100% or a reflectance of 80% to 100%) for light in the wavelength band λB41B of about 475 nm to 555 nm including the wavelength of the fourth excitation light, and a high reflectance of about 100% for light in the wavelength band λB42B of 555 nm to 620 nm including the wavelength of the fourth fluorescence.

FIG. 20(c) is a diagram showing the relationship between the wavelength of incident light and a transmittance in the second filter 40B. As shown in FIG. 20(c), the second filter 40B has an optical characteristic in which light in a wavelength band λB32C, which includes the wavelength of the third fluorescence, and light in a wavelength band λB42C, which includes the wavelength of the fourth fluorescence, are transmitted at a transmittance of 100%. The second filter 40B has an optical characteristic in which light in a wavelength band λB6C including the wavelength of the second illumination light and the wavelength of the detection light of the detection device 38B is transmitted at a transmittance of 100%.

For example, the wavelength band λB32C is 440 nm to 500 nm. For example, the wavelength band λB42C is 555 nm to 620 nm. For example, the wavelength band λB6C is 720 nm or higher.

The dichroic mirror 153 has an optical characteristic in which the first excitation light, the second excitation light, the first illumination light, and the detection light of the detection device 38A, which are incident after being transmitted through the filter block 37A (dichroic mirror 39A), are totally reflected toward the irradiation object 1 and the first fluorescence, the second fluorescence, the first illumination light, and the detection light of the detection device 38A from the irradiation object 1 are totally reflected toward the dichroic mirror 39A.

The dichroic mirror 153 has an optical characteristic in which the third excitation light, the fourth excitation light, the second illumination light, and the detection light of the detection device 38B, which are incident after being reflected by the filter block 37B (dichroic mirror 39B), are totally transmitted toward the irradiation object 1 and the third fluorescence, the fourth fluorescence, the second illumination light, and the detection light of the detection device 38B from the irradiation object 1 are totally transmitted toward the dichroic mirror 39B.

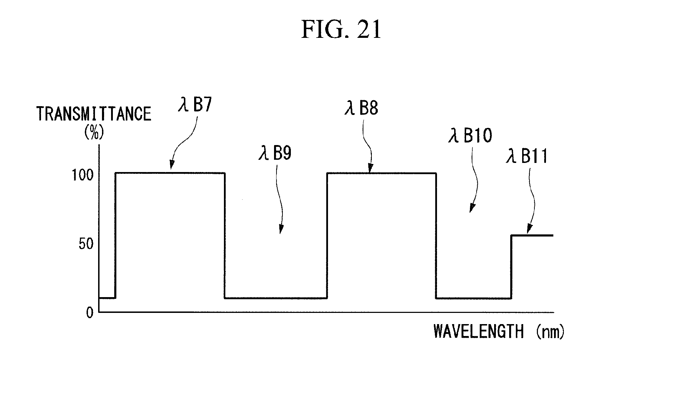

FIG. 21 is a diagram showing the relationship between the wavelength of incident light and a transmittance in the dichroic mirror 153. As shown in FIG. 21, the dichroic mirror 53 has an optical characteristic in which light in a wavelength band λB7, which includes the wavelength of the third excitation light and the wavelength of the third fluorescence, and light in a wavelength band λB8, which includes the wavelength of the fourth excitation light and the wavelength of the fourth fluorescence, are transmitted at a high transmittance of about 100% (for example, a transmittance of 100% or a transmittance of 80% to 100%).

The dichroic mirror 153 has an optical characteristic in which light in a wavelength band λB9, which includes the wavelength of the first excitation light and the wavelength of the first fluorescence, and light in a wavelength band λB10, which includes the wavelength of the second excitation light and the wavelength of the second fluorescence, are transmitted at a high reflectance of about 100%.

The dichroic mirror 153 also has an optical characteristic in which the transmittance for light in the wavelength band λB11 including the wavelength of the first illumination light, the wavelength of the second illumination light, and the wavelength of the detection light of the detection devices 32A and 32B is about 50% (for example, about 50%, or 40% to 60%) and accordingly the light in the wavelength band λB11 is partially transmitted and partially reflected.

For example, the wavelength band λB7 is 400 nm to 475 nm. For example, the wavelength band λB9 is 475 nm to 530 nm. For example, the wavelength band λB8 is 530nm to 625 nm. For example, the wavelength band λB10 is 625 nm to 720 nm. For example, the wavelength band λB11 is 720 nm or higher.

In the measurement device 20 having the above-described configuration, detection light (for example, infrared light) emitted from the detection device 32A in order to position the surface 8 of the irradiation object 1 at a predetermined position in the Z direction is reflected on the surface 8 of the irradiation object 1 after reflection in the wavelength selection filter 42A, transmission in the second filter 40A of the filter block 37A, reflection in the dichroic mirror 39A, reflection (total reflection) in the dichroic mirror 153 of the optical element 151, and transmission in the objective lens 35, and is received by the detection device 32A along the same optical path (common optical path).

The control device 22 positions the stage 26 (for example, the surface 8 of the irradiation object 1) at a predetermined position in the Z direction on the basis of the Z-direction position information detected by the detection device 32A. In this case, emission of the first and second illumination light beams, which are light beams having the same wavelength as infrared light, from the light source devices 31A and 31B is stopped so that these illumination light beams do not become noise.

Then, in order to acquire the image information of the spot S and the image information of the alignment mark AM, the first illumination light emitted from the light source device 31A is partially transmitted through the dichroic mirror 39A and partially reflected by the dichroic mirror 153 of the optical element 151 after being transmitted through the first filter 38A, and is then transmitted through the objective lens 35 and illuminates the surface 8 of the irradiation object 1.

The first illumination light reflected on the surface 8 of the irradiation object 1 is guided to the imaging optical system 33A to be incident on the imaging device 28A of the observation camera 29A after transmission in the objective lens 35, partial reflection in the dichroic mirror 153 of the optical element 151, partial reflection in the dichroic mirror 39A of the filter block 37A, transmission in the second filter 40A, and transmission in the wavelength selection filter 42A are sequentially performed.

In this case, for the detection light of the detection devices 32A and 32B that is light having the same wavelength as the first illumination light, emission from the detection devices 32A and 32B is stopped so that the detection light does not become noise.

Then, the first excitation light emitted from the light source device 31A in order to perform fluorescence measurement of the first fluorescence is transmitted through the dichroic mirror 39A and is reflected (totally reflected) by the dichroic mirror 53 of the optical element 151 after being transmitted through the first filter 38A, and is then transmitted through the objective lens 35 and illuminates the surface 8 of the irradiation object 1.

The first fluorescence generated from the surface 8 of the irradiation object 1 by illumination of the first excitation light is guided to the imaging optical system 33A to be incident on the imaging device 28A of the observation camera 29A after transmission in the objective lens 35, total reflection in the dichroic mirror 153 of the optical element 151, reflection in the dichroic mirror 39A of the filter block 37A, transmission in the second filter 40A, and transmission in the wavelength selection filter 42A are sequentially performed.

The optical path of the second excitation light emitted from the light source device 31 A and the second fluorescence generated from the surface 8 of the irradiation object 1 is the same as the path of the first excitation light and the first fluorescence.

On the other hand, detection light (for example, infrared light) emitted from the detection device 32B in order to position the surface 8 of the irradiation object 1 at a predetermined position in the Z direction is reflected on the surface 8 of the irradiation object 1 after reflection in the wavelength selection filter 42B, transmission in the second filter 40B of the filter block 37B, transmission in the dichroic mirror 39B, transmission (total transmission) in the dichroic mirror 153 of the optical element 151, and transmission in the objective lens 35, and is received by the detection device 32B along the same optical path (common optical path).

The control device 22 positions the stage 26 (for example, the surface 8 of the irradiation object 1) at a predetermined position in the Z direction on the basis of the Z-direction position information detected by the detection device 32B.

In this case, emission of the first and second illumination light beams, which are light beams having the same wavelength as infrared light, from the light source devices 31A and 31B is stopped so that these illumination light beams do not become noise.

Then, in order to acquire the image information of the spot S and the image information of the alignment mark AM, the second illumination light emitted from the light source device 31B is partially reflected by the dichroic mirror 39B and partially transmitted through the dichroic mirror 153 of the optical element 151 after being transmitted through the first filter 38B, and is then transmitted through the objective lens 35 and illuminates the surface 8 of the irradiation object 1.

The second illumination light reflected on the surface 8 of the irradiation object 1 is guided to the imaging optical system 33B to be incident on the imaging device 28B of the observation camera 29B after transmission in the objective lens 35, partial transmission in the dichroic mirror 153 of the optical element 151, partial transmission in the dichroic mirror 39B of the filter block 37B, transmission in the second filter 40B, and transmission in the wavelength selection filter 42B are sequentially performed.

In this case, for the detection light of the detection devices 32A and 32B that is light having the same wavelength as the second illumination light, emission from the detection devices 32A and 32B is stopped so that the detection light does not become noise.

Then, the third excitation light emitted from the light source device 31 B in order to perform fluorescence measurement of the third fluorescence is reflected by the dichroic mirror 39B and is transmitted (totally transmitted) through the dichroic mirror 153 of the optical element 151 after being transmitted through the first filter 38B, and is then transmitted through the objective lens 35 and illuminates the surface 8 of the irradiation object 1.

The third fluorescence generated from the surface 8 of the irradiation object 1 by illumination of the third excitation light is guided to the imaging optical system 33B to be incident on the imaging device 28B of the observation camera 29B after transmission in the objective lens 35, total transmission in the dichroic mirror 153 of the optical element 151, transmission in the dichroic mirror 39B of the filter block 37B, transmission in the second filter 40B, and transmission in the wavelength selection filter 42B are sequentially performed.

The optical path of the fourth excitation light emitted from the light source device 31B and the fourth fluorescence generated from the surface 8 of the irradiation object I is the same as the path of the third excitation light and the third fluorescence.

In addition, fluorescence measurement processing using the first to fourth fluorescent light beams is the same as that in the fifth embodiment described above.

In the measurement device 20 of the present embodiment, not only are the same operations and effects as in the fifth embodiment obtained, but it is also possible to prevent a significant reduction in the amount of first to fourth excitation light beams and the amount of first to fourth fluorescent light beams since the first to fourth excitation light beams and the first to fourth fluorescent light beams are substantially totally reflected from or substantially totally transmitted through the dichroic mirror 153 of the optical element 151.

Therefore, in the present embodiment, since it is possible to increase the strength of signals received by the imaging devices 28A and 28B, it is possible to improve the measurement accuracy for the irradiation object 1.

In addition, in the present embodiment, since the strength of signals received by the imaging devices 28A and 28B is increased, it is possible to narrow the wavelength band for separating reflection and transmission according to a wavelength set for optical elements, such as the first filters 38A and 38B, the dichroic mirrors 39A and 39B, and the second filters 40A and 40B.

Therefore, in the present embodiment, since the number of wavelength bands for separation of reflection and transmission set for each optical element can be increased, it is possible to meet a request for multi-color fluorescence.

In the present embodiment, since the wavelength of the first illumination light, the wavelength of the second illumination light, and the wavelength of the detection light of the detection devices 32A and 32B are the same wavelengths, it is not necessary to provide a separate light source. For example, a light source can be used in common by using a light guiding device, such as an optical fiber. This can contribute to cost reduction and miniaturization of the device.

In addition, in the sixth embodiment described above, the first and second illumination light beams and the detection light of the detection devices 32A and 32B are partially reflected from or partially transmitted through the dichroic mirror 153. However, since the signal strength of the reflected light by illumination of the first and second illumination light beams and the detection light of the detection devices 32A and 32B is large compared with the signal strength of the fluorescence generated from the irradiation object 1, image acquisition using the first and second illumination light beams and the acquisition of position information of the surface 8 of the irradiation object 1 in the Z direction can be easily performed.

### <Seventh embodiment>

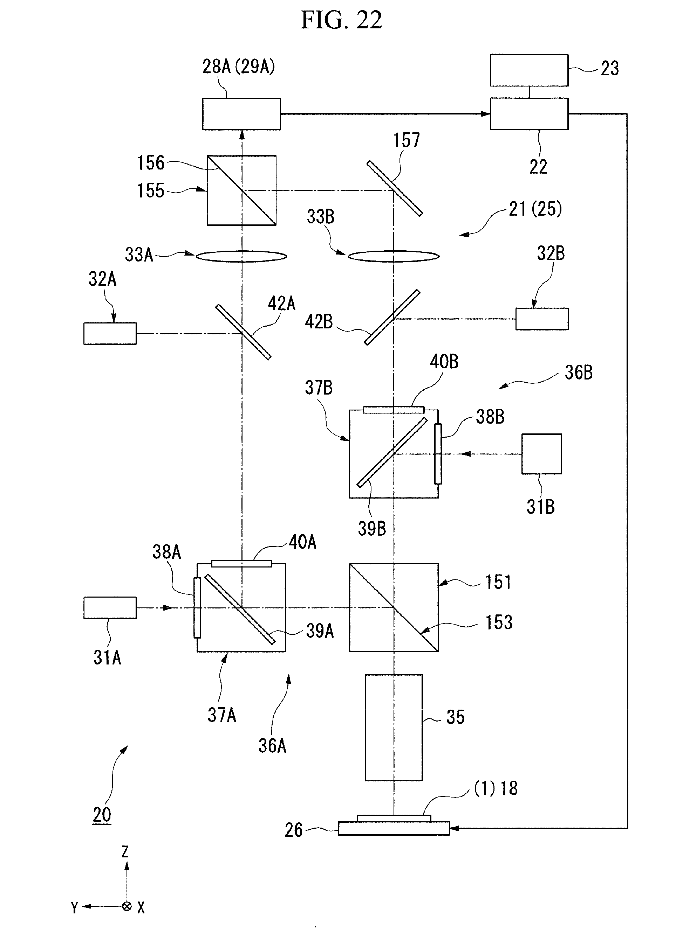

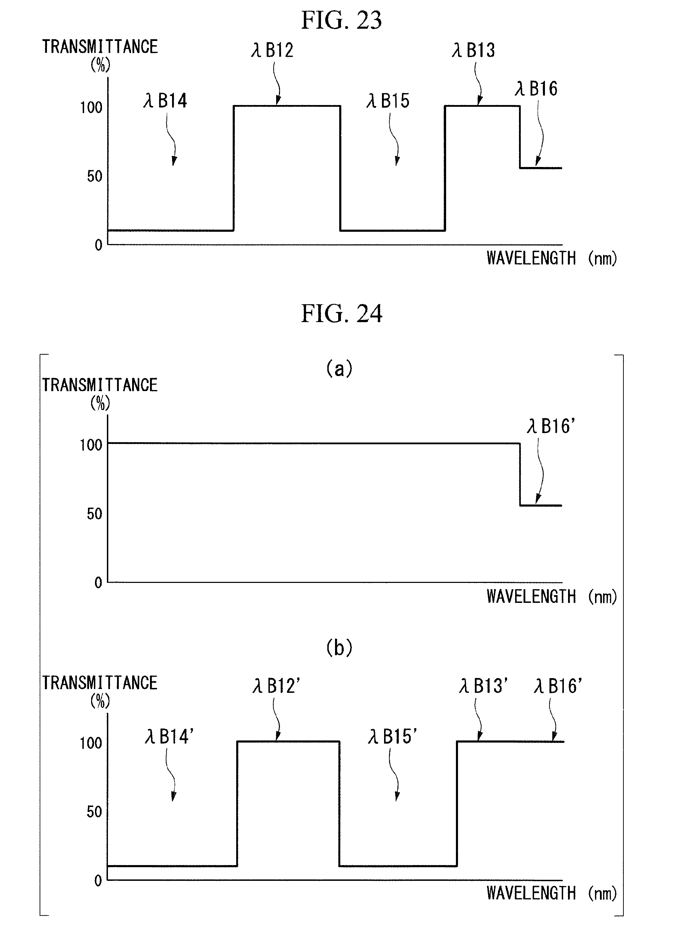

Next, a seventh embodiment of the measurement device 20 will be described with reference to FIGS. 22 and 23.

In these diagrams, the same components as in the sixth embodiment shown in FIGS. 18 to 21 are denoted by the same reference numerals, and explanation thereof will be omitted or simplified.

As shown in FIG. 22, in the measurement device 20 of the present embodiment, the imaging device 28B is not provided, and an optical element (fourth optical element) 155 including a dichroic mirror 156 is disposed between the imaging device 28A and the imaging optical system 33A. On the light emission side of the imaging optical system 33B, a reflecting mirror 157 that reflects the light emitted from the imaging optical system 33B to make it incident on the dichroic mirror 156 is provided.

The dichroic mirror 156 transmits light incident through the filter block 37A therethrough and reflects light incident through the filter block 37B therefrom. FIG. 23 is a diagram showing the relationship between the wavelength of incident light and a transmittance in the dichroic mirror 156.

As shown in FIG. 23, the dichroic mirror 156 has an optical characteristic in which light in a wavelength band λB12, which includes the wavelength of the first fluorescence, and light in a wavelength band λB13, which includes the wavelength of the second fluorescence, are transmitted at a high transmittance of about 100% (for example, a transmittance of 100% or a transmittance of 80% to 100%). The dichroic mirror 156 has an optical characteristic in which light in a wavelength band λB14, which includes the wavelength of the third fluorescence, and light in a wavelength band λB15, which includes the wavelength of the fourth fluorescence, are transmitted at a high reflectance of about 100%.

The dichroic mirror 56 also has an optical characteristic in which the transmittance for light in the wavelength band λB16 including the wavelength of the first illumination light and the wavelength of the second illumination light is about 50% (for example, about 50%, or 40% to 60%) and accordingly the light in the wavelength band λB16 is partially transmitted and partially reflected.

For example, the wavelength band λB12 is 475 nm to 530 nm. For example, the wavelength band λB13 is 625 nm to 720 nm. For example, the wavelength band λB14 is 400 nm to 475 nm. For example, the wavelength band λB15 is 530 nm to 625 nm. For example, the wavelength band λB16 is 720 nm or higher.

Other configurations are the same as those of the sixth embodiment described above.

In the measurement device 20 having the above-described configuration, light (for example, the first fluorescence, the second fluorescence, and the first illumination light) incident on the dichroic mirror 156 through the filter block 37A is transmitted through the dichroic mirror 156 to be incident on the imaging device 28A. Light (for example, the third fluorescence, the fourth fluorescence, and the second illumination light) incident on the dichroic mirror 156 through the filter block 37B is reflected by the dichroic mirror 156 to be incident on the imaging device 28A.

Thus, in the measurement device 20 of the present embodiment, not only are the same operations and effects as in the sixth embodiment obtained, but also light beams transmitted through the filter blocks 37A and 37B can be received by one imaging device 28A. This can contribute to cost reduction and miniaturization of the device.

### <Eighth embodiment>

Next, an eighth embodiment of the measurement device 20 will be described with reference to FIG. 24.

In this diagram, the same components as in the sixth embodiment shown in FIGS. 18 to 21 are denoted by the same reference numerals, and explanation thereof will be omitted or simplified.

The dichroic mirror (39A, 39B, 153, and 156) described in the above fifth to seventh embodiments has an optical characteristic of reflecting or transmitting the light in a predetermined wavelength band therefrom or therethrough, and the optical characteristic is obtained by a film (for example, a multilayer film) provided on one surface (one of a plurality of surfaces or one of a pair of surfaces) of the dichroic mirror. In the present embodiment, an example where the above-described optical characteristic is obtained by the film provided on each of two surfaces (two of a plurality of surfaces or both of a pair of surfaces) of the dichroic mirror will be described.

Here, as an example, an example in which the optical characteristics of the dichroic mirror 156 shown in FIG. 23 are obtained by a first film provided on one of two surfaces of the element and a second film provided on the other of two surfaces of the element will be described.

FIG. 24(a) is a diagram showing the relationship between the transmittance and the wavelength of light incident on a first film provided on a surface, on which light transmitted through the filter block 37A is incident, of the dichroic mirror 156. FIG. 24(b) is a diagram showing the relationship between the transmittance and the wavelength of light incident on a second film provided on a surface, on which light transmitted through the filter block 37B is incident, of the dichroic mirror 56.

As shown in FIG. 24(a), the first film has an optical characteristic (partial transmission and partial reflection) in which the transmittance in the same wavelength band λB16' as the wavelength band λB16 including the wavelength of the first illumination light and the wavelength of the second illumination light is about 50% (for example, about 50%, or 40% to 60%), and has an optical characteristic in which the transmittance in the other wavelength band is a high transmittance of about 100% (for example, a transmittance of 100% or a transmittance of 80% to 100%). Accordingly, the first film has an optical characteristic including two kinds of transmittances.

As shown in FIG. 24(b), the second film has an optical characteristic in which the transmittance in the same wavelength bands λB12', λB13', and λB16' as the wavelength bands λB12, λB13, and λB16 is a high transmittance of about 100% (for example, a transmittance of 100% or a transmittance of 80% to 100%), and has an optical characteristic in which the transmittance in the same wavelength bands λB14' and λB15' as the wavelength bands λB14 and λB15 is a high transmittance of about 100%. Accordingly, the second film has an optical characteristic including two kinds of transmittances.

For example, among the light beams incident earlier on the first film, light in a wavelength band transmitted or partially transmitted according to the optical characteristic of the first film is reflected or transmitted according to the optical characteristic of the second film. Similarly, among the light beams incident earlier on the second film, light in a wavelength band transmitted according to the optical characteristic of the second film is reflected or transmitted or partially reflected according to the optical characteristic of the first film. Therefore, it is possible to obtain the optical characteristics of the dichroic mirror 156 shown in FIG. 23 by cooperation of the first and second films provided on two different surfaces.

Thus, in the present embodiment, not only are the same operations and effects as in the fifth to seventh embodiments obtained, but also a versatile dichroic mirror can be manufactured since the optical characteristic including three kinds of transmittances can be easily obtained using films with a simple optical characteristic, each of the films including two kinds of transmittances.

While the preferred embodiments of the present invention have been described with reference to the accompanying drawings, it is needless to say that the present invention is not limited to such embodiments. Various shapes or combinations of respective components illustrated in the above-described embodiments are just examples, and various changes can be made depending on design requirements or the like without departing from the scope of the present invention.

For example, in the above-described embodiment, the configuration has been illustrated in which each of the filter blocks 37A and 37B has optical characteristic corresponding to the fluorescence and the excitation light for two fluorescent colors. However, the present invention is not limited thereto. For example, it is also possible to adopt a configuration in which each of the filter blocks 37A and 37B has an optical characteristic corresponding to the fluorescence and the excitation light for one color or a configuration in which each of the filter blocks 37A and 37B has an optical characteristic corresponding to the fluorescence and the excitation light for three or more colors.

In addition, the number of colors for measurement in the filter block 37A does not need to be the same as that in the filter block 37B, and the filter blocks 37A and 37B may have optical characteristics corresponding to different numbers of colors. For example, one of the filter blocks 37A and 37B may have an optical characteristic corresponding to the fluorescence and the excitation light for two colors, and the other of the filter blocks 37A and 37B may have an optical characteristic corresponding to the fluorescence and the excitation light for one color.

Such a configuration is preferable since the wavelength band corresponding to the excitation light and the fluorescence in the filter block 37A corresponding to two colors can be increased by a configuration in which a part of the wavelength band corresponding to the fluorescence and the excitation light for one color overlaps a part of the wavelength band corresponding to the fluorescence and the excitation light for one of the two colors or a configuration in which a wavelength band corresponding to the fluorescence and the excitation light for one color is set within a wavelength band corresponding to the fluorescence and the excitation light for two colors.

In addition, although the light source devices 31A and 31B are configured to be able to selectively switch light beams having a plurality of wavelengths, the measurement device 20 of the above-described embodiment is not limited thereto. For example, it is possible to perform appropriate switching between light sources, which emit light toward the filter blocks 37A and 37B, using a light source of the first and second illumination light beams, such as an LED, and a light source of the first to fourth excitation light beams.

In addition, the measurement device 20 of the above-described embodiment may be configured to be able to selectively switch emitted light using the light source devices 31A and 31B, which emit light in a wide wavelength band, and a plurality of filters, which reflect or absorb (or transmit) light in a specific wavelength band.

In addition, the wavelength bands of the first and second illumination light beams, the first to fourth excitation light beams, and the first to fourth fluorescent light beams described in the above embodiments are examples, and it is also possible to use light beams in other wavelength bands.

In addition, in the above-described embodiment, a configuration is adopted in which screen combination is performed using the alignment mark AM provided in the irradiation object 1 since the size of the field of view FA of the imaging devices 28A and 28B is smaller than the size of the image of the arrangement area of the spots S. However, all spots S can be collectively imaged by making the size of the field of view FA larger than the size of the image of the arrangement area of the spots S.

In addition, although the measurement device of the above-described embodiment has a configuration in which the imaging devices 28A and 28B are used as sensors, other sensors capable of receiving the image of the spot S may be used without being limited thereto.

For example, the measurement device of the above-described embodiment may have a configuration including a sensor in which first and second electrodes, through which the illumination light and the fluorescence are transmitted, are disposed in a matrix corresponding to the image position of each spot S and a photon reaction material is interposed between the first and second electrodes and which measures the fluorescence generated in the spot S since the electrical resistance between the first and second electrodes is changed in accordance with the incidence of the illumination light or the fluorescence.

In addition, although the configuration in which the optical characteristics of reflection and transmission of the dichroic mirrors 39A and 39B for the incident light are opposite each other has been illustrated in the above-described embodiment, the present invention is not limited thereto. In the case of a configuration in which the imaging devices 28A and 28B are disposed so as not to be adjacent to each other, the optical characteristics of reflection and transmission of the dichroic mirrors 39A and 39B may be the same.

### <Ninth embodiment>

A ninth embodiment of the measurement device will be described with reference to the diagrams. In the following explanation, components which are the same as or equivalent to those in the embodiment described above are denoted by the same reference numerals, and explanation thereof will be simplified or omitted.

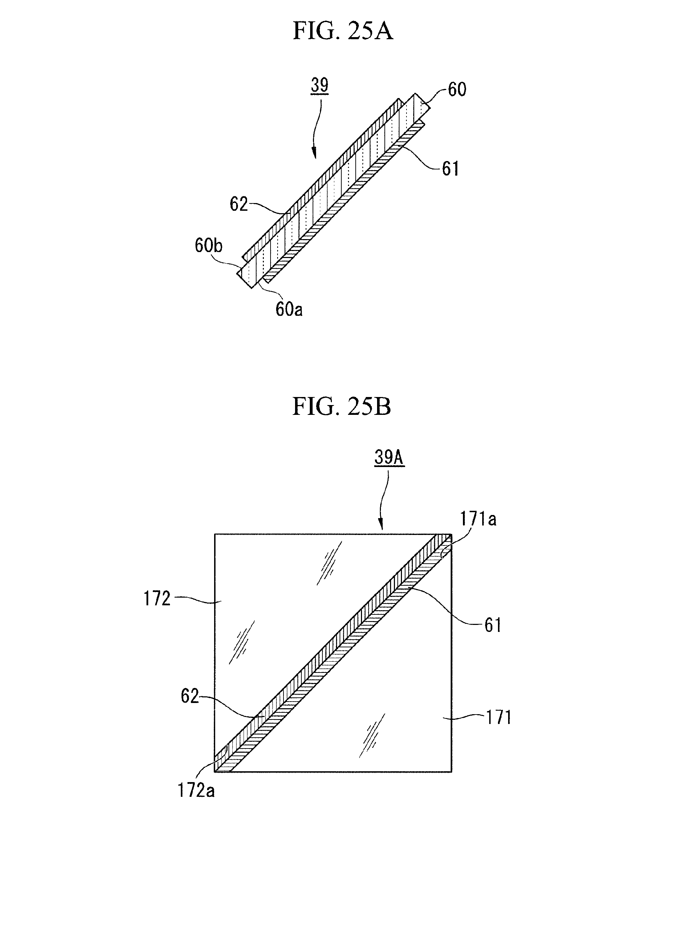

FIG. 25A is a cross-sectional view of the dichroic mirror 39. As shown in FIG. 25A, the dichroic mirror 39 has a substrate 60 formed of glass, quartz, or the like, a first multilayer film 61 formed on a first surface 60a of the substrate 60, and a second multilayer film 62 formed on a second surface 60b of the substrate 60. The optical characteristics of the dichroic mirror (optical element) 39 are obtained by the first and second multilayer films 61 and 62. The first and second multilayer films 61 and 62 are formed in the layer structure on the substrate 60.

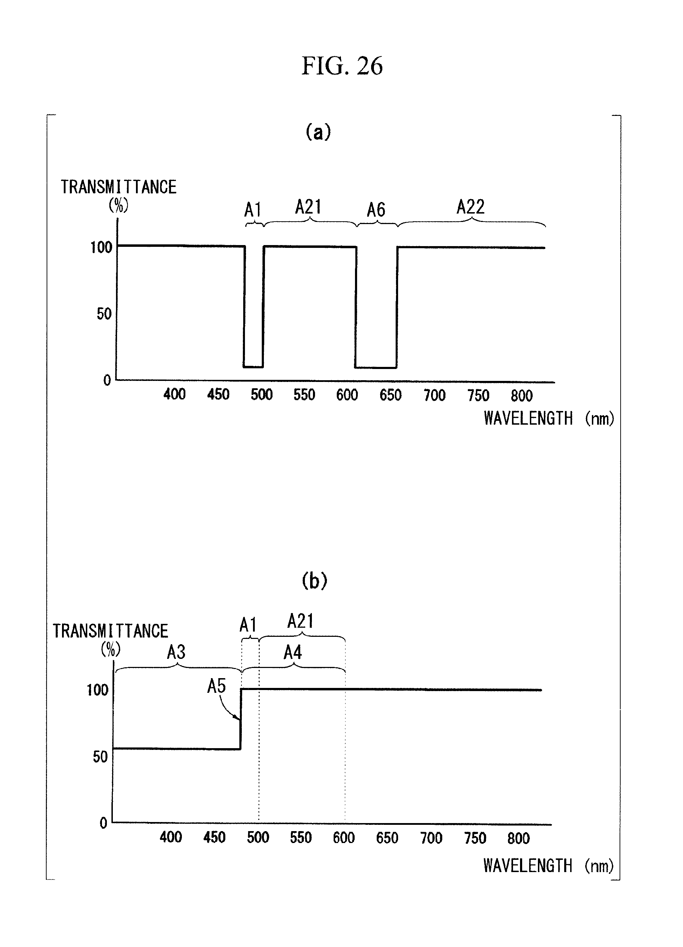

FIG. 26(a) is a diagram showing the optical characteristics of the first multilayer film 61 (diagram showing the relationship between the wavelength of incident light and a transmittance). In the present embodiment, the first multilayer film 61 is provided on a surface on which the light emitted from the light source device 31 is incident. FIG. 26(b) is a diagram showing the optical characteristics of the second multilayer film 62. The second multilayer film 62 is provided on a surface from which the fluorescence generated from the irradiation object 1 is emitted after being transmitted through the dichroic mirror 39.

That is, in the present embodiment, the dichroic mirror 39 is disposed such that the first surface 60a of the substrate 60 is located on the light source device 31 side (first filter 38 side) and the second surface 60b is located on the eyepiece unit 27 side (second filter 40 side). In addition, it is also possible to reverse the directions of the first and second multilayer films 61 and 62.

As shown in FIG. 26(a), the first multilayer film 61 has a first spectral characteristic of a low transmittance of about 0% for light in a wavelength band A1 (wavelength band exceeding about 470 nm and less than 500 nm; first wavelength band) including the wavelength of the first excitation light transmitted through the first filter 38 and a high transmittance of about 100% for light in a wavelength band A21 (wavelength band of 500 nm to 600 nm; second wavelength band) including the first fluorescence generated by irradiating the irradiation object 1 with the first excitation light.

The first multilayer film 61 has a second spectral characteristic of a low transmittance of about 0% for light in a wavelength band A6 (wavelength band exceeding about 600 nm and less than 650 nm; sixth wavelength band) including the wavelength of the second excitation light transmitted through the first filter 38 and a high transmittance of about 100% for light in a wavelength band A22 (wavelength band of 650 nm or higher; second wavelength band) including the second fluorescence generated by irradiating the irradiation object 1 with the second excitation light.

The first multilayer film 61 has a high transmittance of about 100% for light in a wavelength band of 350 nm to 470 nm (light in a third wavelength band).

As shown in FIG. 26(b), the second multilayer film 62 has an optical characteristic of a transmittance of about 50% for light in a wavelength band A3 of about 350 nm to 470 nm (third wavelength band) including the wavelength of illumination light and a high transmittance of about 100% for light in a wavelength band exceeding 470 nm. In the wavelength band in which the second multilayer film 62 has a high transmittance, a wavelength band A4 (fourth wavelength band), which includes the wavelength band A1 (first wavelength band) including the first excitation light and the wavelength band A21 (second wavelength band) including the first fluorescence generated by the first excitation light, is included.

Although the second multilayer film 62 has a high transmittance of about 100% for the light in the wavelength band A1 including the first excitation light in the present embodiment, the second multilayer film 62 may be configured to have a low transmittance of about 0% (high reflectance of about 100%) for the light in the wavelength band A1. Alternatively, the second multilayer film 62 may have an optical characteristic in which the transmittance increases continuously toward the long wavelength side from the short wavelength side in the wavelength band A1.

In the second multilayer film 62, a wavelength band A5 that is a boundary region between the wavelength band A3 where the transmittance is about 50% and the wavelength band A4 where the transmittance is about 100% is a different wavelength band from both the wavelength band A21 including the first fluorescence and the wavelength band A22 including the second fluorescence. By adopting such a configuration, a reduction in the strength of the fluorescence detected by the imaging device (light receiving sensor) 28 is suppressed.

Both the first and second multilayer films 61 and 62 are multilayer films in which dielectric films having different refractive indices are laminated. As a combination of dielectric films that form a multilayer film, a silicon oxide film and a tantalum oxide film, a silicon oxide film and a niobium oxide film, a silicon oxide film and a titanium oxide film, and the like can be mentioned. As a method of forming a dielectric film on the first and second surfaces 60a and 60b of the substrate 60, it is possible to use known film-forming methods, such as a sputtering method, a vacuum deposition method, and an ion plating method.

The optical characteristics of the first and second multilayer films 61 and 62 can be designed by using software for calculating the optical characteristics. As the software for calculating the optical characteristics, for example, TFCalc (made by Software Spectra, Inc.) and Optilayer (made by Optilayer, Ltd.) can be used.

Although the dichroic mirror 39 has a configuration in which a multilayer film is formed on the top and bottom surfaces of the substrate 60 in the present embodiment, for example, the dichroic mirror 39A shown in FIG. 25B may also be used without being limited to this configuration.

The dichroic mirror 39A includes first and second substrates 171 and 172 having triangular prism shapes, a first multilayer film 61 formed on a first surface 171 a of the first substrate 171, and a second multilayer film 62 formed on a second surface 172a of the second substrate 172. The first and second substrates 171 and 172 are formed in the approximately cubic shape as a whole by bonding them in a state where the first and second surfaces 171a and 172a face each other with the first and second multilayer films 61 and 62 interposed therebetween. The first and second multilayer films 61 and 62 are bonded to each other using an optical adhesive or the like, and are formed in the layer structure on the first substrate 171 or/and the second substrate 172.

In the dichroic mirror 39A, the first and second substrates 171 and 172 are formed of transparent glass or quartz. The configuration of the first and second multilayer films 61 and 62 is the same as that in the dichroic mirror 39 shown in FIG. 25A. The dichroic mirror 39A has the same function as the dichroic mirror 39 shown in FIG 25A.

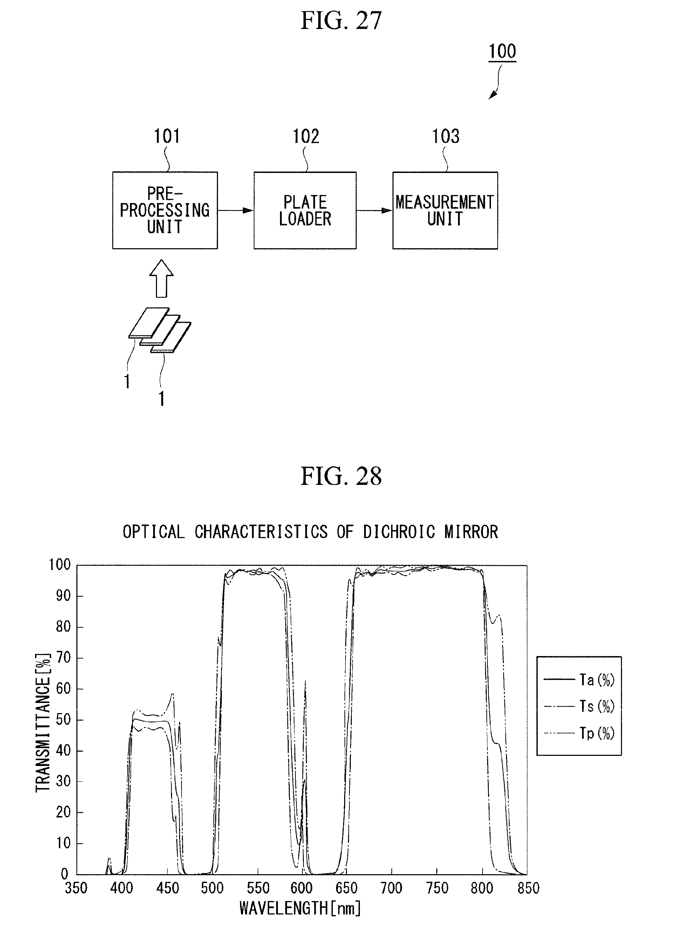

FIG. 27 is a diagram showing a measurement system (screening apparatus) that can automate the above-described method of measuring the irradiation object 1 and includes the measurement device 20 of the present embodiment. A measurement system (screening apparatus) 100 shown in FIG. 27 includes a pre-processing unit (bioassay device) 101, a plate loader 102, and a measurement unit 103.

The pre-processing unit 101 is a bioassay device to prepare the object to be measured B of the irradiation object 1. As an example, the pre-processing unit 101 is a device that injects a specimen (target) containing a labeled target for a probe (biomolecules) disposed in the spot S to cause a specific reaction between the biomolecules and the target. For example, the pre-processing unit 101 includes a stage device that supports the plate-shaped irradiation object 1 in which the spots S are disposed in a matrix, a dispenser having a dispensing nozzle for injecting a specimen for each spot S, and a washing device for washing the irradiation object 1 after specimen injection.

A drying device for drying the irradiation object 1 after washing may be provided in the pre-processing unit 101. The pre-processing unit 101 may be configured to process the irradiation object 1 one by one, or may be configured to process the plurality of irradiation objects 1 simultaneously.

The plate loader (transport device) 102 is a transport mechanism for transporting the irradiation object (biomolecules) 1 from the pre-processing unit 101 to the measurement unit 103. As the plate loader 102, it is possible to use a known transport robot apparatus. The plate loader 102 takes out the irradiation object 1 from the stage device of the pre-processing unit 101 and carries it into the measurement unit 103. A mechanism for making the irradiation object 1 after washing stand by temporarily may be provided in the plate loader 102.

The measurement unit 103 includes the measurement device 20 of the present embodiment. The measurement device 20 measures the irradiation object 1 disposed on the stage 26 by the plate loader 102. The measurement process of the measurement device 20 is the same as described above. The plate loader 102 takes out the irradiation object I after measurement from the stage 26 and transports it to a predetermined position.

According to the above-described measurement system 100, it is possible to screen a biomolecule array by continuously performing pre-processing (bioassay) for the irradiation object 1 and measurement processing of the irradiation object 1 after pre-processing.

In the present embodiment, the dichroic mirror 39 includes the first multilayer film 61 formed on the first surface 60a of the substrate 60 and the second multilayer film 62 formed on the second surface 60b. Thus, the optical characteristics of the dichroic mirror 39 are obtained by the combination of the optical characteristics of the first and second multilayer films 61 and 62 laminated in the layer structure. By adopting such a configuration, design of each of the first and second multilayer films 61 and 62 becomes easy, compared with a case where the dichroic mirror 39 is designed as a single multilayer film.

Since the first and second multilayer films 61 and 62 are separate multilayer films, the number of layers of the dielectric thin film that forms each is reduced. Then, since the film formation time of the first and second multilayer films 61 and 62 is shortened, a variation in the film formation environment is less likely to occur during film formation. Accordingly, since it becomes easy to form a dielectric thin film in a designed film thickness, it is possible to improve the yield.

In the dichroic mirror 39A shown in FIG. 25B, the first and second multilayer films 61 and 62 are formed on separate substrates (first and second substrates 171 and 172). In this case, since only the non-defective first and second multilayer films 61 and 62 can be selected and be bonded to each other, the dichroic mirror 39A can be manufactured without further waste. The first multilayer film 61 is formed on the first surface 171 a of the first substrate 171, and the second multilayer film 62 is formed on the second surface 172a of the second substrate 172.

### <Examples>

Next, examples of an optical element, which can be used as the dichroic mirror 39, and a method of manufacturing an optical element will be described with reference to the diagrams.

In this example, a dichroic mirror having the configuration shown in FIG. 25A was manufactured, and the optical characteristics were measured.

A low-refractive-index dielectric film and a high-refractive-index dielectric film were formed alternately on the first surface of a glass substrate using a magnetron sputtering apparatus, thereby forming a first multilayer film (first alternate film) in which a predetermined number of dielectric films described above were laminated. Then, a low-refractive-index dielectric film and a high-refractive-index dielectric film were formed alternately on the second surface opposite the first surface using a magnetron sputtering apparatus, thereby forming a second multilayer film (second alternate film) in which a predetermined number of dielectric films described above were laminated.

The layer structure of the first and second multilayer films was designed on the basis of optical characteristic calculation using the TFCalc so that the first multilayer film had the first spectral characteristic shown in FIG. 26(a) and the second multilayer film had the second spectral characteristic shown in FIG. 26(b).

According to the above process, a dichroic mirror in which the first and second multilayer films were formed on the top and bottom surfaces of the glass substrate was manufactured.

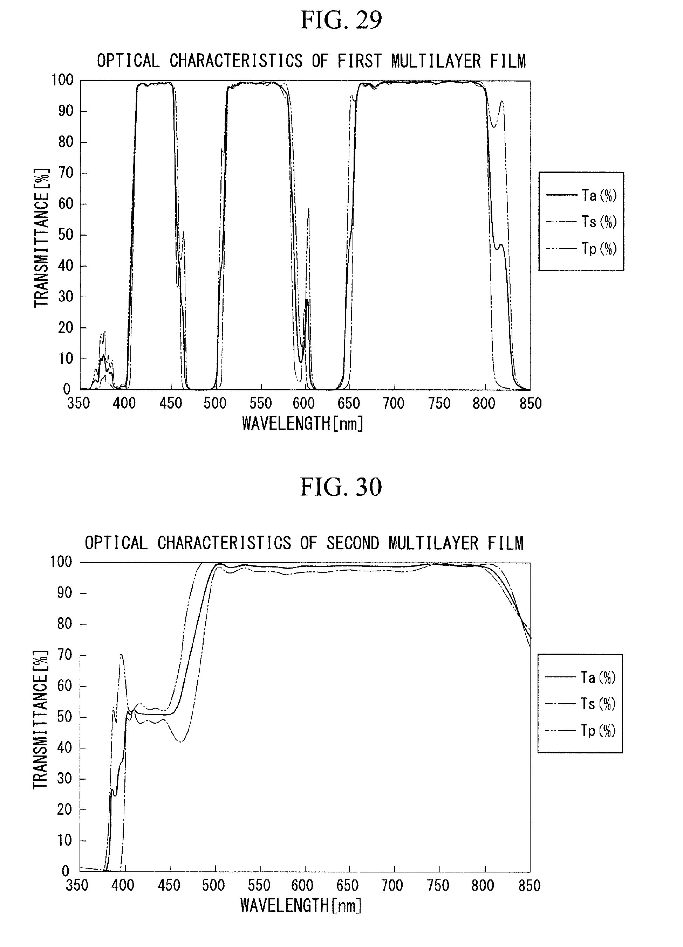

Then, the optical characteristics of the manufactured dichroic mirror were measured using a spectrophotometer U-3500 (made by Hitachi, Ltd.). FIG. 28 is a diagram showing the optical characteristics of the dichroic mirror. FIG. 29 is a diagram showing the optical characteristics of the first multilayer film. FIG. 30 is a diagram showing the optical characteristics of the second multilayer film.

A measurement result (curve Ta: solid line) when the incident light is natural light, a measurement result (curve Ts: one-dot chain line) when the incident light is S-polarized light, and a measurement result (curve Tp: two-dot chain line) when the incident light is P-polarized light are shown together in FIGS. 28 to 30. In addition, a spectrophotometer V-7300 (made by Jasco Co.) or the like may also be used for the measurement of optical characteristics.

As shown in FIG. 28, the dichroic mirror manufactured in the example had the same optical characteristics as the dichroic mirror 39 shown in FIG. 4(b). As shown in FIG. 29, the first multilayer film had transmission wavelength bands of about 400 nm to 470 nm, about 500 nm to 600 nm, and about 650 nm to 800 nm.

As shown in FIG. 30, the second multilayer film had a wavelength band of about 400 nm to 450 nm in which incident light was separated into transmitted light and reflected light, had a wavelength band of about 450 nm to 500 nm in which the transmittance increased as the wavelength became long, and had a transmission wavelength band of about 500 nm to 800 nm.

In addition, in the dichroic mirror manufactured in this example, there was almost no change in the optical characteristics even when incident light was P-polarized light or S-polarized light.

While the preferred embodiments of the present invention have been described with reference to the accompanying drawings, it is needless to say that the present invention is not limited to such examples. Various shapes or combinations of respective components illustrated in the above-described embodiments are just examples, and various changes can be made depending on design requirements or the like without departing from the scope of the present invention.

For example, in the above-described embodiment, the optical characteristics of the dichroic mirror 39 are obtained by forming the first and second multilayer films 61 and 62 in the layer structure. However, the present invention is not limited thereto, and desired optical characteristics may be obtained by disposing three or more multilayer films in the layer structure. In addition, in the optical element in the above-described embodiment, for example, a light-transmissive protective film that has a little influence on the optical characteristics of the optical element may be formed in the first or second multilayer film in order to reduce the deterioration of the film.

### DESCRIPTION OF THE REFERENCE SYMBOLS

1: IRRADIATION OBJECT (SAMPLE)
20: MEASUREMENT DEVICE
28: IMAGING DEVICE (SENSOR, LIGHT RECEIVING SENSOR)
31: LIGHT SOURCE DEVICE
32: DETECTION DEVICE (Z-POSITION DETECTION DEVICE)
37: FILTER BLOCK (OPTICAL DEVICE)
38: FIRST FILTER (FIRST WAVELENGTH SELECTION SECTION)
39: DICHROIC MIRROR (SEPARATION SECTION, OPTICAL ELEMENT)
40: SECOND FILTER (SECOND WAVELENGTH SELECTION SECTION)
S: SPOT (IRRADIATION OBJECT, SAMPLE)
22: CONTROL DEVICE (CORRECTION UNIT)
25: OPTICAL SYSTEM (OPTICAL DEVICE)
37A: FILTER BLOCK (FIRST OPTICAL SYSTEM, FIRST OPTICAL ELEMENT)
37B: FILTER BLOCK (SECOND OPTICAL SYSTEM, SECOND OPTICAL ELEMENT)
39A: DICHROIC MIRROR (FIRST SEPARATION SECTION)
39B: DICHROIC MIRROR (SECOND SEPARATION SECTION)
70: SWITCHING SECTION
λB11B: WAVELENGTH BAND
λB12B: WAVELENGTH BAND
λB21B: WAVELENGTH BAND
λB22B: WAVELENGTH BAND
λB3B: WAVELENGTH BAND
28A: IMAGING DEVICE (FIRST SENSOR)
28B: IMAGING DEVICE (SECOND SENSOR)
31A, 31B: LIGHT SOURCE DEVICE
32A, 32B: DETECTION DEVICE (Z-POSITION DETECTION DEVICE)
151: OPTICAL ELEMENT (THIRD OPTICAL ELEMENT)
152: HALF MIRROR (THIRD SEPARATION SECTION)
155: OPTICAL ELEMENT (FOURTH OPTICAL ELEMENT)
47: OPTICAL ELEMENT
60: SUBSTRATE
60a, 60b, 171a, 172a: SURFACE
61: FIRST MULTILAYER FILM
62: SECOND MULTILAYER FILM
A1, A3, A4, A5, A6, A21, A22: WAVELENGTH BAND

## Claims

1. An optical element, comprising:
a separation section that can separate incident light according to a wavelength,
wherein the separation section has an optical characteristic in which incident light in a first wavelength band is reflected, incident light in a second wavelength band is transmitted, and incident light in a third wavelength band is partially transmitted and partially reflected.

2. The optical element according to Claim 1,
wherein the separation section separates the incident light in the third wavelength band into at least transmitted light and reflected light.

3. The optical element according to Claim 1 or 2,
wherein the first wavelength band is a wavelength band of excitation light and the second wavelength band is a wavelength band of fluorescence, or
the first wavelength band is a wavelength band of fluorescence and the second wavelength band is a wavelength band of excitation light.

4. The optical element according to any one of Claims 1 to 3,
wherein the separation section further has an optical characteristic in which incident light in a fourth wavelength band is reflected and incident light in a fifth wavelength band is transmitted.

5. The optical element according to any one of Claims 1 to 4,
wherein the first and second wavelength bands are continuous wavelength bands.

6. The optical element according to any one of Claims 1 to 5,
wherein first incident light in a smaller wavelength band of the incident light in the first wavelength band and the incident light in the second wavelength band is light incident on the separation section earlier, and
second incident light in a larger wavelength band of the incident light in the first wavelength band and the incident light in the second wavelength band is light incident on the separation section after the first light is emitted from the separation section.

7. The optical element according to any one of Claims 1 to 6,
wherein the separation section includes a multilayer film having the optical characteristic.

8. The optical element according to any one of Claims 1 to 6,
wherein the separation section includes at least first and second surfaces, and
the optical characteristic is obtained by a first film, which is provided on the first surface and has a first optical characteristic, and a second film, which is provided on the second surface and has a second optical characteristic different from the first optical characteristic.

9. An optical element, comprising:
a separation section that can separate incident light according to a wavelength,
wherein the separation section has an optical characteristic in which incident light in a first wavelength band is not transmitted, incident light in a second wavelength band is totally transmitted, and incident light in a third wavelength band is partially transmitted.

10. An optical device comprising the optical element according to any one of Claims 1 to 9.

11. The optical device according to Claim 10, further comprising:
a first wavelength selection section that makes the light in the third wavelength band and one of the light in the first wavelength band and the light in the second wavelength band selectively incident on the separation section.

12. The optical device according to Claim 10 or 11, further comprising:
a second wavelength selection section through which the light in the third wavelength band and one of the light in the first wavelength band and the light in the second wavelength band, which is emitted through the separation section after being incident on the separation section, is selectively transmitted.

13. A measurement device, comprising:
the optical device according to any one of Claims 10 to 12;
a light source device that emits light to illuminate an irradiation object through the optical element; and
a sensor that receives light that illuminates the irradiation object and is transmitted through the optical element.

14. The measurement device according to Claim 13,
wherein the light source device can emit excitation light for generating fluorescence from the irradiation object and illumination light for observing the irradiation object.

15. The measurement device according to Claim 13,
wherein the light source device can emit excitation light and illumination light in different wavelength bands.

16. The measurement device according to Claim 14 or 15,
wherein an optical path of the excitation light from the light source device to the irradiation object and an optical path of fluorescence, which is generated by irradiation of the excitation light, from the irradiation object to the sensor are the same as an optical path of the illumination light from the light source device to the sensor.

17. The measurement device according to any one of Claims 13 to 16, further comprising:
a detection device that detects information regarding a position of the irradiation object through the optical element using detection light in a sixth wavelength band different from the first to third wavelength bands.

18. The measurement device according to Claim 17,
wherein the optical element further has an optical characteristic in which incident light in the sixth wavelength band is transmitted.

19. An optical device, comprising:
first and second optical elements that can separate incident light according to a wavelength; and
a switching section that performs selective switching between the first and second optical elements,
wherein the first optical element includes a first separation section having an optical characteristic in which light in a first wavelength band is reflected, light in a second wavelength band is transmitted, and light in a third wavelength band is partially transmitted and partially reflected, and
the second optical element includes a second separation section having an optical characteristic in which light in a fourth wavelength band is reflected, light in a fifth wavelength band is transmitted, and the light in the third wavelength band or light in a sixth wavelength band is partially transmitted and partially reflected.

20. The optical device according to Claim 19, further comprising:
an optical system that has at least the first and second optical elements,
wherein the switching section makes any one of the first and second optical elements disposed on an optical path of the optical system.

21. The optical device according to Claim 19 or 20,
wherein one of the first and second wavelength bands is a wavelength band of excitation light and the other wavelength band is a wavelength band of fluorescence, and
one of the fourth and fifth wavelength bands is a wavelength band of excitation light and the other wavelength band is a wavelength band of fluorescence.

22. The optical device according to any one of Claims 19 to 21,
wherein the first separation section has an optical characteristic in which one of light in a seventh wavelength band and light in an eighth wavelength band is reflected and the other of the light in the seventh wavelength band and the light in the eighth wavelength band is transmitted.

23. The optical device according to Claim 22,
wherein one of the seventh and eighth wavelength bands is a wavelength band of excitation light and the other wavelength band is a wavelength band of fluorescence.

24. The optical device according to Claim 22 or 23,
wherein at least one of the fourth and fifth wavelength bands is a wavelength band overlapping a part of the first and second wavelength bands or a wavelength band overlapping a part of the seventh and eighth wavelength bands.

25. The optical device according to Claim 22 or 23,
wherein the fourth or fifth wavelength band is a wavelength band between the first or second wavelength band and the seventh or eighth wavelength band.

26. The optical device according to any one of Claims 22 to 25,
wherein the second separation section has an optical characteristic in which one of light in a ninth wavelength band and light in a tenth wavelength band is reflected and the other of the light in the ninth wavelength band and the light in the tenth wavelength band is transmitted.

27. The optical device according to Claim 26,
wherein at least a part of the ninth and tenth wavelength bands is a wavelength band overlapping a part of the seventh and eighth wavelength bands.

28. The optical device according to any one of Claims 19 to 27,
wherein at least one of the first and second separation sections includes a multilayer film having each of the optical characteristics.

29. The optical device according to any one of Claims 19 to 28,
wherein at least one of the first and second separation sections includes at least first and second surfaces, and
the optical characteristic is obtained by a first film, which is provided on the first surface and has a first optical characteristic, and a second film, which is provided on the second surface and has a second optical characteristic different from the first optical characteristic.

30. The optical device according to any one of Claims 19 to 29,
wherein the first optical element includes a first wavelength selection section that makes the light in the third wavelength band and one of the light in the first wavelength band and the light in the second wavelength band selectively incident on the first separation section, and
the second optical element includes a second wavelength selection section that makes the light in the sixth wavelength band and one of the light in the fourth wavelength band and the light in the fifth wavelength band selectively incident on the second separation section.

31. The optical device according to any one of Claims 19 to 30, further comprising:
an objective lens disposed on an optical path along which the light in the first to sixth wavelength bands can be incident.

32. A measurement device, comprising:
the optical device according to any one of Claims 19 to 31;
a light source unit that emits light to illuminate an irradiation object through the optical device; and
a sensor that receives light transmitted through the irradiation object.

33. The measurement device according to Claim 32, further comprising:
a correction unit that corrects an error of a light receiving result of the sensor occurring due to switching between the first and second optical elements.

34. The measurement device according to any one of Claims 31 to 33,
wherein the light source unit can emit excitation light for generating fluorescence from the irradiation object and illumination light for observing the irradiation object.

35. The measurement device according to any one of Claims 31 to 34, further comprising:
a detection unit that detects information regarding a position of the irradiation object through the optical element using detection light in an eleventh wavelength band different from the first to sixth wavelength bands.

36. The measurement device according to any one of Claims 31 to 34, further comprising:
a detection unit that detects information regarding a position of the irradiation object through the optical element using detection light in the same wavelength band as at least one of the third to sixth wavelength bands.

37. An optical device, comprising:
first to third optical elements that can separate incident light according to a wavelength,
wherein the first optical element includes a first separation section having an optical characteristic in which light in a first wavelength band is reflected, light in a second wavelength band is transmitted, and light in a third wavelength band is partially transmitted and partially reflected,
the second optical element includes a second separation section having an optical characteristic in which light in a fourth wavelength band is reflected, light in a fifth wavelength band is transmitted, and the light in the third wavelength band or light in a sixth wavelength band is partially transmitted and partially reflected, and
the third optical element includes a third separation section having an optical characteristic in which at least a part of the light in the first wavelength band and at least a part of the light in the second wavelength band are reflected and at least a part of the light in the fourth wavelength band and at least a part of the light in the fifth wavelength band are transmitted.

38. The optical device according to Claim 37,
wherein the third separation section has an optical characteristic in which at least a part of the light in the third wavelength band or the light in the sixth wavelength band is reflected.

39. The optical device according to Claim 37 or 38,
wherein the third separation section has an optical characteristic in which incident light in the first to sixth wavelength bands is partially transmitted and partially reflected.

40. The optical device according to any one of Claims 37 to 39, further comprising:
an objective lens disposed on an optical path along which the light in the first to sixth wavelength bands can be incident,
wherein the third optical element is disposed on an optical path between the first optical element and the objective lens and an optical path between the second optical element and the objective lens.

41. The optical device according to any one of Claims 37 to 40,
wherein the third optical element makes any one of incident light in the first wavelength band and incident light in the second wavelength band incident on the first separation section and makes any one of incident light in the fourth wavelength band and incident light in the fifth wavelength band incident on the second separation section.

42. The optical device according to any one of Claims 37 to 41,
wherein at least one of the light in the third wavelength band and the light in the sixth wavelength band is light having the same wavelength as any one of the light in the first wavelength band, the light in the second wavelength band, the light in the fourth wavelength band, and the light in the fifth wavelength band.

43. The optical device according to any one of Claims 37 to 42,
wherein the light in the third wavelength band and the light in the sixth wavelength band are light beams having the same wavelength.

44. The optical device according to any one of Claims 37 to 43,
wherein the first and second wavelength bands are continuous wavelength bands, and
the fourth and fifth wavelength bands are continuous wavelength bands.

45. The optical device according to Claim 44,
wherein one of the first and second wavelength bands is a wavelength band of excitation light and the other wavelength band is a wavelength band of fluorescence, and
one of the fourth and fifth wavelength bands is a wavelength band of excitation light and the other wavelength band is a wavelength band of fluorescence.

46. The optical device according to any one of Claims 37 to 45,
wherein the first separation section has an optical characteristic in which one of incident light in a seventh wavelength band and incident light in an eighth wavelength band is reflected and the other of the incident light in the seventh wavelength band and the incident light in the eighth wavelength band is transmitted.

47. The optical device according to Claim 46,
wherein one of the seventh and eighth wavelength bands is a wavelength band of excitation light and the other wavelength band is a wavelength band of fluorescence.

48. The optical device according to Claim 46 or 47,
wherein at least one of the fourth and fifth wavelength bands is a wavelength band overlapping a part of the first and second wavelength bands or a wavelength band overlapping a part of the seventh and eighth wavelength bands.

49. The optical device according to Claim 46 or 47,
wherein the fourth or fifth wavelength band is a wavelength band between the first or second wavelength band and the seventh or eighth wavelength band.

50. The optical device according to any one of Claims 46 to 49,
wherein the second separation section has an optical characteristic in which one of incident light in a ninth wavelength band and incident light in a tenth wavelength band is reflected and the other of the incident light in the ninth wavelength band and the incident light in the tenth wavelength band is transmitted.

51. The optical device according to Claim 50,
wherein at least a part of the ninth and tenth wavelength bands is a wavelength band overlapping a part of the seventh and eighth wavelength bands.

52. The optical device according to any one of Claims 37 to 51,
wherein at least one of the first to third separation sections includes a multilayer film having each of the optical characteristics.

53. An optical device, comprising:
a first optical system including a first optical element, which has an optical characteristic in which light in a first wavelength band is reflected, light in a second wavelength band is transmitted, and light in a third wavelength band is partially transmitted and partially reflected, and an objective lens on which the light in the first to third wavelength bands is incident;
a second optical system including a second optical element, which has an optical characteristic in which light in a fourth wavelength band is reflected, light in a fifth wavelength band is transmitted, and the light in the third wavelength band or light in a sixth wavelength band is partially transmitted and partially reflected, and the objective lens on which the light in the fourth and fifth wavelength bands is incident and on which the light in the third or sixth wavelength band is incident; and
a third optical element that is disposed on an optical path along which the light in the first to sixth wavelength bands can be incident and that has an optical characteristic in which at least a part of the light in the first wavelength band and at least a part of the light in the second wavelength band are reflected and at least a part of the light in the fourth wavelength band and at least a part of the light in the fifth wavelength band are transmitted.

54. The optical device according to Claim 53,
wherein the third optical element is disposed on an optical path between the first optical element and the objective lens and an optical path between the second optical element and the objective lens.

55. A measurement device, comprising:
the optical device according to any one of Claims 37 to 54;
a light source unit that emits light to illuminate an irradiation object through the optical device; and
a sensor that receives light transmitted through the irradiation object.

56. The measurement device according to Claim 55,
wherein the sensor includes a first sensor that receives light transmitted through the first optical element and a second sensor that receives light transmitted through the second optical element.

57. The measurement device according to Claim 55, further comprising:
a fourth optical element having an optical characteristic in which one of light incident through the first optical element and light incident through the second optical element is transmitted to be incident on the sensor and the other of the light incident through the first optical element and the light incident through the second optical element is reflected to be incident on the sensor.

58. The measurement device according to any one of Claims 55 to 57, further comprising:
a correction unit that corrects a light receiving result of the sensor on the basis of the light in the third wavelength band and the light in the sixth wavelength band.

59. The measurement device according to any one of Claims 55 to 58, further comprising:
a detection unit that detects information regarding a position of the irradiation object through the optical element using detection light in the same wavelength band as at least one of the third to sixth wavelength bands.

60. An optical element, comprising:
a first multilayer film that reflects light in a first wavelength band and transmits light in a second wavelength band different from the first wavelength band; and
a second multilayer film that partially transmits and partially reflects light in a third wavelength band,
wherein the first and second multilayer films are formed in a layer structure.

61. The optical element according to Claim 60, further comprising:
a first surface; and
a second surface different from the first surface,
wherein the first multilayer film is formed on the first surface, and the second multilayer film is formed on the second surface.

62. The optical element according to Claim 60 or 61,
wherein the second multilayer film has a fourth wavelength band in which the light in the first wavelength band is reflected or transmitted and the light in the second wavelength band is transmitted.

63. The optical element according to Claim 62,
wherein the first or second wavelength band is a wavelength band of fluorescence,
the second multilayer film has a fifth wavelength band in which the third and fourth wavelength bands are continuous, and
a wavelength, which corresponds to a transmittance between a transmittance in the third wavelength band and a transmittance in the fourth wavelength band, in the fifth wavelength band is a different wavelength from the wavelength band of the fluorescence.

64. The optical element according to any one of Claims 60 to 63,
wherein at least a part of the third wavelength band of the second multilayer film includes a different wavelength band from the first and second wavelength bands of the first multilayer film.

65. The optical element according to any one of Claims 60 to 64,
wherein the first multilayer film transmits the light in the third wavelength band.

66. The optical element according to any one of Claims 60 to 65,
wherein a reflectance of the light in the third wavelength band is lower than a reflectance of the light in the first wavelength band, and a transmittance of the light in the third wavelength band is lower than a transmittance of the light in the second wavelength band.

67. The optical element according to any one of Claims 60 to 66,
wherein, in the third wavelength band, a transmittance of illumination light for observing an irradiation object is 30% to 70%.

68. An optical element, comprising:
a first multilayer film having a first spectral characteristic in which first excitation light irradiated to an irradiation object is reflected and first fluorescence generated by irradiation of the first excitation light is transmitted or the first excitation light is transmitted and the first fluorescence is reflected; and
a second multilayer film that partially transmits and partially reflects illumination light for observing the irradiation object.

69. The optical element according to Claim 68,
wherein the first multilayer film has a second spectral characteristic in which second excitation light irradiated to the irradiation object is reflected and second fluorescence generated by irradiation of the second excitation light is transmitted or the second excitation light is transmitted and the second fluorescence is reflected.

70. The optical element according to Claim 68 or 69,
wherein the second multilayer film transmits the first excitation light and the first fluorescence.

71. An optical element, comprising:
a substrate having a first surface and a second surface different from the first surface;
a first multilayer film that is formed on the first surface and that has a first transmission wavelength band in which first incident light is transmitted, a second transmission wavelength band in which second incident light is transmitted, and a reflection wavelength band in which third incident light is reflected; and
a second multilayer film that is formed on the second surface and that separates the first incident light into transmitted light and reflected light.

72. The optical element according to Claim 71,
wherein the second multilayer film has a wavelength band in which the second incident light and the third incident light are transmitted.

73. The optical element according to Claim 71 or 72,
wherein the first multilayer film has the plurality of transmission wavelength bands.

74. An optical device comprising the optical element according to any one of Claims 60 to 73.

75. An optical device, comprising:
an optical path along which illumination light for observing an irradiation object, excitation light irradiated to the irradiation object, and fluorescence generated by irradiation of the excitation light pass; and
an optical element that is disposed on the optical path and that includes a first multilayer film, which reflects the excitation light and transmits the fluorescence or transmits the excitation light and reflects the fluorescence, and a second multilayer film that separates the illumination light into transmitted light and reflected light.

76. The optical device according to Claim 75,
wherein, in the optical element, the first and second multilayer films are formed in a layer structure.

77. A measurement device, comprising:
the optical device according to any one of Claims 74 to 76;
a light source device; and
a light receiving sensor.

78. A screening apparatus, comprising:
a bioassay device; and
the measurement device according to Claim 77.
